# EUROPEAN PATENT SPECIFICATION

(11) **EP 3 041 311 B1**
(45) Date of publication and mention of the grant of the patent: **04.10.2023**
(21) Application number: 14840974.1
(22) Date of filing: 25.08.2014
(51) Int. Cl.: H04W 76/12, H04L 45/64, H04L 45/42, H04W 92/14, H04L 45/50

(54) **COMMUNICATION APPARATUS AND METHOD IN COMMUNICATION SYSTEM, AND COMMUNICATION PATH CONTROL APPARATUS AND METHOD**
KOMMUNIKATIONSVORRICHTUNG UND -VERFAHREN IN EINEM KOMMUNIKATIONSSYSTEM SOWIE KOMMUNIKATIONSPFADSTEUERUNGSVORRICHTUNG UND -VERFAHREN
APPAREIL ET PROCÉDÉ DE COMMUNICATION DANS UN SYSTÈME DE COMMUNICATION, ET APPAREIL ET PROCÉDÉ DE COMMANDE DE VOIE DE COMMUNICATION

(30) Priority: 26.08.2013 US 201361870119 P; 03.12.2013 JP 2013250056
(43) Date of publication of application: 06.07.2016
(73) Proprietor: NEC Corporation, Tokyo 108-8001 (JP)
(72) Inventor: AKIYOSHI, Ippei, Tokyo 108-8001 (JP)
(74) Representative: MacDougall, Alan John Shaw
(86) International application number: PCT/JP2014/004362
(87) International publication number: WO 2015/029416

(56) References cited:
- EP-A2- 0 883 265
- EP-A2- 0 940 951
- EP-A2- 1 024 610
- EP-A2- 1 589 705
- WO-A1-2006/038592
- WO-A1-2013/121841
- US-A1- 2005 100 010
- SHIGEAKI MAEDA: 'OpenFlow ver1.1 Oyobi verl.2 no Tsuika Kino to Katsuyorei' THINK IT 23 February 2012, XP055165758 Retrieved from the Internet: <URL:http://thinkit.co. jp/story/ 2012/02/23 /3388>

## Description

### [Technical Field]

The present invention relates to a communication system which performs communication between communication apparatuses via a communication path and, more particularly, to control of communication path.

### [Background Art]

In a mobile communication system, a communication terminal such as a mobile telephone communicates with a base station so as to access the Internet via a core network. The communication terminal performs communication over a communication path (e.g., a bearer) established with an apparatus (e.g., a gateway) installed in the core network.

When a communication path is established, a core-network node (e.g., a gateway) for relaying the communication path is assigned to this communication path. A communication path establishment procedure is described in, for example, Subchapter 5.3.2 of NPL 1.

US2005/100010 discloses a last router in the route of a packet that determines when a packet is at the last hop prior to reaching its destination, based on information conveyed in the routing table that the destination is a directly-connected host. The router can then convey that information to the host by setting the TTL to zero in the packet being forwarded to its final destination. The host, being so informed that the packet is destined for its IP address, can thereby eliminate the IP address table search for the destination IP address of the incoming packet against the list of its allocated IP addresses to determine if the packet is destined for that host.

EP0940951 discloses transmission equipment for connecting a plurality of LANs together. In a routing protocol control section of the transmission equipment, when a 'RIP frame' related to a multipath at the same cost is received from each of networks, control is provided, by a RIP deletion table control section, for deletion of any entry or for frame transmission following the entry (entries) according to whether destination information as well as the cost stored in the RIP deletion table are identified to those in the RIP frame or not for each entry in the RIP frame.

### [Citation List]

### [Non-patent Literature]

[NPL 1]
3GPP TS23.401 V12.1.0 "Technical Specification Group Services and System Aspects; General Packet Radio Service (GPRS) enhancement for Evolved Universal Terrestrial Radio Access Network (E-UTRAN) Access", [retrieved on August 26, 2013], the Internet <http://www.3gpp.org/ftp/Specs/html-info/23401.htm>

### [Technical Problem]

As described above, a core-network node such as a gateway is assigned to an established communication path. Accordingly, when switching a communication path route, it is expected that a communication path reestablishment procedure is performed to reassign a core-network node to a new communication path. When the communication path reestablishment procedure is performed, it is expected that communication services are affected in various ways, such as, for example, interruption of communication that has been performed over a communication path before switching.

### [Summary of Invention]

The present invention provides a communication apparatus and a communication method as disclosed in the appended independent claims. Optional, but advantageous features are disclosed in the appended dependent claims.

Also disclosed is a communication apparatus that performs communication over a communication path configured in a network and includes: a first means for identifying the communication path to which a received packet belongs; and a second means for forwarding the received packet to a network node associated with the communication path to which the received packet belongs, among a plurality of network nodes which can terminate the communication path.

Also disclosed is a control apparatus that includes: a communication interface with a communication apparatus which performs communication through a communication path configured in a network; a database which stores information on an association between the communication path and a network node which can terminate the communication path; and a control means for notifying the communication apparatus of an instruction for forwarding a received packet to a network node associated with the communication path to which the received packet belongs among the plurality of network nodes based on the information.

Also disclosed is a communication method for performing communication over a communication path configured in a network and that includes: identifying the communication path to which a received packet belongs; and forwarding the received packet to a network node associated with the communication path to which the received packet belongs, among plurality of network nodes which can terminate the communication path.

Also disclosed is a control method that includes: communicating with a communication apparatus which transmits data through a communication path configured in a network; and notifying the communication apparatus of an instruction for forwarding a received packet to a network node associated with the communication path to which the received packet belongs among the plurality of network nodes, based on a database which stores information on an association between the communication path and a network node which can terminate the communication path.

### [Advantageous Effects of Invention]

According to the present invention, it is possible to suppress effects on communication services caused when switching a communication path, and to provide a technique enabling various communication quality controls.

### [Brief Description of Drawings]

[FIG. 1]

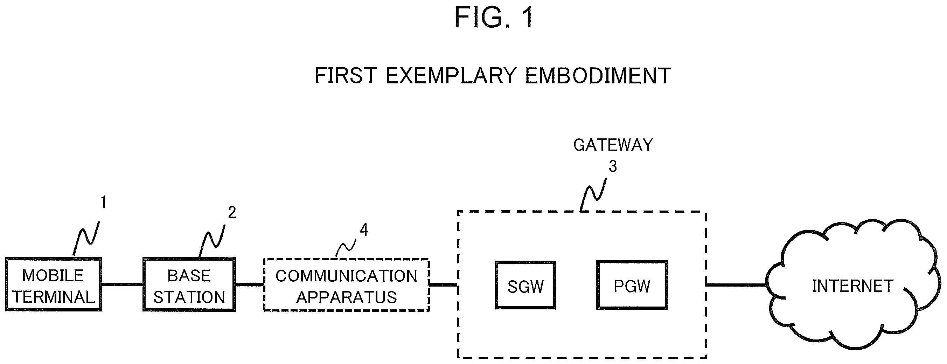

   FIG. 1 is a system architecture diagram showing an example of a communication system to which a first exemplary embodiment of the present invention is applied.
[FIG. 2]

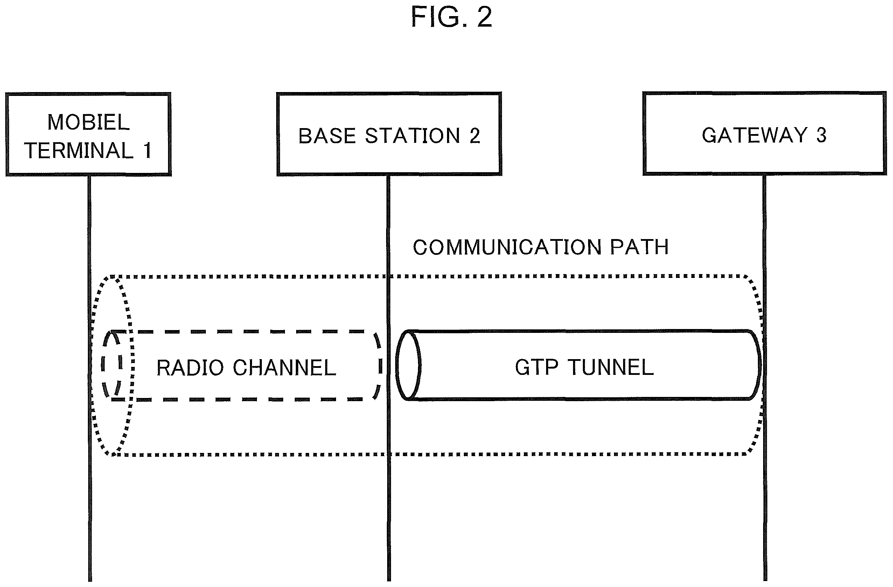

   FIG. 2 is a schematic diagram showing an example of a communication path in the communication system shown in FIG. 1.
[FIG. 3]

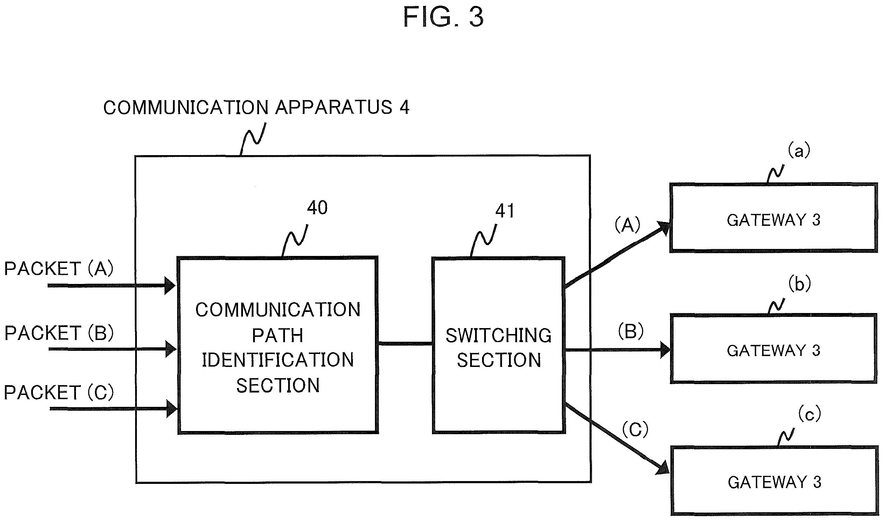

   FIG. 3 is a block diagram showing a first example of the communication system according to the first exemplary embodiment of the present invention.
[FIG. 4]

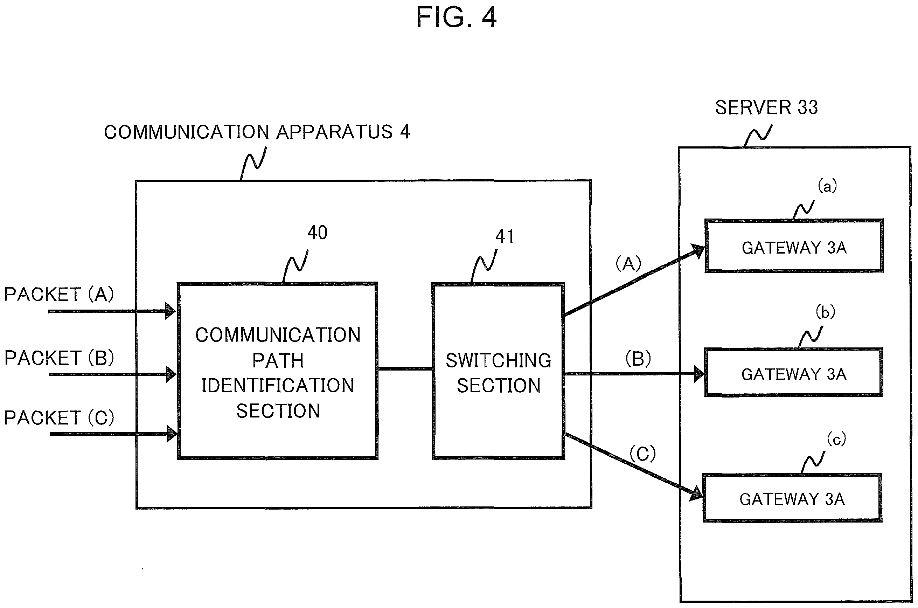

   FIG. 4 is a block diagram showing a second example of the communication system according to the first exemplary embodiment of the present invention.
[FIG. 5]

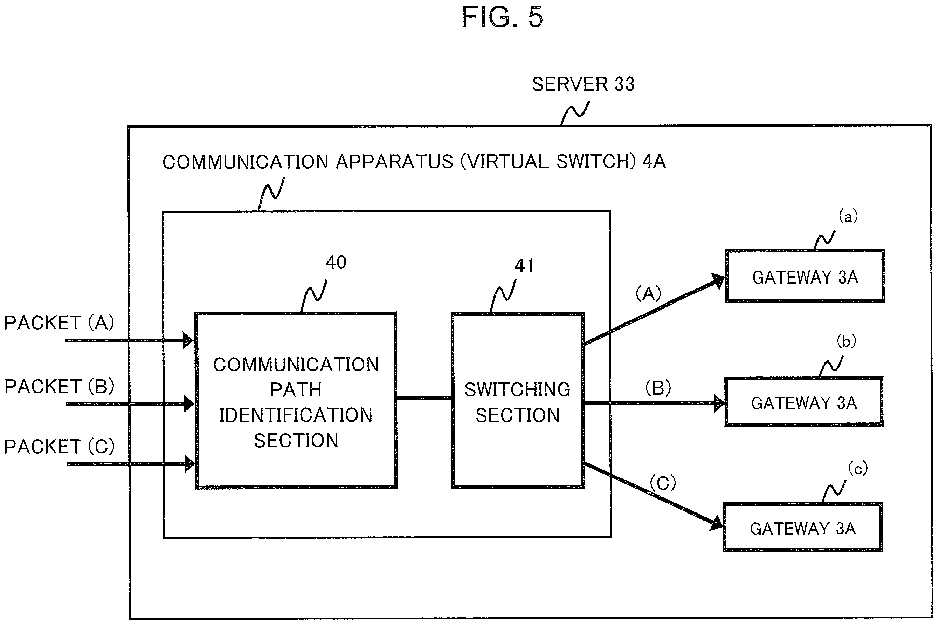

   FIG. 5 is a block diagram showing a third example of the communication system according to the first exemplary embodiment of the present invention.
[FIG. 6]

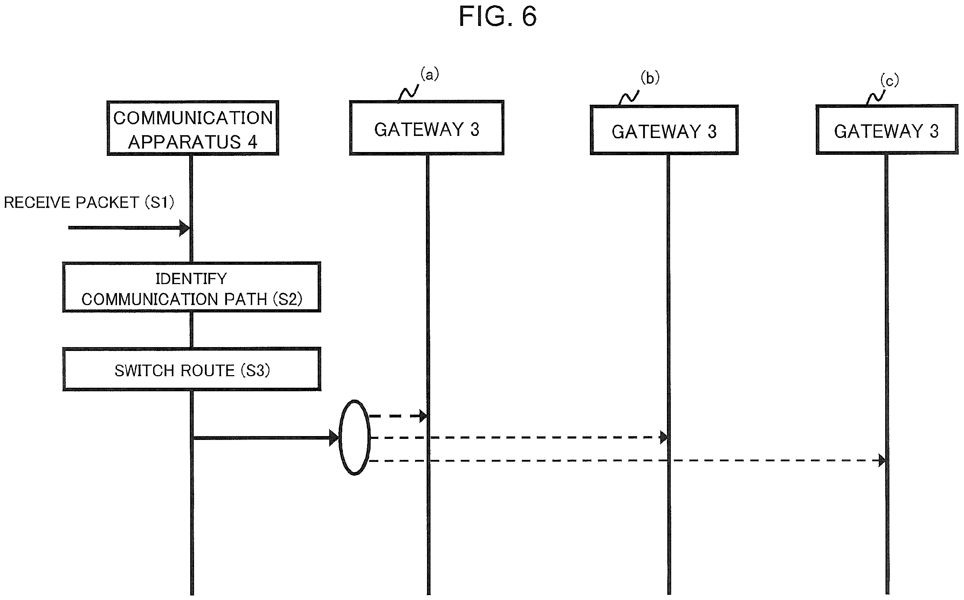

   FIG. 6 is a sequence diagram showing an example of operation of a communication apparatus according to the first exemplary embodiment of the present invention.
[FIG. 7]

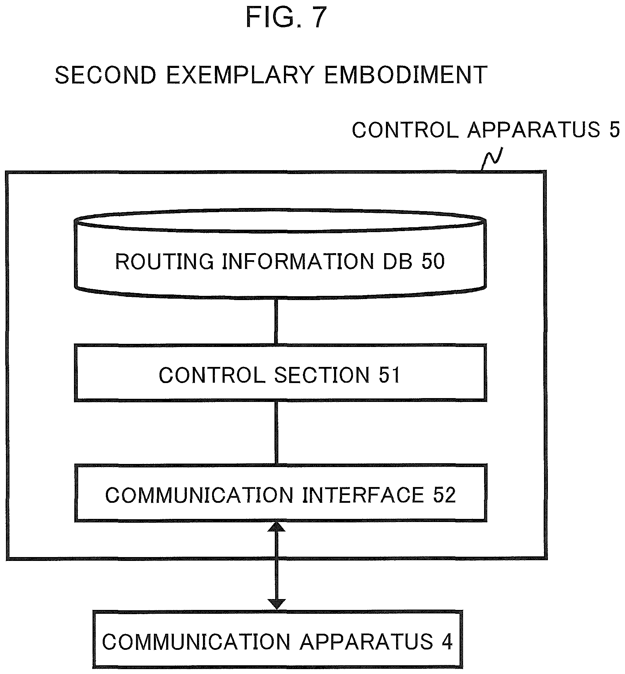

   FIG. 7 is a block diagram showing a configuration of a control apparatus according to a second exemplary embodiment of the present invention.
[FIG. 8]

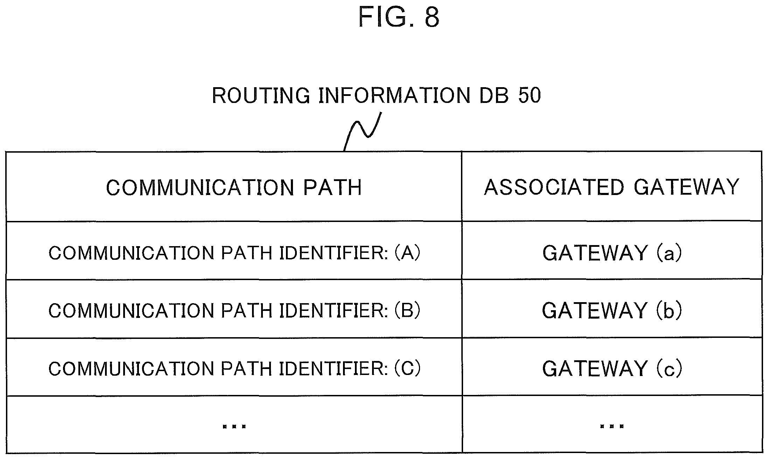

   FIG. 8 is a structural diagram showing an example of a routing information DB at the control apparatus according to the second exemplary embodiment of the present invention.
[FIG. 9]

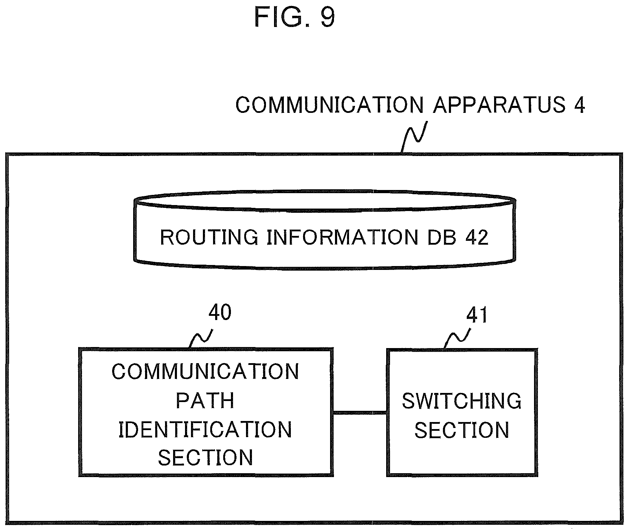

   FIG. 9 is a block diagram showing an example of a communication apparatus according to the second exemplary embodiment of the present invention.
[FIG. 10]

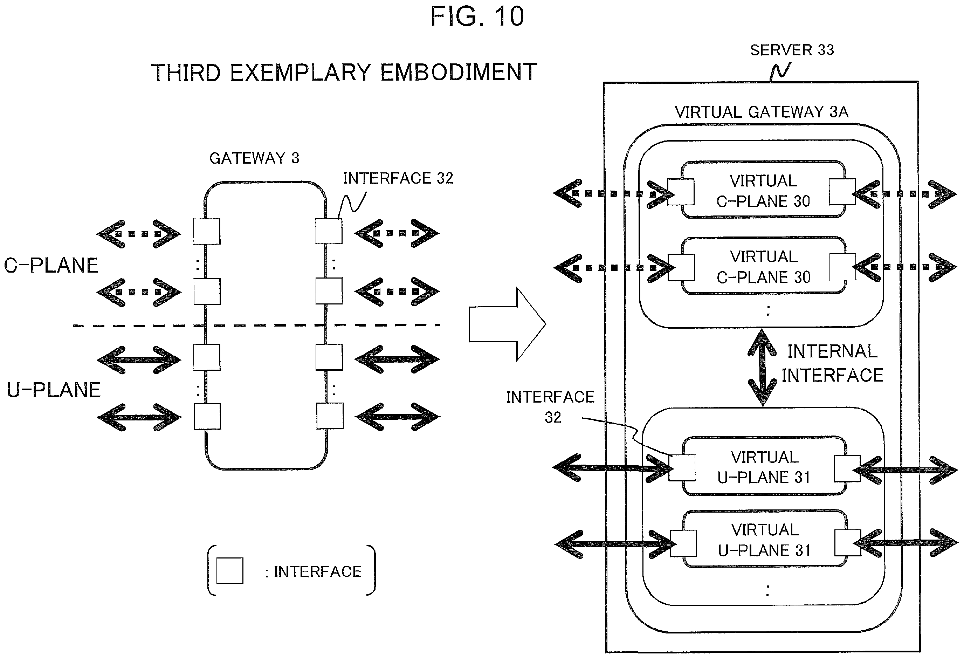

   FIG. 10 is a schematic configuration diagram for describing a functional configuration of a communication apparatus according to a third exemplary embodiment of the present invention.
[FIG. 11]
   FIG. 11 is a system architecture diagram showing a first example of a communication system according to the third exemplary embodiment of the present invention.
[FIG. 12] FIG. 12 is a system architecture diagram showing a second example of the communication system according to the third exemplary embodiment of the present invention.
[FIG. 13]

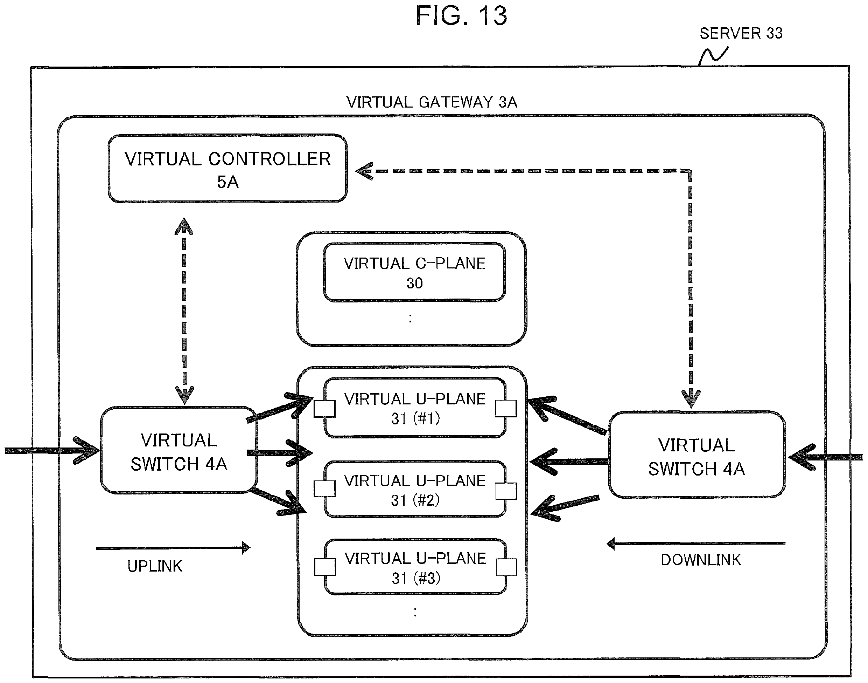

   FIG. 13 is a system architecture diagram showing a third example of the communication system according to the third exemplary embodiment of the present invention.
[FIG. 14]

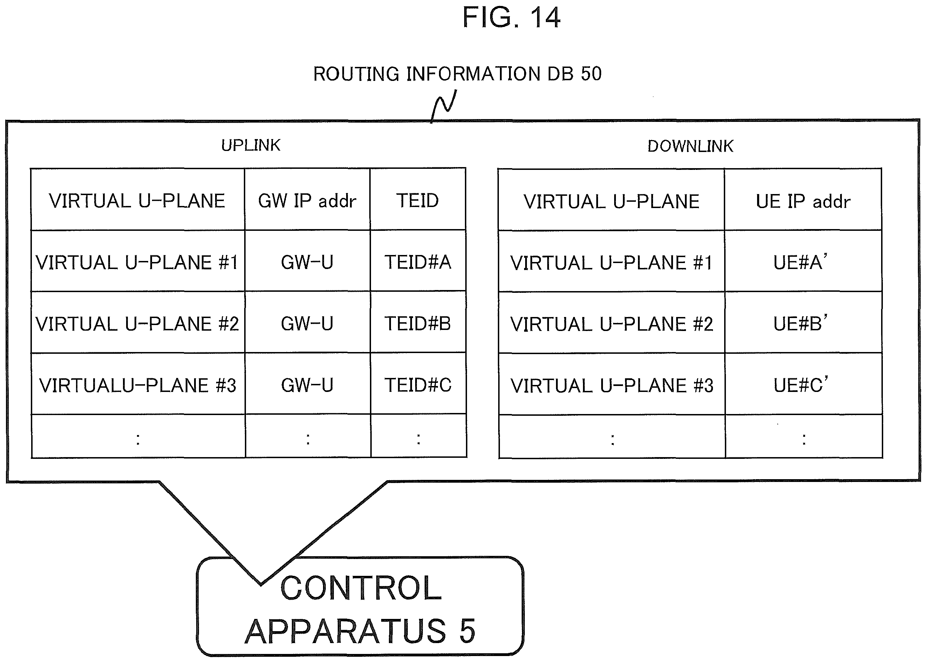

   FIG. 14 is a structural diagram showing a first example of a routing information DB at a control apparatus according to the third exemplary embodiment of the present invention.
[FIG. 15]

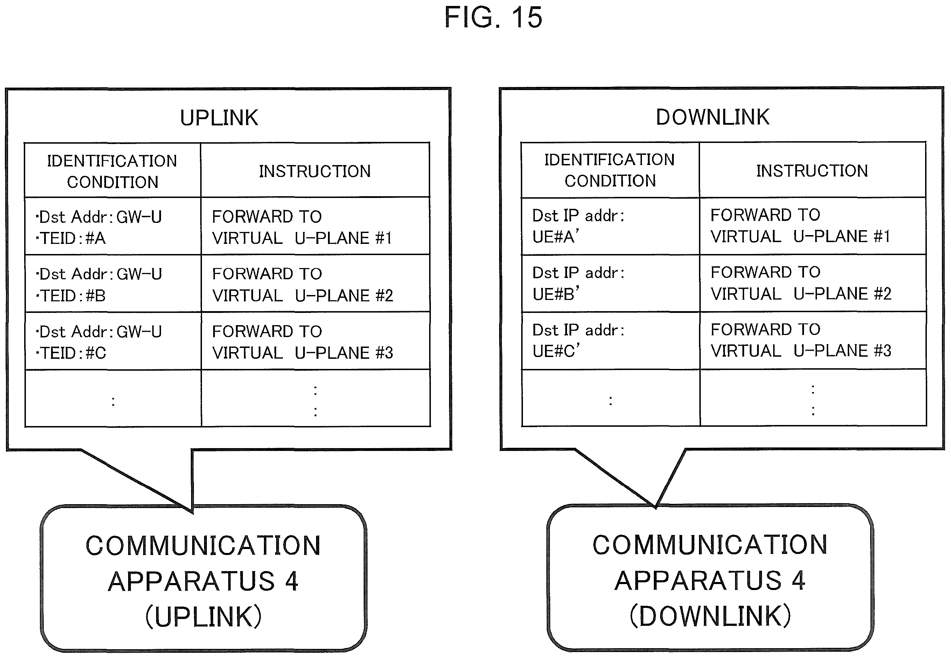

   FIG. 15 is a structural diagram showing a first example of a routing information DB at the communication apparatus according to the third exemplary embodiment of the present invention.
[FIG. 16]

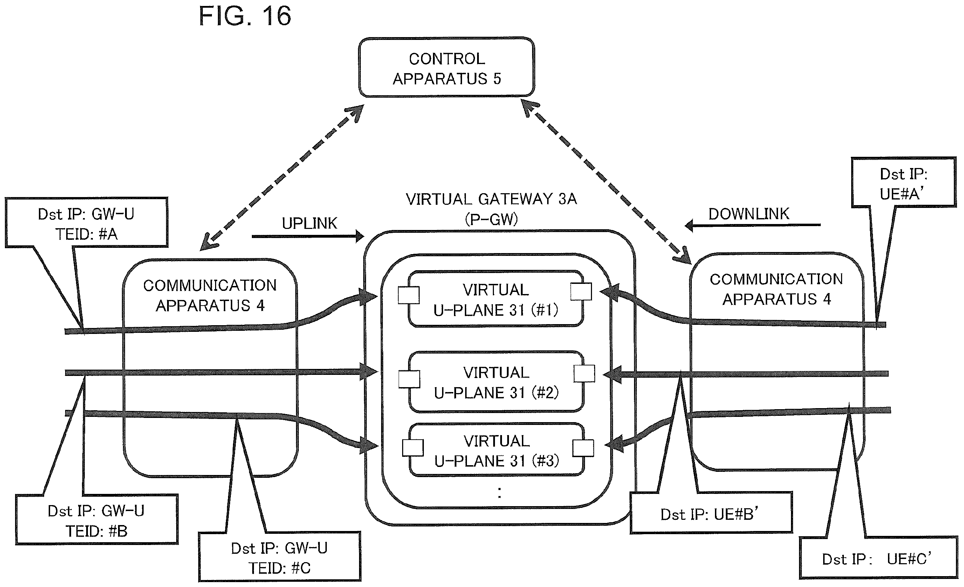

   FIG. 16 is a schematic system architecture diagram for describing a first example of operation of the communication system according to the third exemplary embodiment of the present invention.
[FIG. 17]

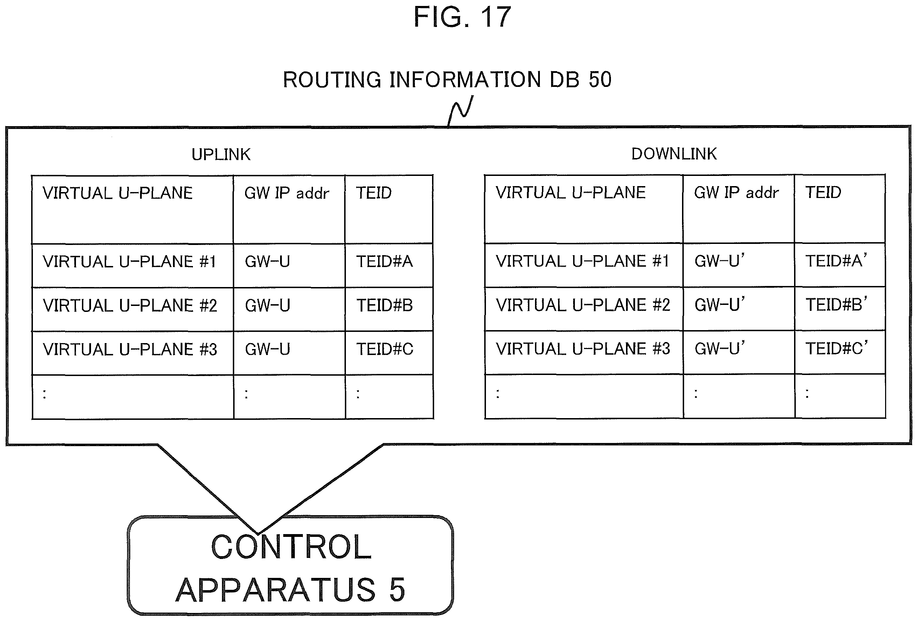

   FIG. 17 is a structural diagram showing a second example of the routing information DB at the control apparatus according to the third exemplary embodiment of the present invention.
[FIG. 18]

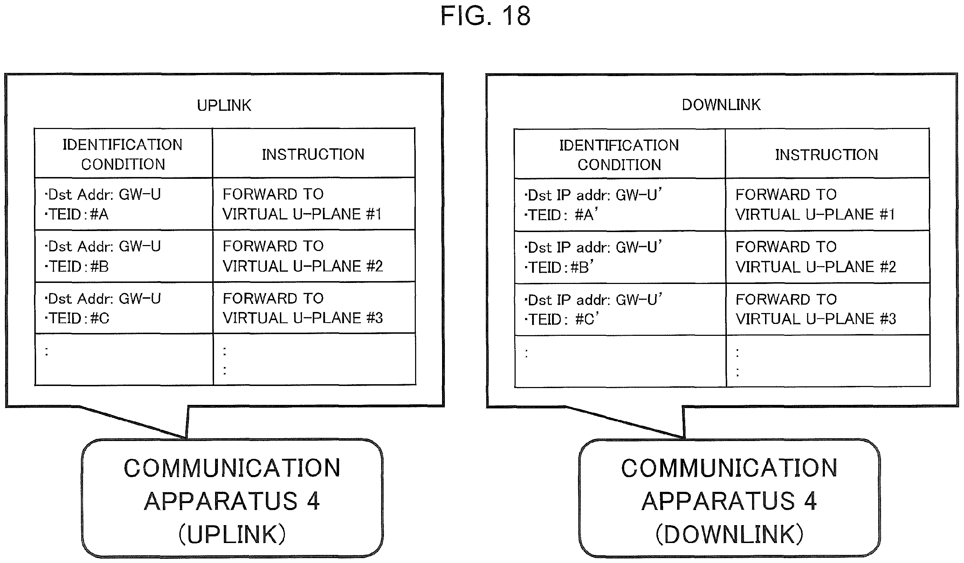

   FIG. 18 is a structural diagram showing a second example of the routing information DB at the communication apparatus according to the third exemplary embodiment of the present invention.
[FIG. 19]

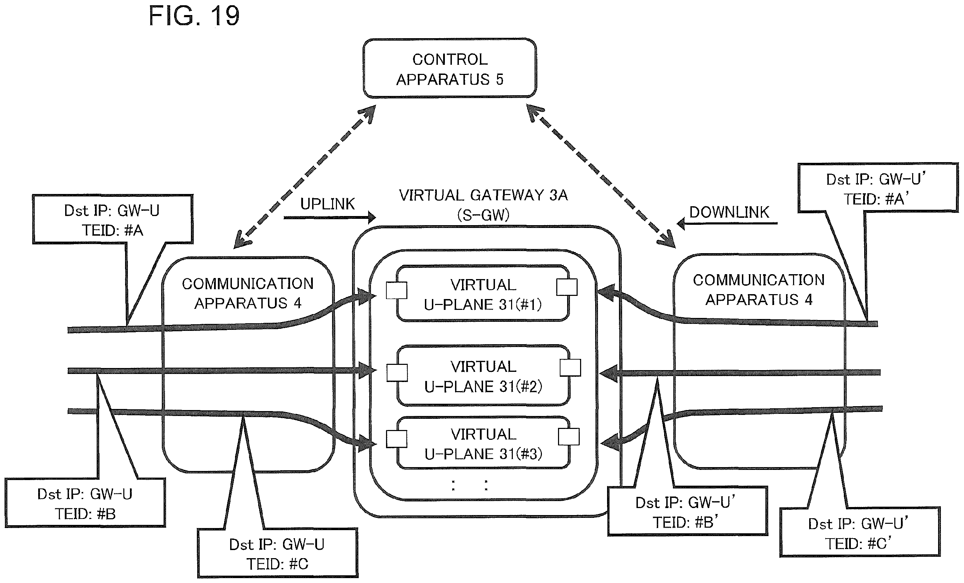

   FIG. 19 is a schematic system architecture diagram for describing a second example of operation of the communication system according to the third exemplary embodiment of the present invention.
[FIG. 20]

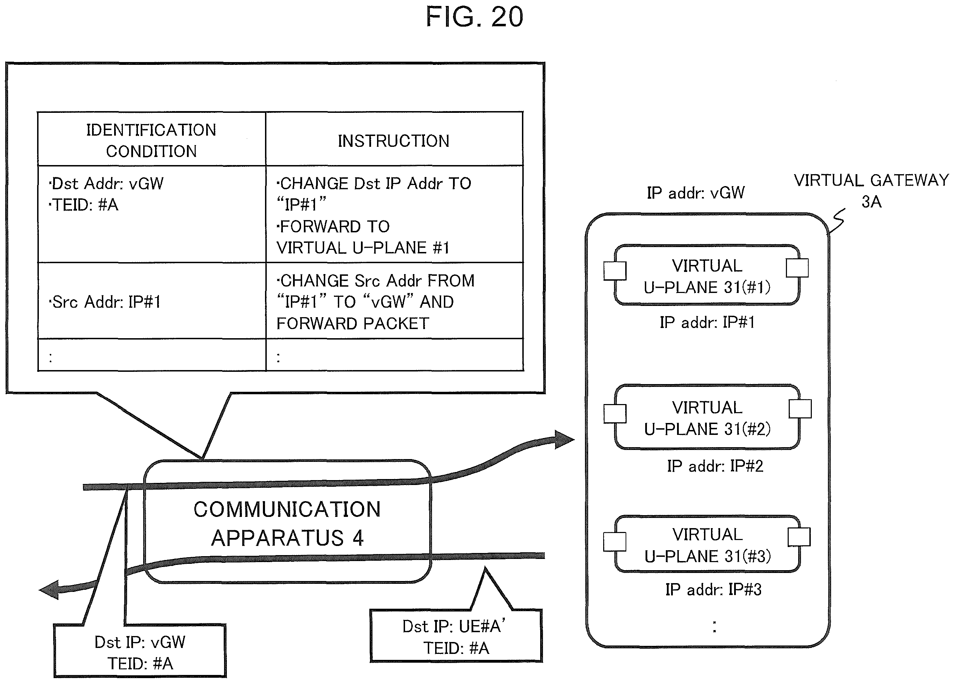

   FIG. 20 is a schematic system architecture diagram for describing a third example of operation of the communication system according to the third exemplary embodiment of the present invention.
[FIG. 21]

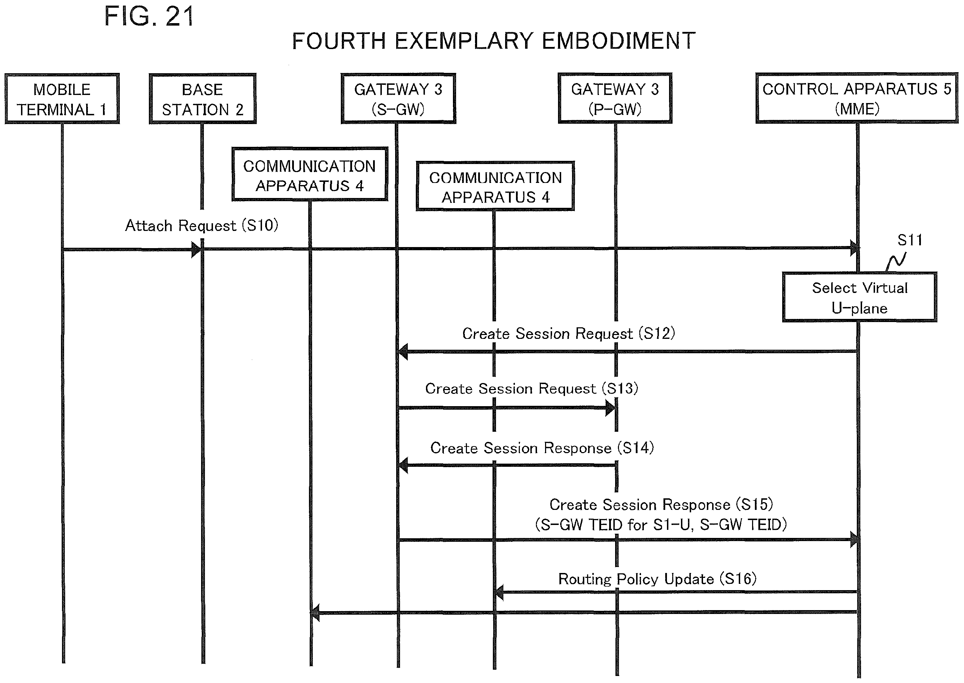

   FIG. 21 is a sequence diagram showing a first example of operation of a communication system according to a fourth exemplary embodiment of the present invention.

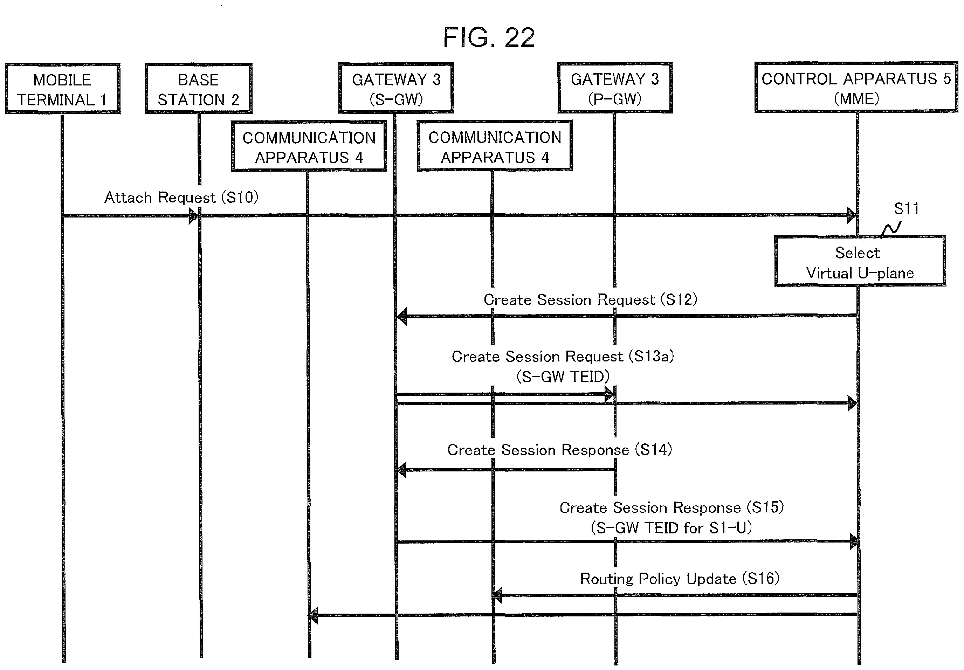

[FIG. 22] FIG. 22 is a sequence diagram showing a second example of operation of the communication system according to the fourth exemplary embodiment of the present invention.
[FIG. 23]

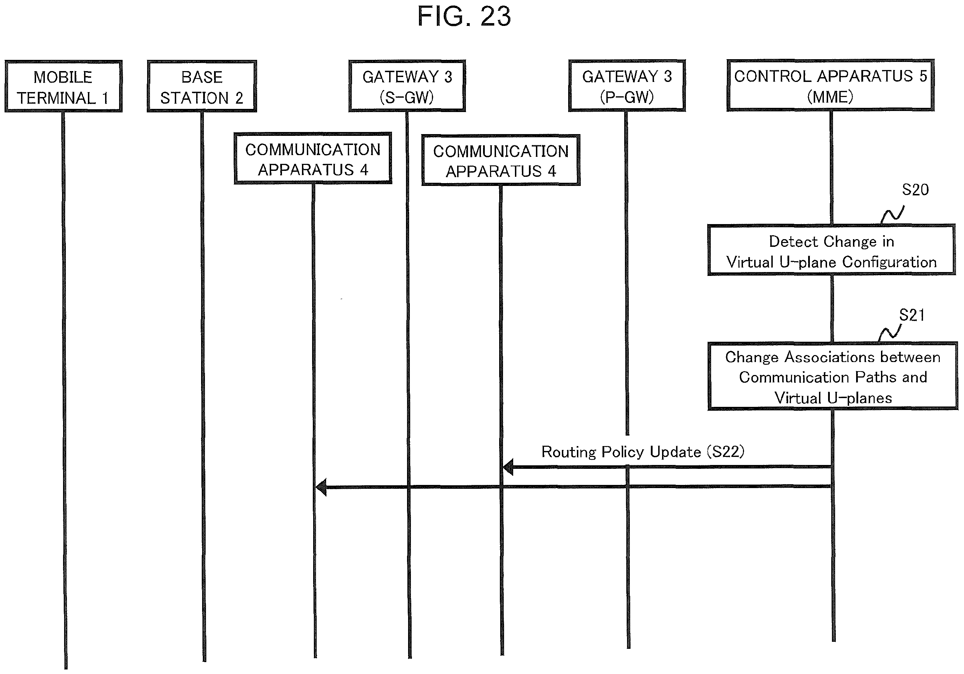

   FIG. 23 is a sequence diagram showing a third example of operation of the communication system according to the fourth exemplary embodiment of the present invention.
[FIG. 24]

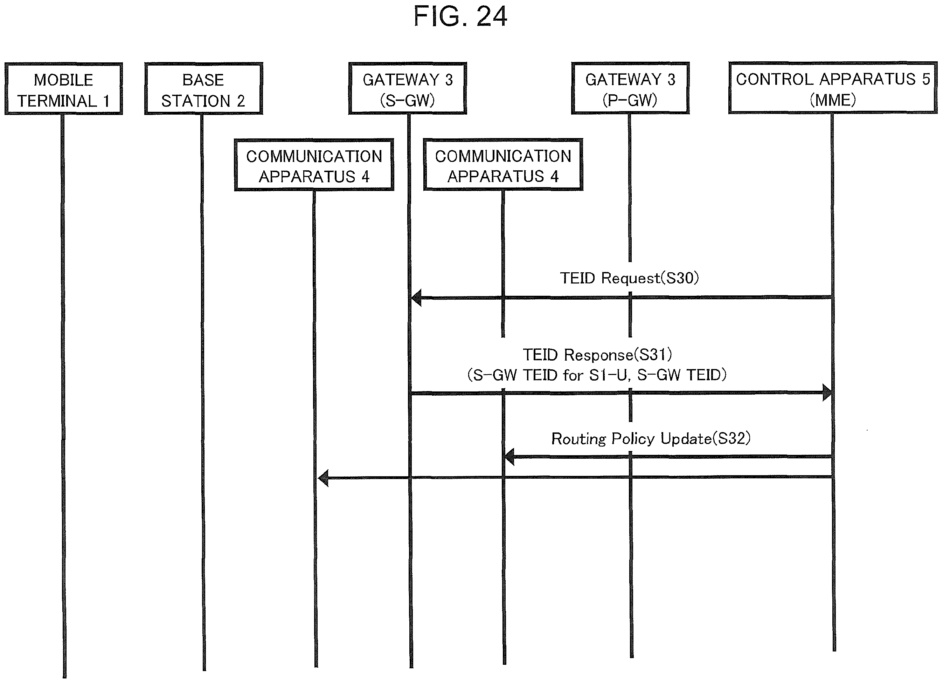

   FIG. 24 is a sequence diagram showing a fourth example of operation of the communication system according to the fourth exemplary embodiment of the present invention.
[FIG. 25]

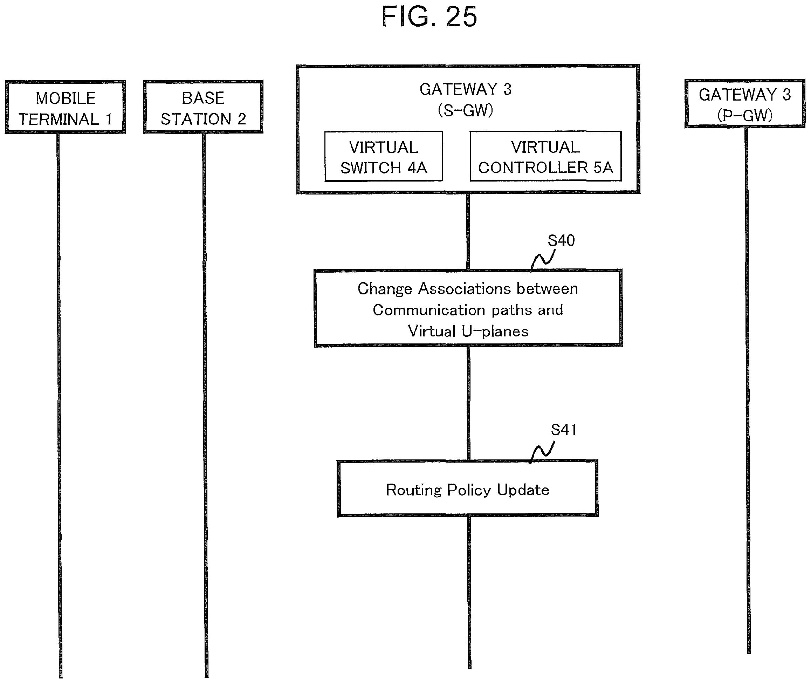

   FIG. 25 is a sequence diagram showing a fifth example of operation of the communication system according to the fourth exemplary embodiment of the present invention.
[FIG. 26]

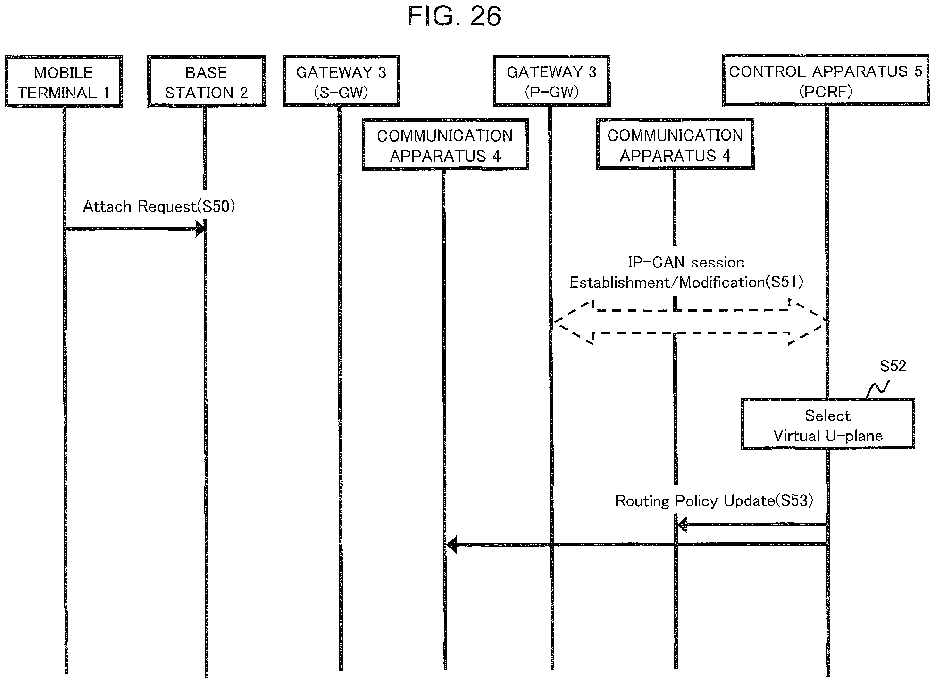

   FIG. 26 is a sequence diagram showing a seventh example of operation of the communication system according to the fourth exemplary embodiment of the present invention.
[FIG. 27]

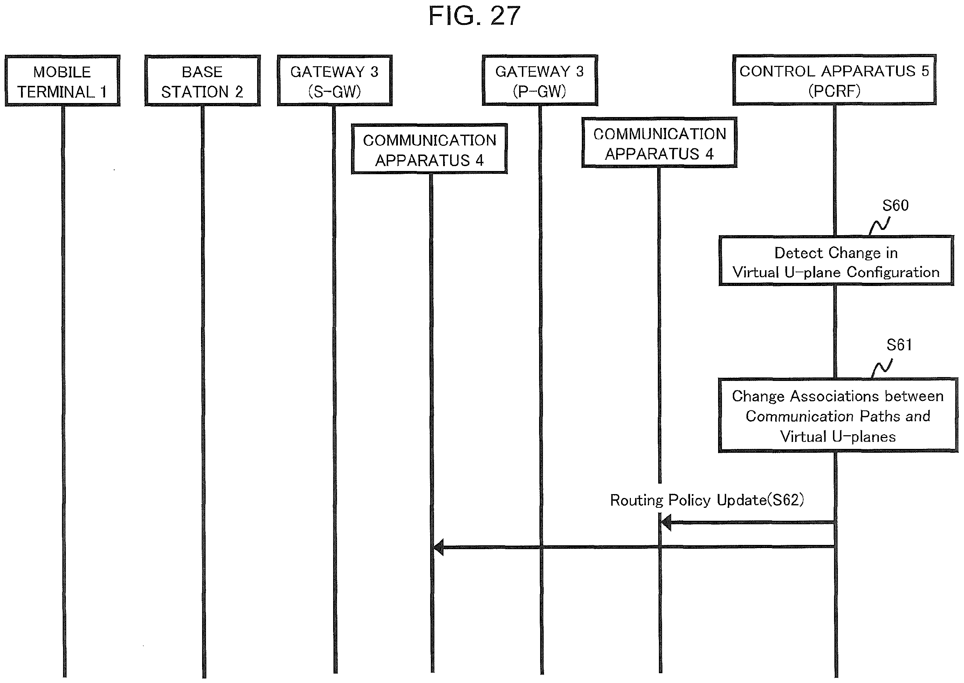

   FIG. 27 is a sequence diagram showing an eighth example of operation of the communication system according to the fourth exemplary embodiment of the present invention.
[FIG. 28]

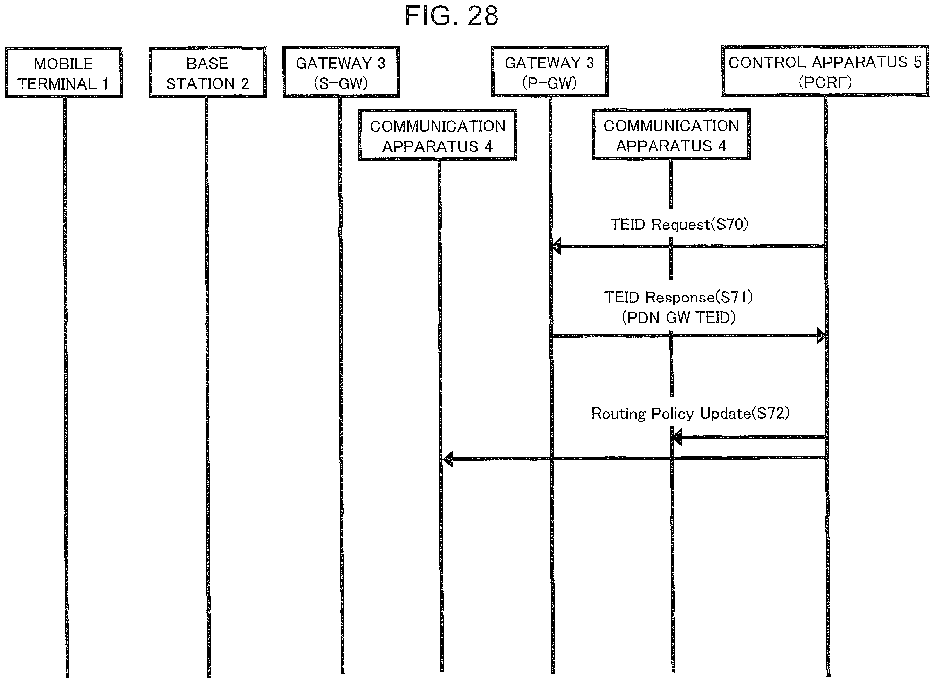

   FIG. 28 is a sequence diagram showing a ninth example of operation of the communication system according to the fourth exemplary embodiment of the present invention.
[FIG. 29]

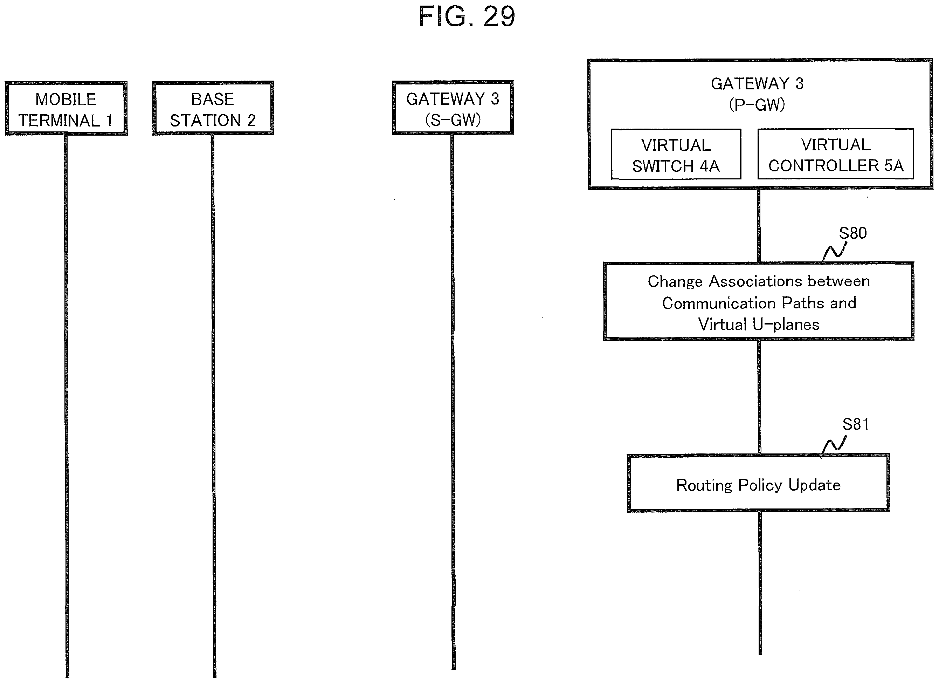

   FIG. 29 is a sequence diagram showing a tenth example of operation of the communication system according to the fourth exemplary embodiment of the present invention.
[FIG. 30]

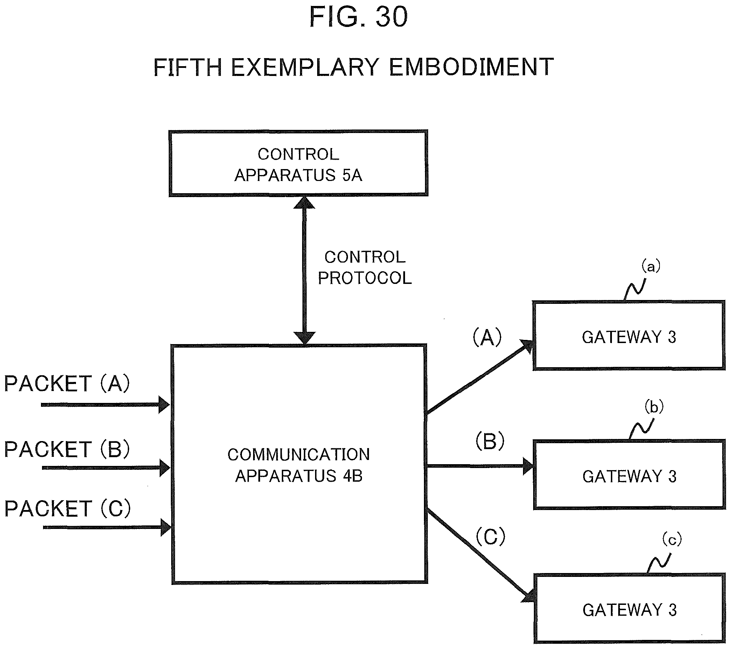

   FIG. 30 is a system architecture diagram showing a first example of a communication system according to a fifth exemplary embodiment of the present invention.
[FIG. 31]

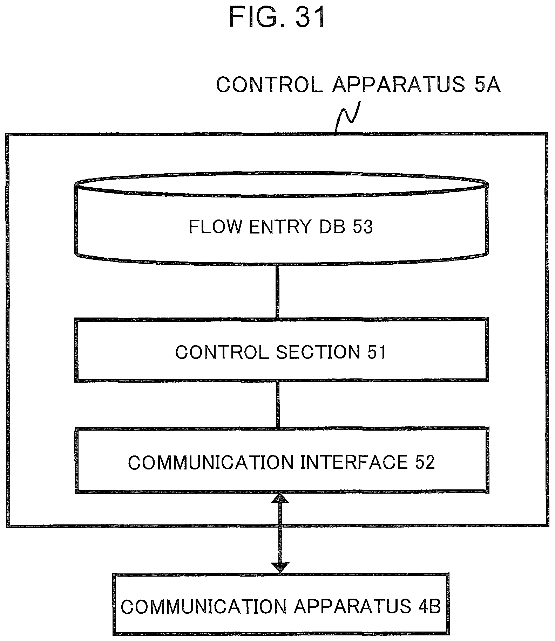

   FIG. 31 is a block diagram showing a configuration of a control apparatus according to the fifth exemplary embodiment of the present invention.
[FIG. 32]

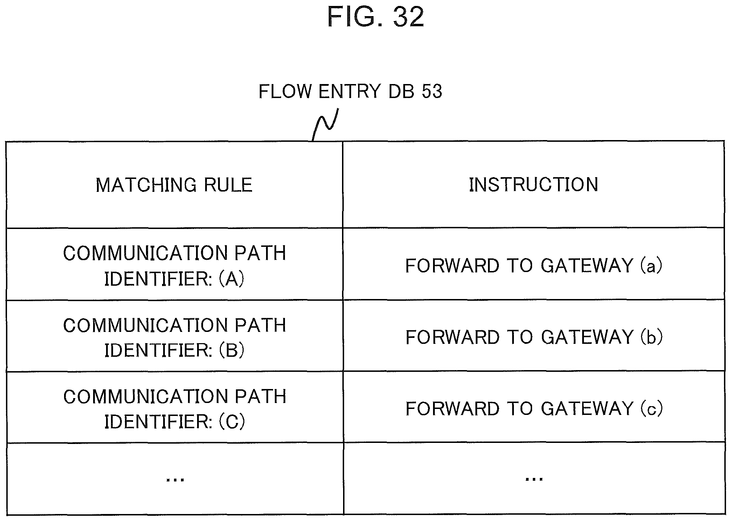

   FIG. 32 is a structural diagram showing an example of a flow entry DB at the control apparatus according to the fifth exemplary embodiment of the present invention.
[FIG. 33]

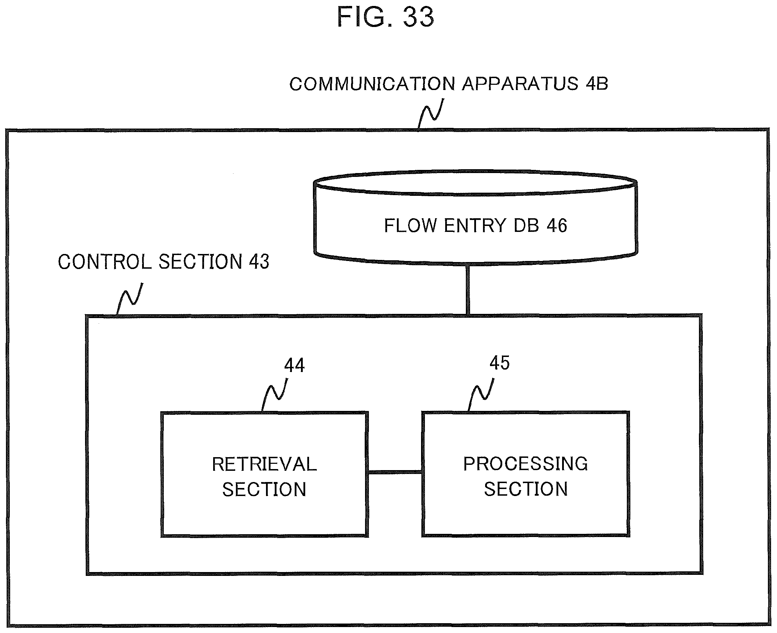

   FIG. 33 is a block diagram showing a configuration of a communication apparatus according to the fifth exemplary embodiment of the present invention.
[FIG. 34]

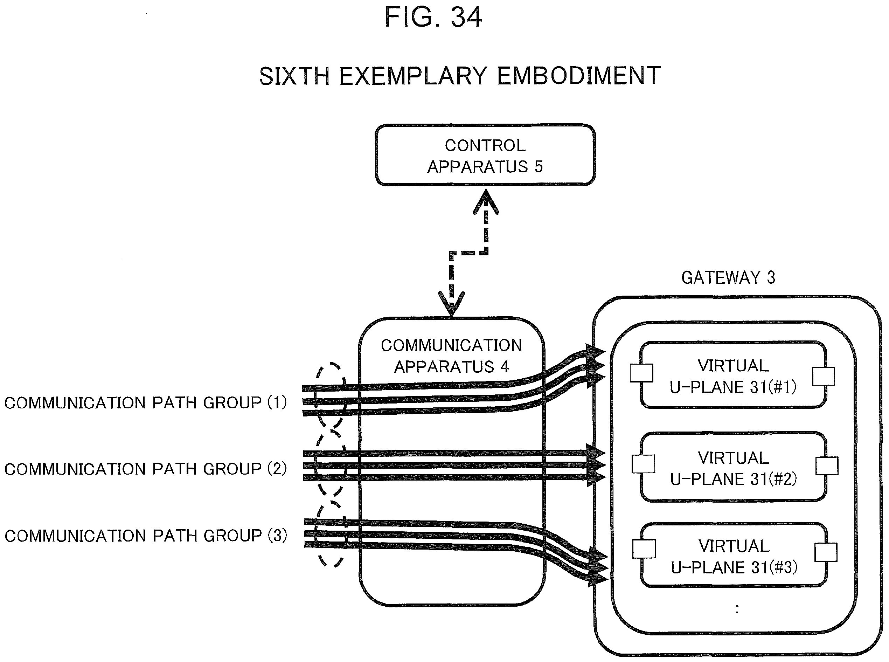

   FIG. 34 is a schematic system architecture diagram for describing operation of a communication system according to a sixth exemplary embodiment of the present invention.
[FIG. 35]

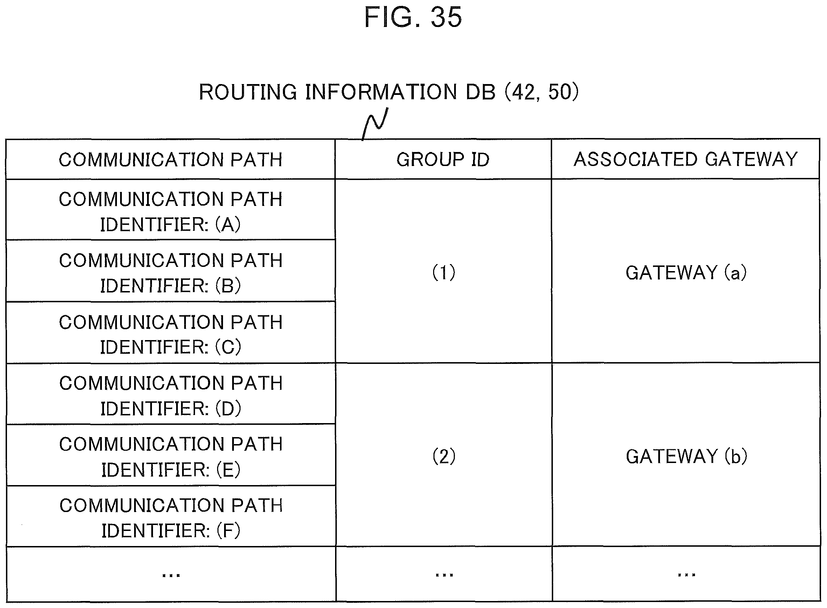

   FIG. 35 is a structural diagram showing a first example of a routing information DB at a control apparatus according to the sixth exemplary embodiment of the present invention.
[FIG. 36]

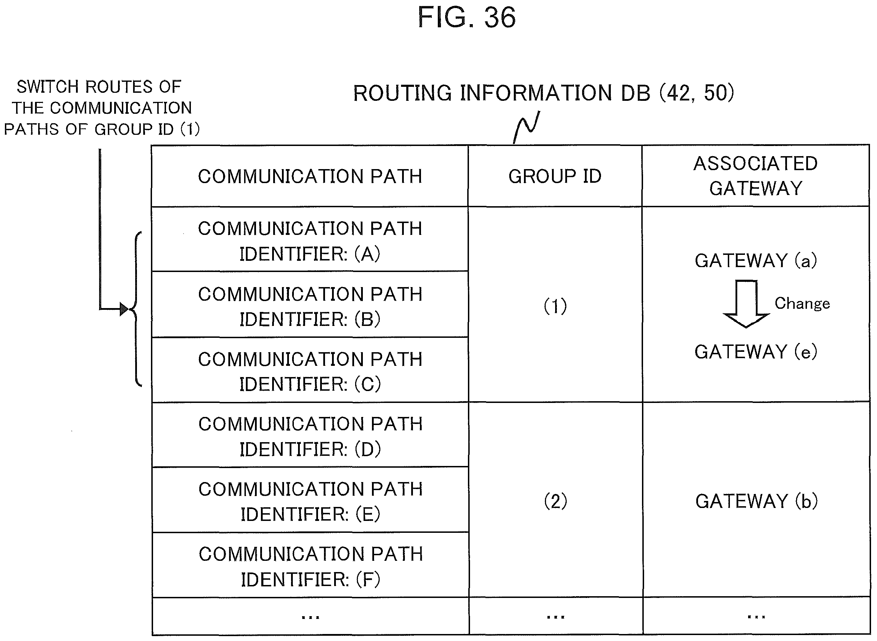

   FIG. 36 is a structural diagram showing a second example of the routing information DB at the control apparatus according to the sixth exemplary embodiment of the present invention.
[FIG. 37]

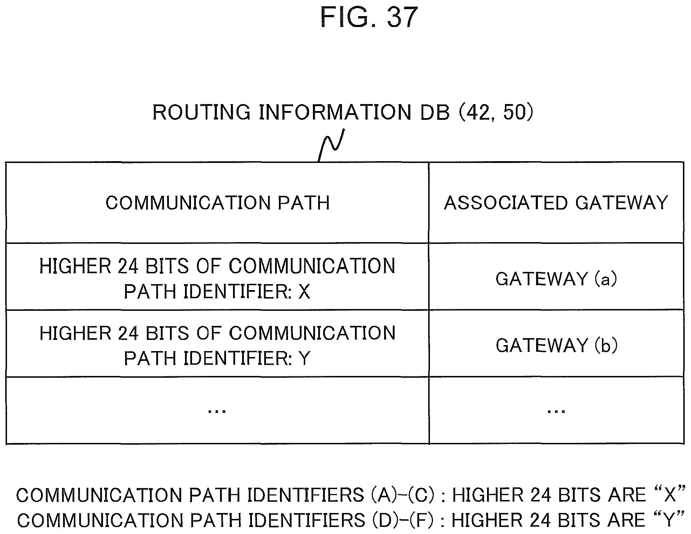

   FIG. 37 is a structural diagram showing a third example of the routing information DB at the control apparatus according to the sixth exemplary embodiment of the present invention.
[FIG. 38]

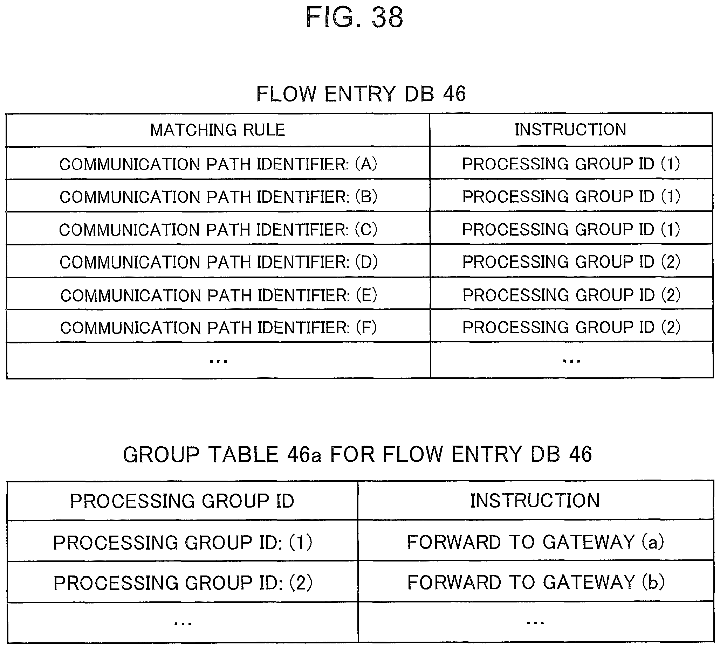

   FIG. 38 is a structural diagram showing a fourth example of the routing information DB at the control apparatus according to the sixth exemplary embodiment of the present invention.
[FIG. 39]

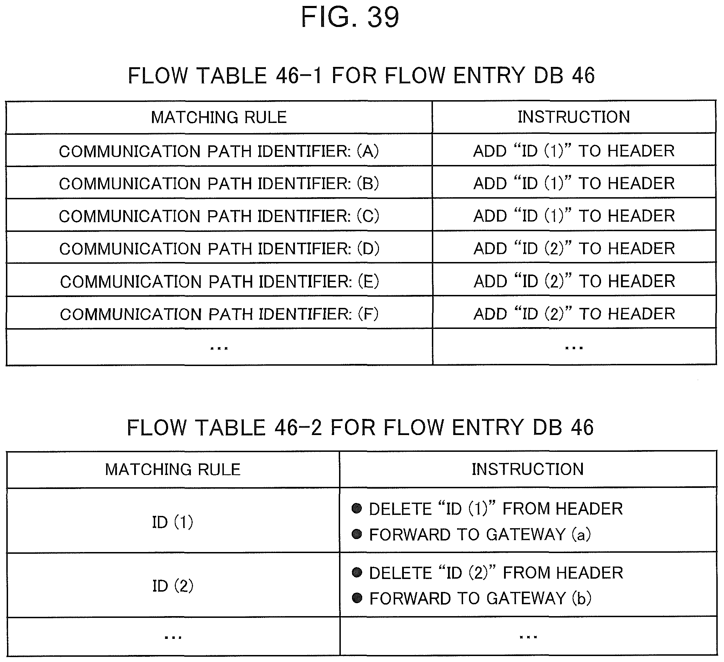

   FIG. 39 is a structural diagram showing a fifth example of the routing information DB at the control apparatus according to the sixth exemplary embodiment of the present invention.
[FIG. 40]

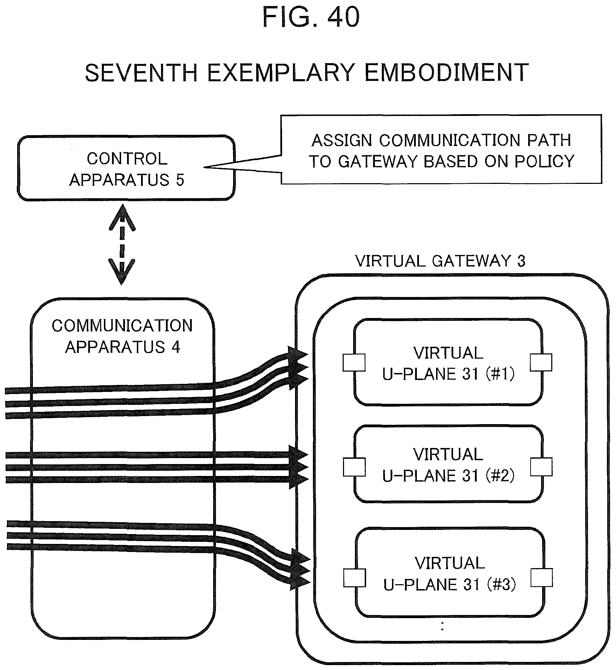

   FIG. 40 is a schematic system architecture diagram for describing a first example of operation of a communication system according to a seventh exemplary embodiment of the present invention.
[FIG. 41]

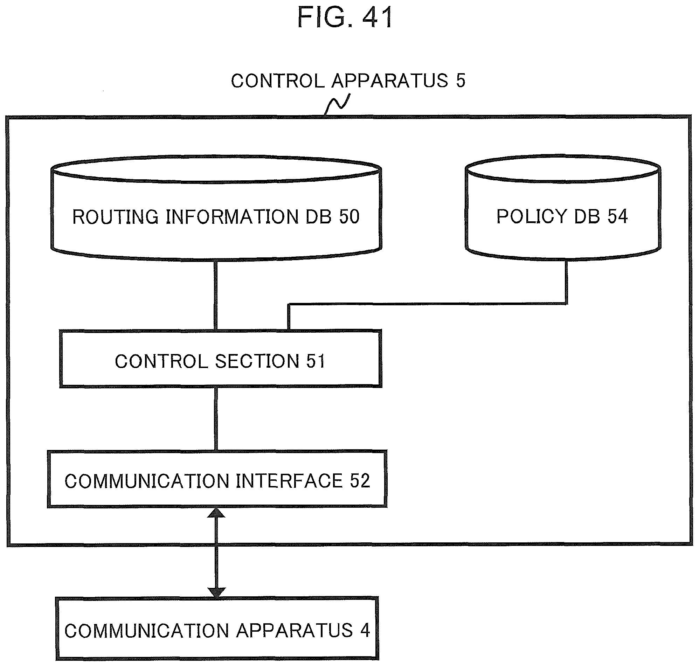

   FIG. 41 is a block diagram showing a configuration of a control apparatus according to the seventh exemplary embodiment of the present invention.
[FIG. 42]

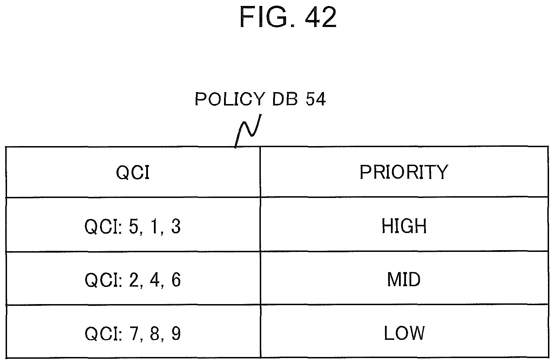

   FIG. 42 is a structural diagram showing an example of a policy DB at the control apparatus according to the seventh exemplary embodiment of the present invention.
[FIG. 43]

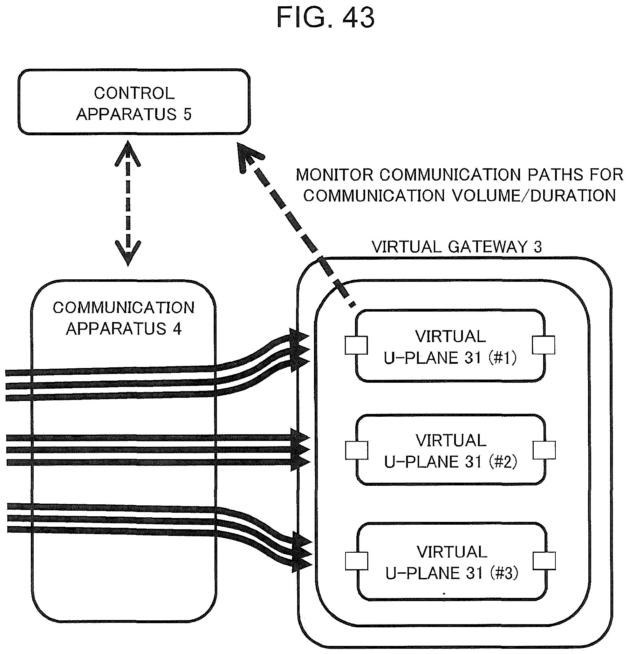

   FIG. 43 is a schematic system architecture diagram for describing a second example of operation of the communication system according to the seventh exemplary embodiment of the present invention.
[FIG. 44]

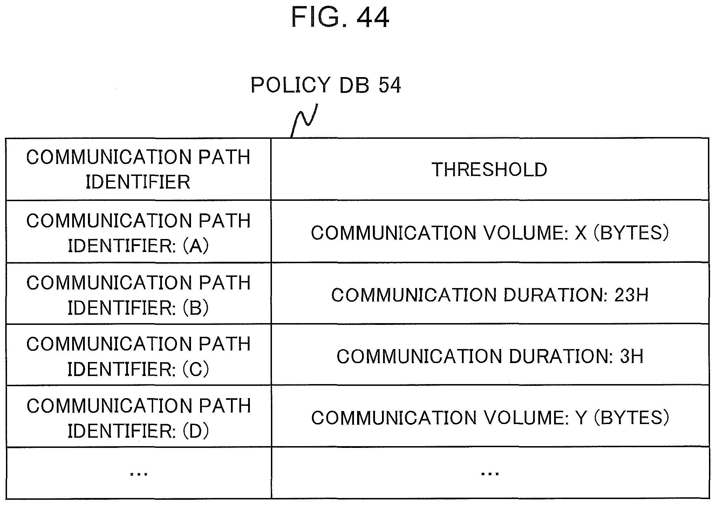

   FIG. 44 is a structural diagram showing an example of the policy DB at the control apparatus in the communication system shown in FIG. 43.
[FIG. 45]

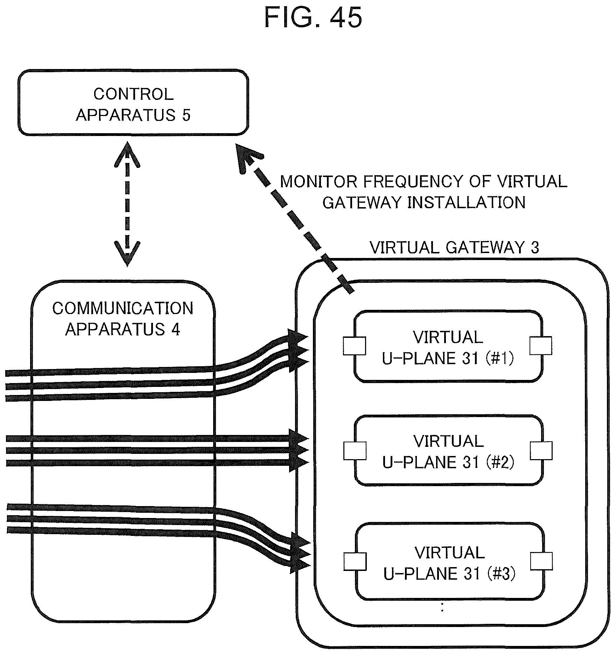

   FIG. 45 is a schematic system architecture diagram for describing a third example of operation of the communication system according to the seventh exemplary embodiment of the present invention.

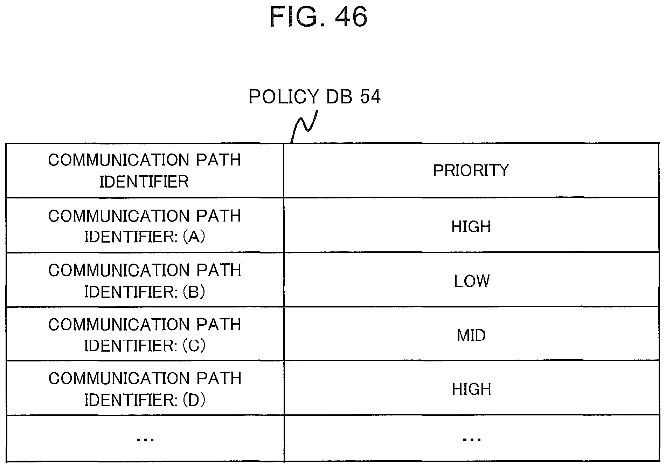

[FIG. 46] FIG. 46 is a structural diagram showing an example of the policy DB at the control apparatus in the communication system shown in FIG. 45.
[FIG. 47]

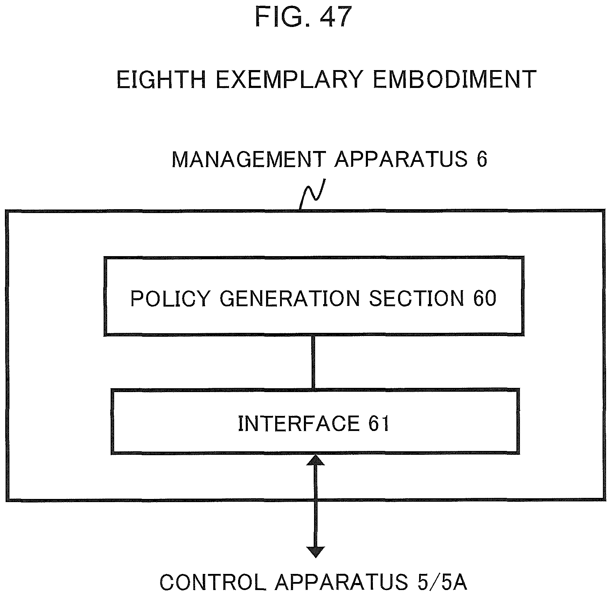

   FIG. 47 is a block diagram showing a first example of a management apparatus according to an eighth exemplary embodiment of the present invention.
[FIG. 48]

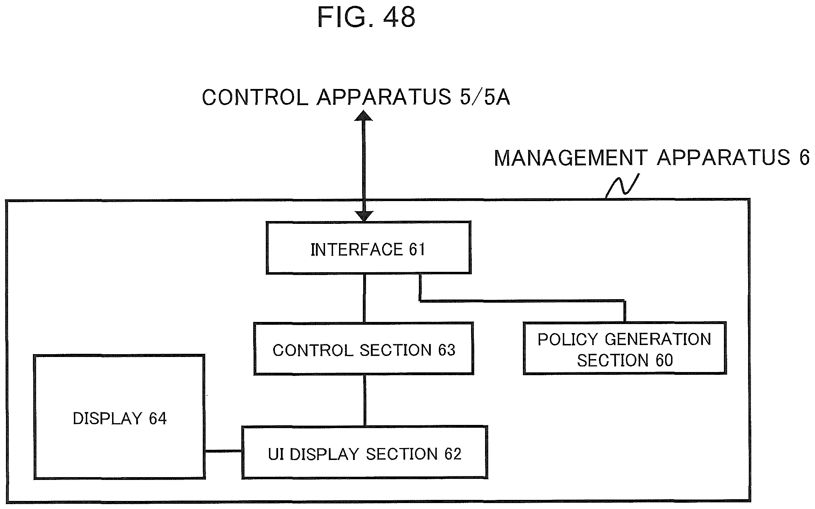

   FIG. 48 is a block diagram showing a second example of the management apparatus according to the eighth exemplary embodiment of the present invention.
[FIG. 49]

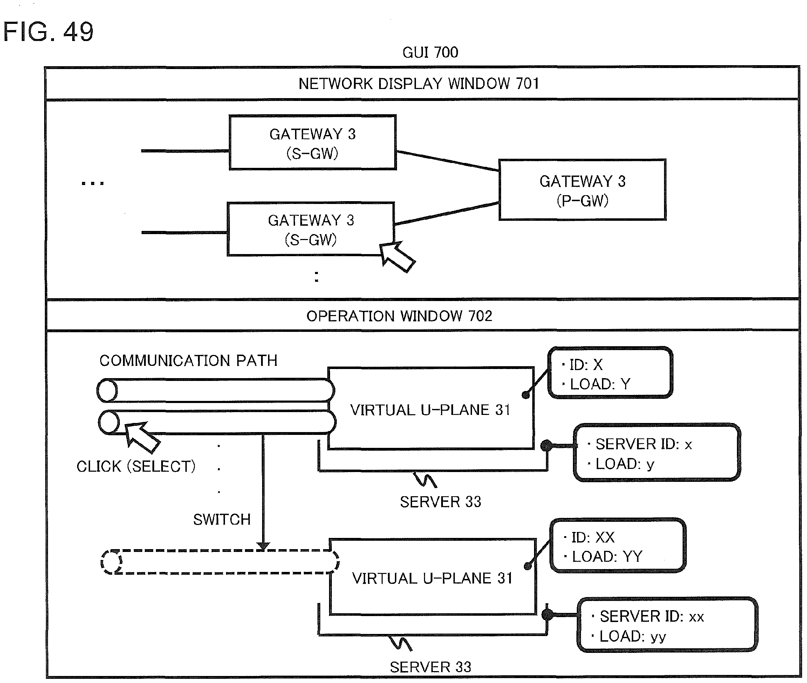

   FIG. 49 is a schematic diagram showing an example of a user interface of the management apparatus according to the eighth exemplary embodiment of the present invention.
[FIG. 50]

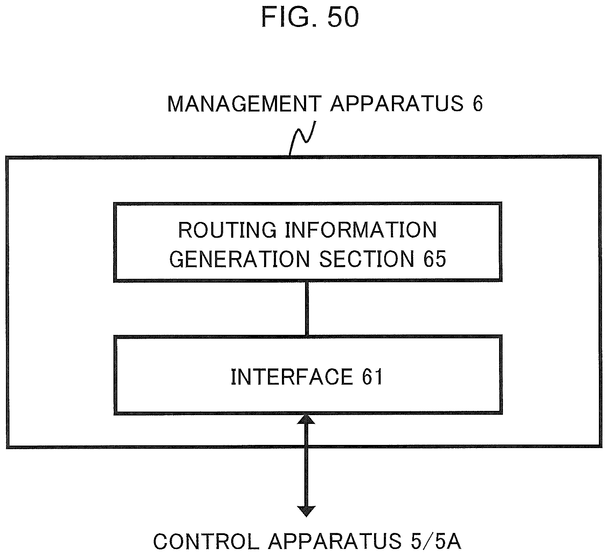

   FIG. 50 is a block diagram showing a third example of the management apparatus according to the eighth exemplary embodiment of the present invention.
[FIG. 51]

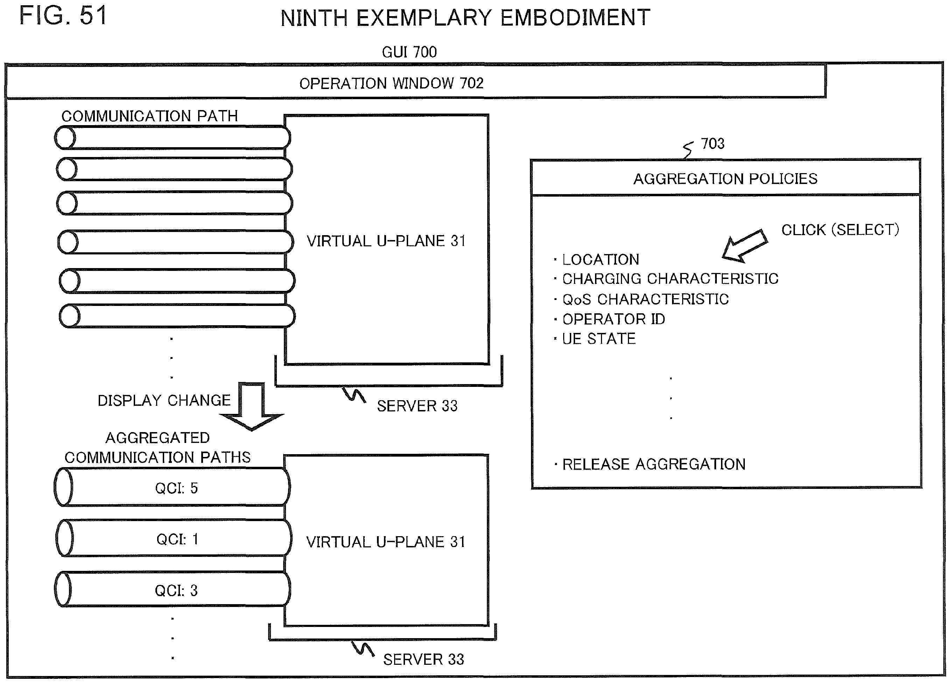

   FIG. 51 is a schematic diagram showing a first example of a user interface of a management apparatus according to a ninth exemplary embodiment of the present invention.
[FIG. 52]

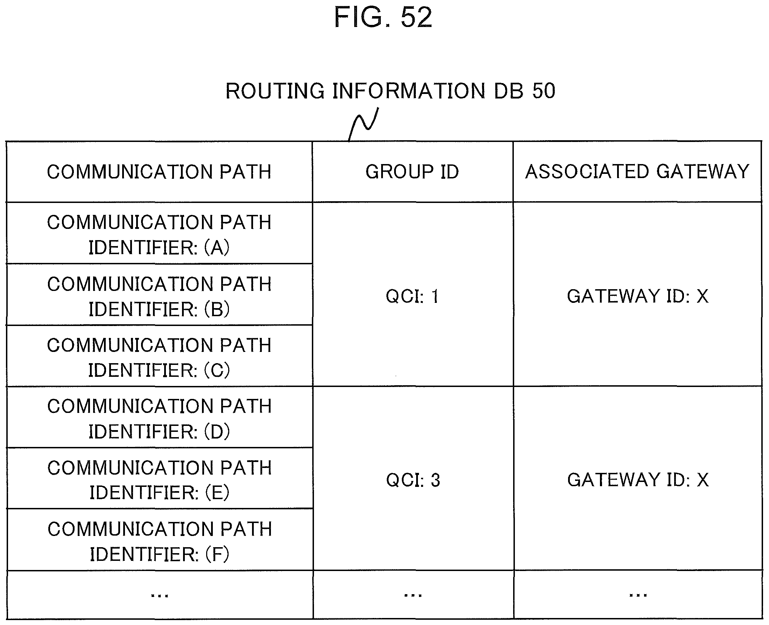

   FIG. 52 is a structural diagram showing a first example of a routing information DB at the management apparatus according to the ninth exemplary embodiment of the present invention.
[FIG. 53]

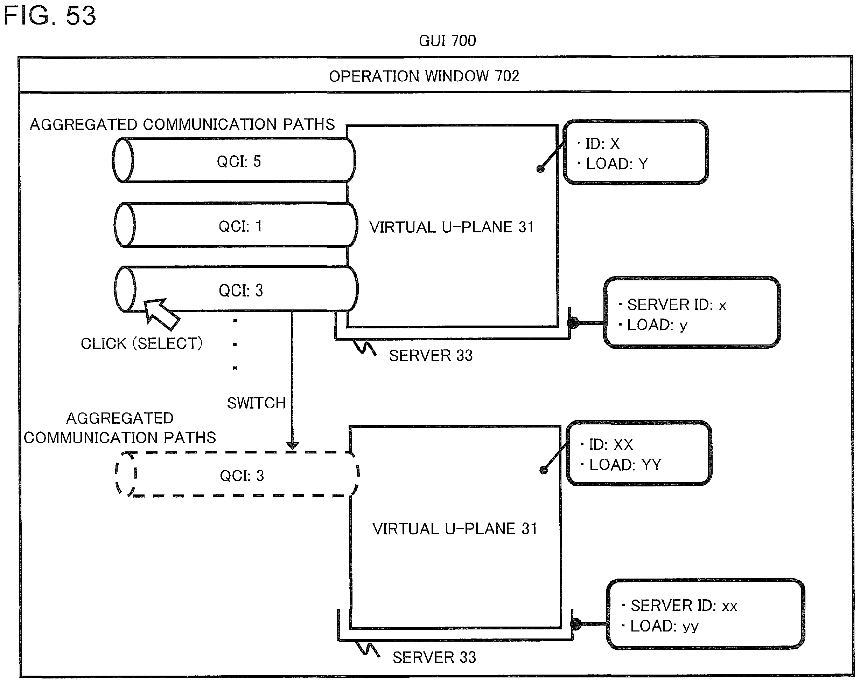

   FIG. 53 is a schematic diagram showing a second example of the user interface of the management apparatus according to the ninth exemplary embodiment of the present invention.
[FIG. 54]

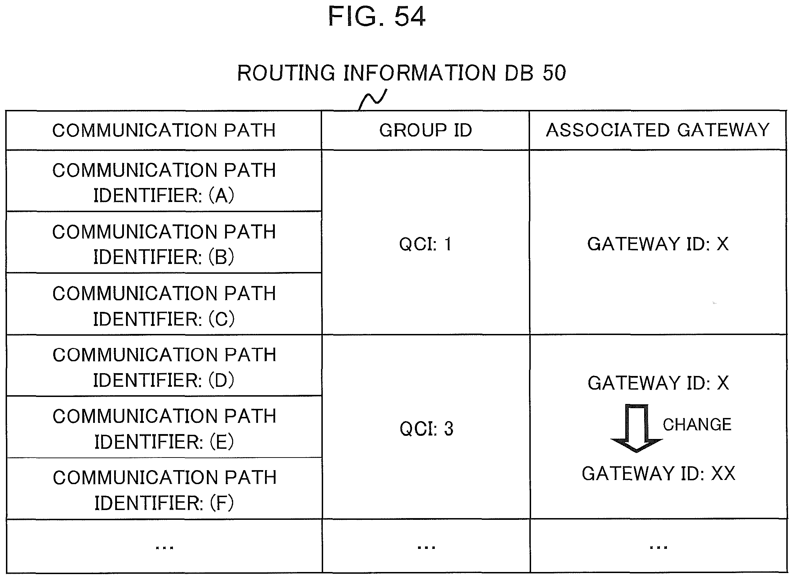

   FIG. 54 is a structural diagram showing a second example of the routing information DB at the management apparatus according to the ninth exemplary embodiment of the present invention.
[FIG. 55]

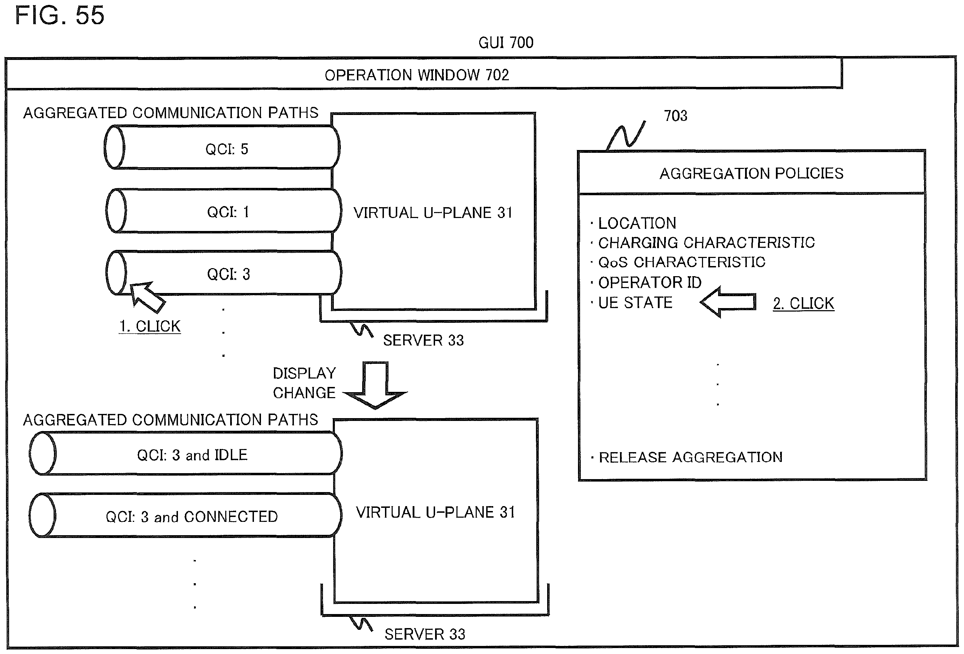

   FIG. 55 is a schematic diagram showing a third example of the user interface of the management apparatus according to the ninth exemplary embodiment of the present invention.
[FIG. 56]

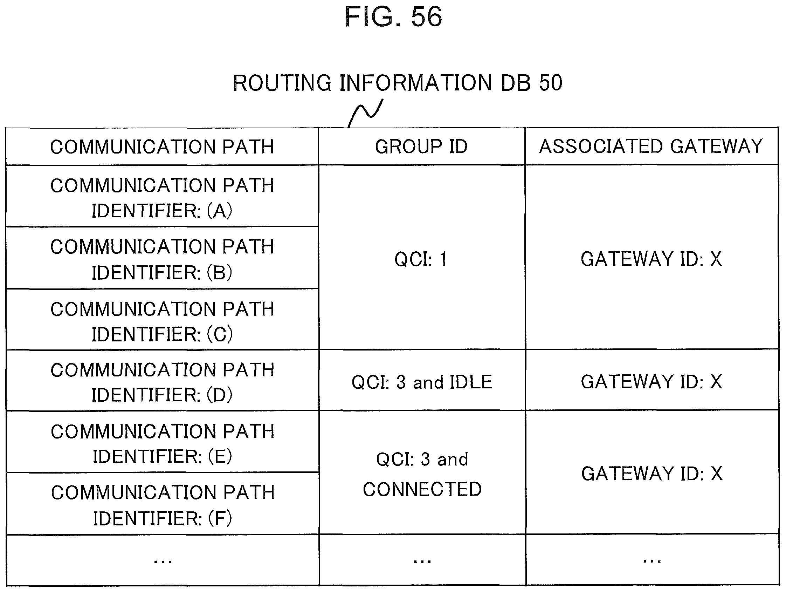

   FIG. 56 is a structural diagram showing a third example of the routing information DB at the management apparatus according to the ninth exemplary embodiment of the present invention.

### [Description of Examples

Hereinafter, examples of the present invention will be described. Each example is for the purpose of illustration rather than to limit the present invention.

### 1. First example

### 1.1) System

Hereinafter, an example of a LTE (Long Term Evolution) communication system will be illustrated as a communication system according to the present example,

However, communication systems to which the present invention is applied are not limited to those of LTE. For example, the present invention is also applicable to GPRS (General Packet Radio Service) and UMTS (Universal Mobile Telecommunication System).

Referring to FIG. 1, the communication system according to the present example includes a mobile terminal 1 such as a mobile telephone, PC (Personal Computer) or mobile router, a base station (eNB) 2, and a gateway 3. The base station 2 provides a radio access function for the mobile terminal 1. The gateway 3 is a network node such as, for example, an S-GW (Serving Gateway) or a P-GW (Packet Data Network Gateway). Note that the gateway 3 may be a SGSN (Serving GPRS Support Node) or GGSN (Gateway GPRS Support Node). The gateway 3 provides, for example, a function of terminating a communication path (e.g., a bearer) configured in a network and a function as a connection point to an external network (e.g., the Internet).

As shown in FIG. 2, the mobile terminal 1 sends and receives data over a communication path (e.g., a bearer) configured between the mobile terminal 1 and the gateway 3. The communication path is configured with, for example, a radio channel set up between the mobile terminal 1 and the base station and a GTP (GPRS Tunneling Protocol) tunnel with the gateway 3 as its end point.

In the communication system according to the present example shown in FIG. 1, a communication apparatus 4 is disposed which can switch a communication path route, for example, between the base station 2 and the gateway 3 or between the S-GW and the P-GW. For example, when switching a gateway 3 associated with a communication path, the communication apparatus 4 can switch a packet forward route so that a packet belonging to the communication path will be routed via a gateway 3 after switching. It is possible to conceal gateway switching from the mobile terminal 1 by the communication apparatus 4 switching a packet forward route on the course of a communication path route. Accordingly, even if switching is made between gateways 3 associated with communication paths, the communication system can avoid performing a communication path reestablishment procedure.

### 1.2) Communication apparatus

The communication apparatus 4 according to the present exemplary embodiment can switch among multiple gateways. However, to avoid complicating description, a description will be given below of a case, as an example, where switching is performed among three gateways.

As illustrated in FIG. 3, the communication apparatus 4 includes a communication path identification section 40 and a switching section 41, and is assumed to be able to switch among gateways 3(a), 3(b) and 3(c), depending on communication paths.

The communication path identification section 40 identifies a communication path to which a received packet belongs. For example, the communication path identification section 40 identifies a communication path to which a received packet belongs, based on a communication path identifier such as a TEID (Tunnel Endpoint Identifier) or GRE (Generic Routing Encapsulation) key.

The switching section 41 forwards a received packet to a gateway 3 associated with a communication path that has been identified based on a communication path identifier. For example, the switching section 41 has a function of managing associations between communication paths and gateways 3 and, based on these associations, forwards a received packet to an associated gateway 3. In the example of FIG. 3, the switching section 41 forwards received packets (A), (B) and (C) to the gateways 3(a), 3(b) and (c), respectively.

As illustrated in FIG. 4, it is also possible that gateways 3A (virtual gateways) are configured on a server 33 by using software such as virtual machine (VM), and the communication apparatus 4 forwards received packets to such gateways 3A. For example, the server 33 can construct multiple virtual gateways 3A, depending on the load or the like on the communication system. For example, the switching section 41, based on associations between communication paths and virtual gateways, forwards a received packet to an associated virtual gateway.

As illustrated in FIG. 5, it is also possible to implement the above-described functionality of the communication apparatus 4 by a virtual switch 4A constructed on the server 33. That is, in the example of FIG. 5, the server 33 can operate as the communication apparatus 4. In other words, it is also possible to construct the virtual switch 4A and the virtual gateways (gateways 3A) on a control section (not shown) of the server 33 by using software such as VM. The communication path identification section 40 of the virtual switch 4A identifies a communication path to which a received packet belongs, and the switching section 41 of the virtual switch 4A forwards the received packet to a virtual gateway 3A associated with the identified communication path.

Although only one communication apparatus 4 (or virtual switch 4A) is shown in FIGS. 3 to 5, a plurality of communication apparatuses 4 may be used. Moreover, the communication apparatus or apparatuses 4 and the virtual switch or switches 4A may be used in combination.

### 1.3) Communication path control

Referring to FIG. 6, at the communication apparatus 4, when receiving a packet (Operation S1), the communication path identification section 40 identifies a communication path to which the received packet belongs (Operation S2). For example, the communication path identification section 40 identifies a communication path to which the received packet belongs, based on a communication path identifier such as a TEID or GRE key.

The switching section 41 of the communication apparatus 40 forwards the received packet to a gateway 3 associated with the identified communication path (Operation S3).

### 1.4) Effects

Through the operations described above, the communication apparatus 4 switches a packet forward route on the course of a communication path route, whereby the communication system can conceal switching between gateways 3 associated with the communication paths from the mobile terminal 1. Accordingly, even if switching is made between gateways 3 associated with communication paths, the communication system can avoid performing a communication path reestablishment procedure.

### 2. Second example

A second example of the present invention is applicable to the communication system illustrated in FIG. 1.

A communication apparatus 4 in a communication system according to the second example can switch a communication path route, as in the above-described first example, in accordance with an instruction notified from a control apparatus 5. Since the control apparatus 5 can perform centralized control of operation of the communication apparatus 4, the efficiency in system operation is enhanced.

As shown in FIG. 7, the control apparatus 5 includes a routing information DB (database) 50, a control section 51, and a communication interface 52.

The communication interface 52 has a function of communicating with the communication apparatus 4. For example, the communication interface 52 can communicate with the communication apparatus 4 by using a protocol such as OpenFlow, ForCES (Forwarding and Control Element Separation) or I2RS (Interface to Routing System).

The routing information DB 50 is a database for managing associations between communication paths and gateways 3. The control section 51 has a function of generating information to be stored in the routing information DB 50 and a function of controlling the communication apparatus 4 through the communication interface 52 based on the information stored in the routing information DB 50.

As illustrated in FIG. 8, the routing information DB 50 stores association information about each communication path and its associated gateway. A communication path identifier such as a TEID or GRE key can be used for information to identify a communication path, and an associated gateway 3 can be managed based on each communication path identifier.

The control section 51 controls the communication apparatus 4 based on the information managed in the routing information DB 50. For example, the control section 51 notifies an association between a communication path and a gateway 3 to the switching section 41 of the communication apparatus 4.

As illustrated in FIG. 9, it is also possible to provide the communication apparatus 4 with a routing information DB 42 to allow it to store routing information notified from the control apparatus 5. In this case, the communication path identification section 40 and the switching section 41 of the communication apparatus 4 refers to the routing information DB 42 and forwards a packet to a gateway 3 associated with a communication path to which this packet belongs.

For example, when a gateway 3 associated with a communication path changes, the control section 51 of the control apparatus 5 notifies information about that changed association to the communication apparatus 4. The communication apparatus 4 stores the notified information in the routing information DB 42.

It is also possible that the control section 51 of the control apparatus 5 causes gateways 3A (as illustrated in FIG. 5), which are virtual gateways, to operate on the server 33 illustrated in FIG. 5 by using, for example, an activation command. That is, in response to an activation command from the control section 51, the server 33 activates an application having functionality corresponding to a gateway 3, on a virtual machine.

For example, the control apparatus 5 can be configured by using a PCRF (Policy and Charging Rule Function), an MME (Mobility Management Entity) and the like for LTE communication systems, as well as an NMS (Network Management System) and the like. The MME has a function of controlling the establishment/deletion of bearers, a function of controlling the mobility of mobile terminals 1 such as handover, a function of authenticating users of mobile terminals 1, and the like. The PCRF has a function of controlling QoS policies and the like, a function of controlling charging for data forwards, and the like. The gateways perform policy control, based on information notified from the PCRF. The NMS has a function of monitoring network traffic, a function of monitoring the aliveness of network equipment, and the like.

### 3. Third example

A third example of the present invention is also applicable to any technique disclosed in the above-described first or second example. In the third example, the functionality of a gateway 3 is virtually configured by using software such as VM.

In current communication systems, dedicated appliances, which are hardware equipment, are used to perform various network functions. Since such dedicated appliances are necessary to construct a communication system, network operators are forced to install new dedicated appliances when they start new network services. That is, the installation of dedicated appliances costs network operators a lot, such as costs for the purchase of the dedicated appliances and their installation spaces.

Moreover, communication systems are, in general, designed to have tolerance for peak load. Accordingly, dedicated appliances (e.g., gateway apparatuses and the like) included in a communication system are possibly redundant as compared to off-peak traffic volume. A solution to this problem is to implement the functions of dedicated appliances such as gateway apparatuses by using software such as virtual machine. For example, a virtual machine with the functionality of a dedicated appliance is added depending on the traffic in a communication system, allowing system construction according to the state of the communication system.

In the third example of the present invention, it is possible to switch between gateways 3 associated with communication paths when the functions of gateways 3 are dynamically scaled out. A communication apparatus 4 switches a packet forward route on the course of a communication path route, whereby the communication apparatus 4 can conceal switching between gateways 3 associated with communication paths from the mobile terminal 1. Accordingly, even if switching is made between gateways 3 associated with communication paths, the communication system can avoid performing a communication path reestablishment procedure. Hereinafter, the third exemplary embodiment of the present invention will be described with reference to examples shown in FIGS. 10 to 20.

### 3.1) Gateway configuration

As shown on the left of FIG. 10, a gateway 3 has a control plane (C-plane) and a user plane (U-plane). The C-plane has a function of processing control signals transmitted in the communication system. The U-plane has a function of processing data transmitted in the communication system. The C-plane and the U-plane can also make communications via different interfaces 32, respectively. In the gateway 3, for example, an IP address is assigned to each interface.

For a mobile terminal 1 to communicate with an external network such as the Internet, a communication path (i.e., a bearer) is established between the gateway 3 and the mobile terminal 1. For example, the gateway 3 uses an IP address assigned to an interface 32 to communicate over a communication path. The gateway 3 constructs a tunnel (e.g., GTP tunnel or GRE tunnel) to establish a communication path.

As shown on the right of FIG. 10, the above-described gateway 3 is configured as a virtual gateway 3A by using software such as VM. For example, the virtual gateway 3A is constructed on a server 33. In the virtual gateway 3A, a C-plane and a U-plane are configured by using software such as VM. In FIG. 10, functions corresponding to the C-plane and the U-plane are denoted as "virtual C-plane 30" and "virtual U-plane 31", respectively. The virtual C-plane 30 and the virtual U-plane 31 can communicate with each other via an internal interface. An operator of the communication system can add a virtual C-plane 30 and/or a virtual U-plane 31 depending on, for example, the load or the like on the communication system. Since virtual C-planes and virtual U-planes are constructed by using software, the operator can add such a gateway more easily at lower cost than it adds a gateway 3 composed of hardware equipment.

The virtual C-plane 30 and the virtual U-plane 31 each operate as a network node providing a function of terminating a communication path and a function of serving as a connection point to an external network.

As described in the [Technical Problem] section, if an IP address is assigned to each interface 32 in the virtual gateway 3A as in the gateway 3, communication path reconfiguration is expected to occur when a virtual C-plane or virtual U-plane is additionally installed. For example, when an additional virtual U-plane 31 is installed, a new IP address is assigned to the interface 32 of the additional virtual U-plane 31. When a communication path configured at an existing virtual U-plane 31 is switched to the additional virtual U-plane 31, communication path reconfiguration occurs because an IP address to be associated with the communication path is changed to the IP address assigned to the additional virtual U-plane 31. To perform communication path reconfiguration, functions included in the communication system, such as eNB, SGW and PGW, each perform a communication path reconfiguration procedure. Accordingly, communication path reconfiguration occurs each time a virtual C-plane 30 or virtual U-plane 31 is additionally installed, which, expectedly, greatly affects the performance or the like of the communication system.

Hence, according to the third exemplary embodiment of the present invention, an IP address is not assigned to each of the interfaces 32 of virtual C-planes 30 and virtual U-planes 31, but a common IP address is assigned to, for example, the virtual U-planes or the virtual C-planes. That is, a common IP address is assigned to multiple virtual C-planes or multiple virtual U-planes. Consequently, for example, if an additional virtual U-plane 31 to be included in the U-plane is installed, the occurrence of communication path reconfiguration can be avoided even when a communication path is switched between virtual U-planes 31, because the common IP address is assigned to each virtual U-plane 31. Note that a common address assigned to multiple virtual C-planes or multiple virtual U-planes is not limited to an IP address but may be, for example, a MAC address.

### 3.2) System

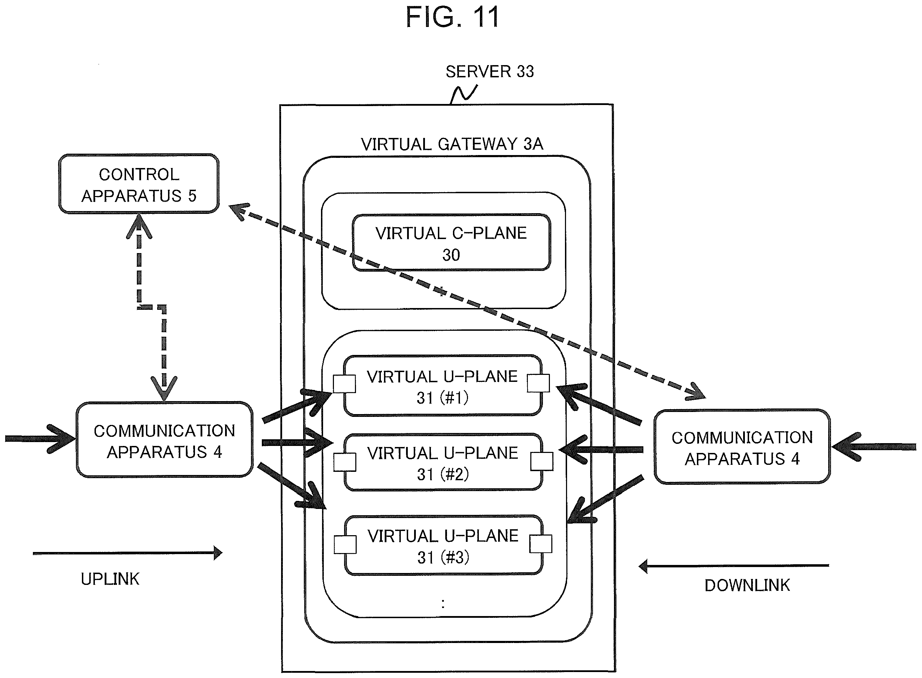

Referring to FIG. 11, a first example of the communication system according to the third exemplary embodiment of the present invention includes a virtual gateway 3A, communication apparatuses 4, and a control apparatus 5.

In the virtual gateway 3A, virtual C-planes 30 and virtual U-planes 31 can be configured by using software such as VM. For example, virtual C-planes 30 and virtual U-planes 31 are configured on a server by using software such as VM.

The control apparatus 5 manages associations between communication paths and the virtual gateway 3A. For example, the control apparatus 5 has a function of managing associations between communication paths and virtual U-planes 31. Moreover, for example, the control apparatus 5 has a function of managing associations between communication paths and virtual C-planes 30.

The control apparatus 5 has a function of controlling operation of the communication apparatuses 4. As described already, the control apparatus 5 identifies a communication path to which a received packet belongs and instructs the communication apparatuses 4 to forward the received packet to a virtual U-plane 31 associated with the identified communication path.

It is also possible that the control apparatus 5 causes the virtual gateway 3A (or virtual C-planes 30 or virtual U-planes 31) to operate on a server 33. For example, the control apparatus 5 can instruct the server 33 to activate the virtual gateway 3A. The server 33, in response to an activation command from the control apparatus 5, activates an application having functionality corresponding to the gateway 3 on a virtual machine.

It is also possible that the control apparatus 5 controls virtual U-planes 31 in parallel with the communication apparatus 4. For example, to make switching between virtual U-planes 31 associated with communication paths, the control apparatus 5 controls the communication apparatus 4 to switch a packet forward route on the course of a communication path route, and also controls terminating the relevant communication path at a virtual U-plane 31 after the switching. For example, the control section 51 of the control apparatus 5 notifies the virtual U-plane 31 of information about the communication path (e.g., a communication path identifier) to be newly terminated by the virtual U-plane 31 due to route switching.

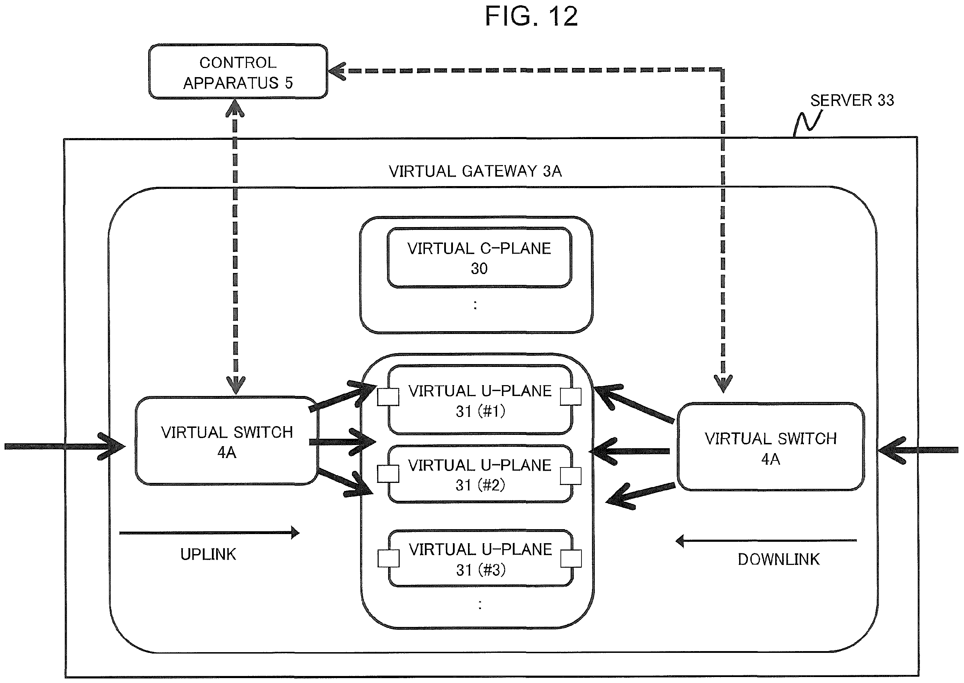

As shown in FIG. 12, in a second example of the communication system according to the third exemplary embodiment, the functionality of the communication apparatuses 4 is configured on the server 33 by using software such as VM. That is, in the example of FIG. 12, the server 33 is capable of operating as communication apparatuses 4. For example, the server 33 includes a control section (not shown in FIG. 12) that can activate the virtual gateway 3A on the server 33. In the virtual gateway 3A, virtual C-planes 30, virtual U-planes 31, and virtual switches 4A are configured on the server 33, and the functionality of the communication apparatuses 4 is configured as the virtual switches 4A on the server 33.

As shown in FIG. 13, in a third example of the communication system according to the third exemplary embodiment, the server 33 includes the virtual switches 4A operable as the communication apparatuses 4 as in the example of FIG. 12, and the functionality of the control apparatus 5 is further configured on the server 33 by using software such as VM. In the example of FIG. 13, the functionality of the control apparatus 5 is configured as a virtual controller 5A on the server 33. For example, the server 33 includes a control section (not shown in FIG. 13) that can activate at least one of the virtual switches 4A, the virtual gateway 3A, and the virtual controller 5A on the server 33. In the example of FIG. 13, the virtual gateway 3A is composed of virtual C-planes 30, virtual U-planes 31, the virtual switches 4A, and the virtual controller 5A. In the example of FIG. 13, the server 33 can operate as the control apparatus 5 that has the functionality of at least one of the virtual switches 4A and the virtual gateway 3A.

A description below of the third exemplary embodiment will be made based on the system architecture illustrated in FIG. 11. However, the present example is not limited to this system architecture shown in FIG. 11 but also includes those shown in FIGS. 12 and 13, as well as any examples made by modifying, substituting, or adjusting these system architectures.

### 3.3) Management information at control apparatus (first example)

Management information to be stored in the routing information DB 50 of the control apparatus 5 is information that the control apparatus 5 manages for the virtual gateway 3A functioning as a P-GW here, as illustrated in FIG. 14.

For instance, the control apparatus 5 manages communication path information and information concerning virtual U-planes 31 ("VIRTUAL U-PLANE" in FIG. 14) each associated with communication paths identified by the communication path information. For example, the communication path information includes an IP address assigned to a virtual U-plane ("GW IP addr" in FIG. 14) and a communication path identifier ("TEID" in FIG. 14). Note that the "GW IP addr" in FIG. 14 is a common IP address assigned to the virtual U-planes 31.

The control apparatus 5 manages the above-described GW IP addr and TEID as communication path information for uplink communication (communication from a mobile terminal 1 to an external network such as the Internet). The communication path information may also include information concerning a virtual U-plane 31 associated with a communication path (e.g., virtual U-plane identification information; information shown as "VIRTUAL U-PLANE" in FIG. 14). FIG. 14 shows that, for example, a communication path with GW IP addr "GW-U" and TEID "TEID#A" is associated with a virtual U-plane #1.

The control apparatus 5 manages information including, for example, the IP address of a mobile terminal 1 ("UE IP addr" in FIG. 14) as communication path information for downlink communication (communication from an external network to a mobile terminal 1). For example, the control apparatus 5 obtains the communication path information from a virtual C-plane 30.

As illustrated in FIG. 14, an IP address is not assigned to each virtual U-plane 31, but the common IP address ("GW IP addr") is assigned to the virtual U-planes 31. Not only in this assignment method, multiple IP addresses (e.g., "GW-U#1" and "GW-U#2") may be also assigned to the virtual U-planes. For example, it is also possible to employ an assignment method in which "GW-U#1" is assigned to virtual U-planes #1-#n and "GW-U#2" is assigned to virtual U-planes #m-#x.

### 3.4) Control information at communication apparatus (first example)

The control apparatus 5 can set control information in the communication apparatuses 4, as illustrated in FIG. 15.

For example, the control apparatus 5 notifies, as control information, an instruction to process a received packet to the communication apparatus 4 that processes uplink communication. The communication apparatus 4 processes a received packet in accordance with the notified control information. For example, the control information notified by the control apparatus 5 instructs the communication apparatus 4 to identify a bearer to which a received packet belongs, based on the IP address assigned to the virtual U-planes ("GW IP addr") and a TEID, and to forward the received packet to a virtual U-plane 31 associated with the identified bearer.

Referring to FIG. 15, the control information to be notified to the communication apparatus 4 for uplink communication includes, for example, a "matching key" (IDENTIFICATION CONDITION) and an "instruction" (INSTRUCTION). The "matching key" indicates a condition to identify a packet based on the IP address for the U-planes ("GW IP addr"), which is the destination address of the packet, and on a TEID. The "instruction" indicates a method for processing the packet that matches the condition indicated by the "matching key". For example, when a packet with destination address (Dst Addr) "GW-U" and TEID "#A" is identified, this packet is instructed to be forwarded to the "virtual U-plane #1".

For instance, the control apparatus 5 notifies, as control information, an instruction to process a received packet to the communication apparatus 4 that processes downlink communication. The communication apparatus 4 processes a received packet in accordance with the notified control information. For example, the control information notified by the control apparatus 5 instructs to identify a bearer to which a received packet belongs, based on the IP address of a mobile terminal 1 ("UE IP addr") that is the destination of the packet, and to forward the received packet to a virtual U-plane 31 associated with the identified bearer.

Referring to FIG. 15, the control information to be notified to the communication apparatus 4 for downlink communication includes, for example, a "matching key" and an "instruction". The "matching key" indicates a condition to identify a packet based on the IP address of a mobile terminal 1 ("UE IP addr") that is the destination address of the packet. The "instruction" indicates a method for processing the packet that matches the condition indicated by the "matching key". For example, when a packet with destination address (Dst Addr) "UE#A'" is identified, this packet is instructed to be forwarded to the "virtual U-plane #1."

### 3.5) Communication path control operation (first example)

Referring to FIG. 16, the communication apparatuses 4 forward a received packet to a virtual U-plane 31 in accordance with the control information illustrated in FIG. 15. More specifically, the communication apparatuses 4 search for a "matching key" corresponding to a received packet and, when a matching "matching key" is retrieved, forward the received packet to a virtual U-plane 31 in accordance with an "instruction" corresponding to that "matching key".

For example, at the uplink-side communication apparatus 4, a packet addressed to the virtual gateway 3 (a packet with Dst Addr "GW-U") is forwarded to a virtual U-plane 31 according to a TEID. In the example of FIG. 16, a packet with TEID "#A" is forwarded to the virtual U-plane #1, a packet with TEID "#B", to the virtual U-plane #2, and a packet with TEID "#C", to the virtual U-plane #3.

Moreover, at the downlink-side communication apparatus 4, a received packet is forwarded to a virtual U-plane 31 according to a destination IP address. In the example of FIG. 16, a packet with destination IP address "UE#A'" is forwarded to the virtual U-plane #1, a packet with destination IP address "UE#B"', to the virtual U-plane #2, and a packet with destination IP address "UE#C"', to the virtual U-plane #3.

### 3.6) Management information at control apparatus (second example)

As illustrated in FIG. 17, management information to be stored in the routing information DB 50 of the control apparatus 5 is information that the control apparatus 5 manages for the virtual gateway 3A functioning as an S-GW.

For instance, the control apparatus 5 manages communication path information and information concerning a virtual U-plane 31 associated with a communication path that is identified by the communication path information. For example, the communication path information includes an IP address assigned to a virtual U-plane ("GW IP addr" in FIG. 17) and a communication path identifier ("TEID" in FIG. 17). The control apparatus 5 manages, for example, the above-mentioned GW IP addr and TEID as communication path information for uplink communication. The communication path information may also include information concerning a virtual U-plane 31 associated with a communication path (e.g., identification information of a virtual U-plane; information shown as "VIRTUAL U-PLANE" in FIG. 17).

The control apparatus 5 manages, for example, the above-mentioned GW IP addr and TEID as communication path information for downlink communication. The communication path information may also include information concerning a virtual U-plane 31 associated with a communication path (e.g., identification information of a virtual U-plane; information shown as "VIRTUAL U-PLANE" in FIG. 17). For example, the control apparatus 5 obtains the communication path information from a virtual C-plane 30.

As illustrated in FIG. 17, an IP address is not assigned to each virtual U-plane 31, but a common IP address ("GW IP addr") is assigned to the virtual U-planes. In the example of FIG. 17, IP address "GW-U" for uplink and IP address "GW-U'" for downlink are assigned to the virtual U-planes. Note that multiple IP addresses (e.g., "GW-U#1" and "GW-U#2", and "GW-U'#1" and "GW-U'#2") may be assigned to the virtual U-planes. For example, "GW-U#1" and "GW-U'#1" are assigned to virtual U-planes #1-#n, and "GW-U#2" and "GW-U'#2" are assigned to virtual U-planes #m-#x.

### 3.7) Control information at communication apparatus (second example)

As illustrated in FIG. 18, the control apparatus 5 can set control information in the communication apparatuses 4.

For example, the control apparatus 5 notifies, as control information, an instruction to process a received packet to the communication apparatus 4 that processes uplink communication. The communication apparatus 4 processes a received packet in accordance with the notified control information. For example, the control information notified by the control apparatus 5 instructs the communication apparatus 4 to identify a communication path to which a received packet belongs, based on the IP address assigned to the virtual U-planes ("GW IP addr") and a TEID, and to forward the received packet to a virtual U-plane 31 associated with the identified communication path.

Referring to FIG. 18, the control information to be notified to the communication apparatus 4 for uplink communication includes, for example, a "matching key" and an "instruction". The "matching key" indicates a condition to identify a packet based on the IP address for the U-planes ("GW IP addr"), which is the destination address of the packet, and on a TEID. The "instruction" indicates a method for processing the packet that matches the condition indicated by the "matching key". For example, when a packet with destination address "GW-U" and TEID "#A" is identified, this packet is instructed to be forwarded to the "virtual U-plane #1".

For example, the control apparatus 5 notifies, as control information, an instruction to process a received packet to the communication apparatus 4 that processes downlink communication. The communication apparatus 4 processes a received packet in accordance with the notified control information. For example, the control information notified by the control apparatus 5 instructs the communication apparatus 4 to identify a communication path to which a received packet belongs, based on the IP address assigned to the U-planes ("GW IP addr") and on a TEID, and to forward the received packet to a virtual U-plane 31 associated with the identified communication path.

Referring to FIG. 18, the control information to be notified to the communication apparatus 4 for downlink communication includes, for example, a "matching key" and an "instruction". The "matching key" indicates a condition to identify a packet based on the IP address for the U-planes ("GW IP addr"), which is the destination address of the packet, and on a TEID. The "instruction" indicates a method for processing the packet that matches the condition indicated by the "matching key". For example, when a packet with destination address "GW-U'" and TEID "#A'" is identified, this packet is instructed to be forwarded to the "virtual U-plane #1".

### 3.8) Communication path control operation (second example)

Referring to FIG. 19, the communication apparatuses 4 forward a received packet to a virtual U-plane 31 in accordance with the control information illustrated in FIG. 18. More specifically, the communication apparatuses 4 search for a "matching key" corresponding to a received packet and, when a matching "matching key" is retrieved, forward the received packet to a virtual U-plane 31 in accordance with an "instruction" corresponding to that "matching key".

At the uplink-side communication apparatus 4, a packet addressed to the gateway 3 (a packet with Dst Addr "GW-U") is forwarded to a virtual U-plane 31 according to a TEID. In the example of FIG. 19, a packet with TEID "#A" is forwarded to the virtual U-plane #1, a packet with TEID "#B", to the virtual U-plane #2, and a packet with TEID "#C", to the virtual U-plane #3.

At the downlink-side communication apparatus 4, a packet addressed to the gateway 3 (a packet with Dst Addr "GW-U'") is forwarded to a virtual U-plane 31 according to a TEID. In the example of FIG. 19, a packet with TEID "#A'" is forwarded to the virtual U-plane #1, a packet with TEID "#B"', to the virtual U-plane #2, and a packet with TEID "#C"', to the virtual U-plane #3.

Note that although the above-described examples shown in FIGS. 14 to 19 illustrate examples for virtual U-planes, the present invention is also applicable to virtual C-planes.

Moreover, in the third example, control of a packet directed to a virtual U-plane is described. However, the control apparatus 5 may also perform control of a packet that has passed through a virtual U-plane. It is conceivable that control of a packet that has passed through a virtual U-plane is performed, for example, based on a destination IP address.

Further, in the third example, examples are illustrated in which a communication path is assigned to a virtual C-plane and a virtual U-plane. However, a communication path may be assigned to a virtual gateway 3A.

Furthermore, in the third example, examples are illustrated in which a P-GW and an S-GW operate individually. However, the functions of both a P-GW and an S-GW may coexist on a single virtual U-plane.

### 3.9) Communication path control operation (third example)

In the above-described examples, it is illustrated that a common IP address is assigned to the virtual U-planes included in the virtual gateway 3A. However, the present invention is not limited to these examples. For example, the present invention can be also implemented in an example where NAT (Network Address Translation) is used, as illustrated in FIG. 20.

Referring to FIG. 20, it is assumed that IP address "vGW" is assigned to the virtual gateway 3A and different IP addresses (e.g., "IP#1") are assigned to the virtual U-planes, respectively.

A communication apparatus 4, when receiving a packet with destination address "vGW", translates the destination address, based on a TEID in the packet. For example, when the TEID is "#A", the communication apparatus 4 translates the destination address "vGW" into the IP address of a virtual U-plane #1, "IP#1", which is associated with TEID "#A".

The communication apparatus 4, when receiving a packet whose source address is the IP address of a virtual U-plane, translates the source address into the IP address of the virtual gateway 3A, "vGW".

Note that when NAT is performed, a MAC address may be also translated together with an IP address. In this case, MAC address "vGW_MAC" is assigned to the virtual gateway 3A, and different MAC addresses (e.g., "MAC#1") are assigned to the virtual U-planes, respectively.

The communication apparatus 4 conceals the IP address of a virtual U-plane through NAT as in the example of FIG. 20, whereby it is possible to avoid a communication path reconfiguration procedure even when a virtual U-plane associated with a communication path is changed.

### 3.10) Effects

According to the third exemplary embodiment of the present invention, a common IP address is assigned to the virtual U-planes or virtual C-planes as in the first example. Accordingly, for example, even if an additional virtual U-plane 31 to be included in the U-plane is installed, it is possible to conceal switching between gateways 3 associated with communication paths from the mobile terminal 1, and to avoid communication path reconfiguration.

### 4. Fourth example

According to a fourth example of the present invention, packet routing policies at communication apparatuses 4 or virtual switches 4A are updated. The present exemplary embodiment is also applicable to any technique disclosed in the first, second or third example. Hereinafter, various examples are illustrated in which packet routing policies at the communication apparatuses 4 or virtual switches 4A are updated.

### 4.1) Routing policy update (first example)

A routing policy update sequence illustrated in FIG. 21 is a procedure for updating a packet routing policy, in a sequence ("Attach Procedure") disclosed in an LTE-related standardization specification (3GPP TS 23.401 V12.1.0). The "Attach Procedure" is disclosed in sub-chapter 5.3.2 of the above standardization specification. The attach procedure shown in FIG. 21 illustrates parts relevant to the present exemplary embodiment, of the sequence described in the above standardization specification, omitting the details of the other parts of the sequence. Note that upon completion of the attach procedure, a communication path for a mobile terminal 1 to perform communication is configured.

Referring to FIG. 21, a control apparatus 5 operates as an MME in an LTE system. Alternatively, the functionality of the control apparatus 5 illustrated in the above-described exemplary embodiments is added to an MME in an LTE system. Hereinafter, such an MME to which the functionality of the control apparatus 5 is added will be represented as "MME 5".

When the MME 5 receives an attach request from a mobile terminal 1 via an eNB (base station 2) (Operation S10), the attach procedure is executed in the system. For example, in response to the start of the attach procedure, the MME 5 selects a virtual U-plane to assign to a communication path that will be configured through the attach procedure (Operation S11).

The MME 5 sends a "Create Session Request" message to a gateway 3 (S-GW) (Operation S12). The "Create Session Request" is a message for the MME 5 to request the S-GW to configure a communication path. In this example, the MME 5 selects an S-GW and a P-GW, assigns an ID (e.g., an EPS bearer ID) corresponding to the communication path of the mobile terminal 1, and notifies the S-GW, by the "Create Session Request" message, of information about the gateways, the ID assigned to the communication path, and QoS-related information corresponding to the communication path (a QCI or the like).

The S-GW notifies the other gateway 3 (P-GW), by a "Create Session Request" message, of the communication path ID, the QoS-related information corresponding to the communication path (a QCI or the like) and the like (Operation S13). The P-GW, when receiving the "Create Session Request" message, returns a "Create Session Response" message to the S-GW (Operation S14).

In response to the "Create Session Response" message received from the P-GW, the S-GW sends a "Create Session Response" message to the MME 5 (Operation S15). Through this "Create Session Response" message, for example, an S-GW TEID for S1-U interface and an S-GW TEID for S5/S8 interface are notified to the MME 5, and an S-GW address to be used for the communication path is also notified to the MME 5. The S-GW address to be used for the communication path is, for example, a common IP address for the virtual U-planes included in the S-GW.

The MME 5 sets packet routing policies ("Routing Policy" in FIG. 21) for the communication apparatuses 4, based on the S-GW TEIDs and the S-GW address notified from the S-GW and sends them to the communication apparatuses 4 (Operation S16). Note that the packet routing policies are, for example, the control information illustrated in the above-described third exemplary embodiment (i.e., the control information that is set in the communication apparatuses 4 by the control apparatus 5). For example, the MME 5 sets the packet routing policies illustrated in FIG. 18 in the communication apparatuses 4, based on the information notified from the S-GW. For example, a packet routing policy based on the TEID for S1-U interface is set in the uplink-side communication apparatus 4, while a packet routing policy based on the TEID for S5/S8 interface is set in the downlink-side communication apparatus 4.

Although the gateways 3 and the communication apparatuses 4 are illustrated as discrete apparatuses in the example of FIG. 21, they are not limited to this configuration. For example, it is also possible that a communication apparatus 4 including a virtual switch 4A and virtual gateways 3A as in the example of FIG. 5 operates in accordance with a packet routing policy notified from the control apparatus 5.

### 4.2) Routing policy update (second example)

In a routing policy update sequence illustrated in FIG. 22, an operation (S13a) in which the S-GW notifies the MME 5 of a S-GW TEID for S5/S8 interface is different from the operation (S13) in the sequence illustrated in FIG. 21.

Referring to FIG. 22, the S-GW notifies the P-GW of a "Create Session Request" message and also notifies the MME 5 of an S-GW TEID for S5/S8 interface (Operation S13a). For another method, it is also possible that the P-GW, in response to the "Create Session Request" message received from the S-GW, notifies the MME 5 of an S-GW TEID for S5/S8 interface.

Although the gateways 3 and the communication apparatuses 4 are illustrated as discrete apparatuses in the example of FIG. 22, they are not limited to this configuration. For example, it is also possible that a communication apparatus 4 including a virtual switch 4A and virtual gateways 3A as in the example of FIG. 5 operates in accordance with a packet routing policy notified from the control apparatus 5.

### 4.3) Routing policy update (third example)

In a routing policy update sequence illustrated in FIG. 23, packet routing policies at the communication apparatuses 4 are updated, according to a change in the configurations of the virtual U-planes 31 in the virtual gateways 3A. A change in the configurations of the virtual U-planes 31 means the installation of a virtual U-plane 31 caused by activating a new VM, or the uninstallation of a virtual U-plane 31 caused by stopping a VM.

The MME 5, when detecting a change in the configurations of the virtual U-planes 31 (Operation S20), changes associations between communication paths and virtual U-planes 31 (Operation S21). For example, the MME 5 chooses a communication path to assign to a virtual U-plane 31 newly installed in a virtual gateway 3A. Moreover, for example, the MME 5 assigns a communication path that has been assigned to a virtual U-plane 31 uninstalled from a virtual gateway 3A, to another virtual U-plane 31.

For a factor causing an update of the packet routing policies at the communication apparatuses 4 or virtual switches 4A, it is also possible to use, for example, the load statuses of the virtual U-planes 31 included in the virtual gateways 3A, not a change in the configurations of the virtual U-planes 31 in the virtual gateways 3A. There may be cited, as an example, control for switching a communication path from a virtual U-plane 31 with heavy load to a virtual U-plane 31 with light load. The MME 5 updates the packet routing policies at the communication apparatuses 4, based on a change in associations between communication paths and virtual U-planes 31 (Operation S22).

### 4.4) Routing policy update (fourth example)

In a packet routing policy update sequence illustrated in FIG. 24, the MME 5 obtains information from a gateway 3 (S-GW) to update packet routing policies.

Referring to FIG. 24, the MME 5 requests from the S-GW the TEID(s) of a communication path established through, for example, the attach procedure according to the above-mentioned standardization specification (TS 23.401) (Operation S30).

In response to the TEID request, the S-GW notifies the TEID(s) to the MME 5 by using a TEID response (Operation S31). For example, an S-GW TEID for S1-U interface and an S-GW TEID for S5/S8 interface are notified to the MME 5. At this time, the S-GW notifies the TEIDs of the communication path established through, for example, the attach procedure according to the above-mentioned standardization specification (TS 23. 401).

The MME 5 chooses a virtual U-plane 31 to assign to the TEIDs notified from the S-GW and notifies this to the communication apparatuses 4, thereby updating the packet routing policies at the communication apparatuses 4 (Operation S32). That is, the MME 5 updates the packet routing policies at the communication apparatuses 4 so that packets corresponding to the TEIDs notified from the S-GW will be forwarded to the virtual U-plane 31 assigned to these TEIDs.

Although the gateways 3 and the communication apparatuses 4 are illustrated as discrete apparatuses in the example of FIG. 24, they are not limited to this configuration. For example, it is also possible that a communication apparatus 4 including a virtual switch 4A and virtual gateways 3A as in the example of FIG. 5 operates in accordance with a packet routing policy notified from the control apparatus 5.

### 4.5) Routing policy update (fifth example)

A routing policy update sequence illustrated in FIG. 25 is a procedure for updating a packet routing policy in a case where a virtual gateway 3A has the functions of a communication apparatus 4 and a control apparatus 5 (e.g., the configuration illustrated in FIG. 13). That is, a gateway 3 (S-GW) shown in FIG. 25 includes a virtual switch 4A and a virtual controller 5A.

Referring to FIG. 25, the virtual controller 5A of the S-GW changes associations between communication paths and virtual U-planes 31 (Operation S40). For example, the route of a communication path #A is switched from a virtual U-plane 31 (#1) to a virtual U-plane 31 (#2).

The virtual controller 5A updates the packet routing policy at the virtual switch 4A, according to a change in associations between communication paths and virtual U-planes 31 (operation S41). For example, the virtual controller 5A instructs the virtual switch 4A to switch the route of the communication path #A associated with the virtual U-plane 31 (#1) to a route via the virtual U-plane 31 (#2).

### 4.6) Routing policy update (sixth example)

FIG. 26 shows a procedure for updating packet routing policies in the sequence ("Attach Procedure") disclosed in the LTE-related standardization specification (3GPP TS 23.401 V12.1.0). The "Attach Procedure" is disclosed in sub-chapter 5.3.2 of the above standardization specification.

A control apparatus 5 illustrated in FIG. 26 operates as a PCRF in an LTE system. That is, the functionality of the control apparatus 5 illustrated in the above-described exemplary embodiments is added to a PCRF in an LTE system. In other words, in the attach procedure (the procedure disclosed in TS 23.401) for a mobile terminal 1, the control apparatus 5 (PCRF) sets packet routing policies in communication apparatuses 4. Hereinafter a PCRF to which the functionality of the control apparatus 5 is added will be represented as "PCRF 5".

The PCRF 5 and a gateway 3 (P-GW) execute "IP-CAN (IP Connectivity) Session Establishment/Modification", if necessary, in the attach procedure (Operation S51). The "IP-CAN (IP Connectivity) Session Establishment/Modification" is a procedure for establishing an IP connection to an external network (e.g., IMS (IP Multimedia Subsystem)) and the like.

For example, in the "IP-CAN (IP Connectivity) Session Establishment/Modification" procedure, the PCRF 5 selects a virtual U-plane 31 to assign to a communication path that will be established through the attach procedure (Operation S52).

The PCRF 5 sets packet routing policies in the communication apparatuses 4 so that a packet belonging to the communication path to be established through the attach procedure will be forwarded to the virtual U-plane 31 assigned to this communication path (Operation S53). Note that the PCRF 5 is assumed to have obtained P-GW-related TEIDs.

Although the gateways 3 and the communication apparatuses 4 are illustrated as discrete apparatuses in the example of FIG. 26, they are not limited to this configuration. For example, it is also possible that a communication apparatus 4 including a virtual switch 4A and virtual gateways 3A as in the example of FIG. 5 operates in accordance with a packet routing policy notified from the control apparatus 5.

### 4.7) Routing policy update (seventh example)

It is assumed that gateways 3 in FIG. 27 are configured as virtual gateways 3A on a server. Moreover, in FIG. 27, the functionality of the control apparatus 5 illustrated in the above-described exemplary embodiments is added to a PCRF in an LTE system as in the example of FIG. 26, and such a PCRF will therefore be represented as "PCRF 5" below.

Referring to FIG. 27, packet routing policies at the communication apparatuses 4 or virtual switches 4A are updated, according to a change in the configurations of the virtual U-planes 31 in the virtual gateways 3A. A change in the configurations of the virtual C-planes 31 means, for example, the installation of a virtual U-plane 31 caused by activating a new VM, or the uninstallation of a virtual U-plane 31 caused by stopping a VM.

For a factor causing an update of the packet routing policies at the communication apparatuses 4 or virtual switches 4A, it is also possible to use, for example, the load statuses of the virtual U-planes 31 included in the virtual gateways 3A, not only a change in the configurations of the virtual U-planes 31 in the virtual gateways 3A. In this case, a communication path is switched from a virtual U-plane 31 with heavy load to a virtual U-plane 31 with light load.

The PCRF 5, when detecting a change in the configurations of the virtual U-planes 31 (Operation S60), changes associations between communication paths and virtual U-planes 31 (Operation S61). For example, when a virtual U-plane 31 is newly installed in a virtual gateway 3A, the PCRF 5 chooses a communication path to assign to this virtual U-plane 31. Moreover, for example, when a virtual U-plane 31 is uninstalled from a virtual gateway 3A, the PCRF assigns a communication path that has been assigned to this virtual U-plane 31 to another virtual U-plane 31. The PCRF 5 updates the packet routing policies at the communication apparatuses 4 or virtual switches 4A, based on the change in associations between communication paths and virtual U-planes 31 (Operation S62).

### 4.8) Routing policy update (eighth example)

In an example shown in FIG. 28, the PCRF 5 obtains information from a gateway 3 (P-GW) to update packet routing policies.

First, the PCRF 5 requests the TEID of a communication path from the P-GW (Operation S70). For example, the TEID of a communication path established through the attach procedure according to the above-mentioned standardization specification (TS 23.401) is requested.

The P-GW, when receiving the request for the TEID of a communication path, notifies the PCRF 5 of the TEID of the communication path by using a TEID response (Operation S71). For example, the P-GW notifies the PCRF of the P-GW TEID of the communication path established through the attach procedure according to the above-mentioned standardization specification (TS 23.401).

The PCRF 5 chooses a virtual U-plane 31 to assign to the TEID notified from the P-GW and updates the packet routing policies at the communication apparatuses 4 or virtual switches 4A (Operation S72). For example, these packet routing policies are updated so that a packet corresponding to the TEID notified from the P-GW will be forwarded to the virtual U-plane 31 assigned to this TEID.

Although the gateways 3 and the communication apparatuses 4 are illustrated as discrete apparatuses in the example of FIG. 28, they are not limited to this configuration. For example, it is also possible that a communication apparatus 4 including a virtual switch 4A and virtual gateways 3A as in the example of FIG. 5 operates in accordance with a packet routing policy notified from the control apparatus 5.

### 4.9) Routing policy update (ninth example)

FIG. 29 shows an example of a procedure for updating a packet routing policy in a case where a gateway 3 has the functions of a communication apparatus 4 or virtual switch 4A and a control apparatus 5 (e.g., the configuration of the virtual gateway 3A illustrated in FIG. 13). In the example of FIG. 29, the gateway 3 (P-GW) includes a virtual switch 4A and a virtual controller 5A.

For example, the virtual controller 5A of the P-GW changes associations between communication paths and virtual U-planes 31 (Operation S80). For example, the virtual controller 5A switches the route of a communication path #A from a virtual U-plane 31 (#1) to a virtual U-plane 31 (#2).

The virtual controller 5A updates the packet routing policy at the virtual switch 4A, according to the change in associations between communication paths and virtual U-planes 31 (Operation S81). For example, the virtual controller 5A instructs the virtual switch 4A to switch the route of the communication path #A associated with the virtual U-plane 31 (#1) to a route via the virtual U-plane 31 (#2).

### 4.10) Effects

According to the fourth example of the present invention, even if a change occurs in the configurations of virtual U-planes, an adaptation can be made by updating a routing policy at a communication apparatus or virtual switch. In that event, since a common IP address is assigned to the virtual U-planes or virtual C-planes as in the first exemplary embodiment, it is possible to conceal changing of a gateway 3 associated with a communication path from a mobile terminal 1, and to avoid communication path reconfiguration.

Moreover, although the fourth example shows examples of a procedure for updating a packet routing policy with respect to virtual U-planes, the present invention is also applicable to a procedure for updating a packet routing policy with respect to virtual C-planes.

Further, although the fourth examples shows examples in which a communication path is assigned to a virtual C-plane or virtual U-plane, a communication path may be assigned to a virtual gateway 3A.

### 5. Fifth example

According to a fifth example of the present invention, a control apparatus controls a communication apparatus in accordance with a control protocol known as OpenFlow. The fifth example is applicable to any of the techniques disclosed in the above-described first to fourth examples.

In OpenFlow, a communication is recognized as an end-to-end flow, and routing control and the like can be performed in units of flows. Accordingly, communication path control can be performed more flexibly by using OpenFlow in the present invention. Here, a flow is a packet group composed of a series of communication packets having a predetermined property that is identified based on information included in each packet (information on the destination address, source address and the like of a packet).

### 5.1) System

FIG. 30 illustrates a system according to the fifth exemplary embodiment of the present invention, which uses the OpenFlow technology. A communication apparatus 4B is a network switch employing the OpenFlow technology and is controlled by a control apparatus 5A in a centralized manner.

A control channel is set up between the communication apparatus 4B and the control apparatus 5A, and the control apparatus 5A controls operation of the communication apparatus 4B through the control channel. This control channel is a communication path to which measures are applied to prevent the interception, falsification and the like of communication.

The control apparatus 5A controls operation of the communication apparatus 4B by setting a processing rule (flow entry) in a flow table of the communication apparatus 4B. A flow entry includes a matching rule to be checked with information included in the header of a packet received by the communication apparatus 4B (e.g., a destination IP address, a VLAN ID and the like), and an instruction, which provides a rule for processing a packet that matches the matching rule.

### <Control apparatus>

Referring to FIG. 31, the control apparatus 5A includes a communication interface 52, a control section 51, and a flow entry DB 53. The communication interface 52 is an interface for communication with the communication apparatus 4B based on the OpenFlow protocol. The control section 51 has a function of generating information to be stored in the flow entry DB 53 and a function of controlling the communication apparatus 4B based on the information stored in the flow entry DB 53. The control apparatus 5A can set a communication path identifier (e.g., a TEID or GRE key) as a matching rule in the communication apparatus 4B. Although the OpenFlow protocol does not define a communication path identifier as information identifiable as a matching rule, it is possible in the fifth exemplary embodiment of the present invention that the control apparatus 5A sets a communication path identifier as a matching rule.

It is assumed that the flow entry DB 53 illustrated in FIG. 32 includes a matching rule, which is based on a common IP address assigned to multiple virtual U-planes 31 and on a communication path identifier, and an instruction, as illustrated in the third example.

### <Communication apparatus>

As illustrated in FIG. 33, the communication apparatus 4B includes a control section 43 and a flow entry DB 46 (i.e., a flow table). The control section 43 includes a retrieval section 44 and a processing section 45. The flow entry DB 46 stores a flow entry notified from the control apparatus 5A.

The retrieval section 44, when receiving a packet, retrieves a flow entry corresponding to the received packet from the flow entry DB 46. Extending the OpenFlow protocol, the retrieval section 44 of the communication apparatus 4B is able to search the flow table by using a communication path identifier included in a received packet as a key. Accordingly, the retrieval section 44 retrieves a flow entry corresponding to a communication path identifier in the received packet. That is, an entry is retrieved in which an identifier corresponding to a communication path identifier in the received packet is provided as a matching rule.

In a communication system of LTE or the like, a packet is encapsulated to add information such as a communication path identifier to the packet, and so an outer header is added. Accordingly, the retrieval section 44 can retrieve a flow entry corresponding to the received packet from the flow entry DB 46, based on information included in the outer header of the received packet. If a flow entry corresponding to the received packet has not yet been set in the entry DB 46, the retrieval section 44 can inquire of the control apparatus 5A about a flow entry corresponding to the received packet.

The processing section 45 processes the received packet in according with an instruction of the flow entry retrieved by the retrieval section 44. Here, the packet is forwarded to a virtual U-plane associated with the communication path identifier in accordance with the instruction as shown in FIG. 32. Note that the processing section 45 can also perform NAT on a destination address in accordance with a processing rule, for example, as in the example of FIG. 20.

### 6. Sixth example

According to a sixth example of the present invention, a control apparatus 5 groups communication paths and assigns a group including multiple communication paths to a virtual U-plane 31. The sixth example is also applicable to any of the techniques disclosed in the above-described first to fifth examples.

### 6.1) System outline

Hereinafter, an outline of the sixth example will be described with reference to FIG. 34. In a system illustrated in FIG. 34, it is assumed that the control apparatus 5 assigns communication paths in units of groups to different virtual U-planes. For example, a communication path group (1) is assigned to a virtual U-plane (#1).

At the control apparatus 5, since communication paths are managed in units of groups, it is easier to manage associations between virtual U-planes 31 and communication paths. For example, the control apparatus 5 can manage virtual U-planes 31 associated with communication paths in units of communication path groups in the routing information DB 50. Note that it is also possible that the control apparatus 5 manages the virtual U-planes 31 illustrated in the first and second examples in units of groups.

### 6.2) Grouping of communication paths

For example, the control apparatus 5 groups communication paths, based on properties of mobile terminals 1 corresponding to each communication path. The following are examples of the property of a mobile terminal 1.
Area where a mobile terminal 1 is residing (E-UTRAN Cell ID or the like)
Characteristic of charging on a mobile terminal 1 (normal charging, prepaid charging, flat rate, or the like)
Communication state of a mobile terminal 1 (whether or not a certain volume of communication is made during a certain period of time)
Operator ID (the ID of an operator of a core network to which a mobile terminal 1 is connecting)
Packet Data Network (PDN) to which a mobile terminal 1 is connecting
Service type that requires chaining after leaving a communication path
QoS characteristic
State of a mobile terminal 1 (IDLE state or CONNECTED state): the IDLE state means, for example, a state where a mobile terminal 1 is not consecutively exchanging control signals for session management and mobility management with a core network, or a state where a radio connection with a base station is released, while the CONNECTED state means, for example, a state where a mobile terminal 1 is consecutively exchanging control signals for session management and mobility management with a core network, or a state where a mobile terminal 1 is wirelessly connecting to a base station.

Note that the above-mentioned properties of a mobile terminal 1 are for illustration. It is also possible that the control apparatus 5 groups communication paths, based on any other property. For example, the control apparatus 5 can group communication paths, based on the UE (User Equipment)-related information among the "EPS Bearer Contexts" disclosed in sub-chapter 5.7 of the standardization specification (3GPP TS 23.401).

The control apparatus 5 can also group communication paths, based on the terms of a contract between a user of a mobile terminal 1 and a carrier. For example, it is possible that the control apparatus 5 groups those communication paths relevant to users who make a contract with a carrier to pay higher fees than other users (e.g., "premium subscribers"), and/or groups those communication paths relevant to users under normal contract.

The control apparatus 5 can also group communication paths, based on location-related information of a mobile terminal 1 (e.g., GPS information or information on a base station to which the mobile terminal 1 is attaching). For example, it is possible to group communication paths corresponding to those mobile terminals that are in proximity to each other, based on their location-related information.

Further, the control apparatus 5 can also group communication paths, based on QoS (Quality of Service) information of each communication path. For example, the control apparatus 5 can group communication paths, based on a QCI (Quality Class Indicator) corresponding to each communication path. For example, communication paths corresponding to QCIs whose priorities are lower than a predetermined value are grouped together, and when a new virtual U-plane 31 is installed, the communication paths belonging to this group are assigned to this new virtual U-plane 31. In this case, it is expected that delay or the like occurs in communication involved in these communication paths due to route switching, resulting in lowered users' QoE (Quality of Experience). However, lower-priority communication paths are grouped and assigned to a new virtual U-plane, whereby communication paths with which QoE would lower can be confined to such lower-priority communication paths.

The TEID of each communication path may be assigned in such a manner that the respective TEIDs of multiple communication paths belonging to a group can be collectively identified. For example, a TEID is assigned to each of multiple communication paths belonging to a group such that the TEIDs, each including 32-bit information, have the same higher 24 bits. By assigning TEIDs in this manner, the control apparatus 5 can collectively identify multiple communication paths belonging to a group, based on the higher 24-bit information of TEIDs.

Moreover, when virtual U-planes 31 are of a P-GW, the IP address of each of multiple mobile terminals 1 belonging to a group may be assigned in such a manner that the IP addresses of the mobile terminals 1 can be collectively identified. For example, an IP address is assigned to each of multiple mobile terminals 1 belonging to a group such that the IP addresses, each including 32-bit information, have the same higher 24 bits. By assigning the IP addresses of mobile terminals 1 in this manner, the control apparatus 5 can collectively identify traffics involved in multiple communication paths belonging to a group, based on the higher 24-bit information of the IP addresses of mobile terminals 1.

### 6.3) Grouped routing information

As illustrated in FIG. 35, a communication path group is identified by a group ID, and an associated virtual U-plane 31 is assigned to each ID in the routing information DB 42 of a communication apparatus 4. Note that the routing information DB 50 of the control apparatus 5 also has a similar structure to the example shown in FIG. 35.

The communication apparatus 4 searches the routing information DB 42 by using a communication path identifier in a received packet as a key, and forwards the received packet to a virtual U-plane 31 associated with the communication path identifier in the received packet.

As illustrated in FIG. 36, the control apparatus 5 can change an associated gateway in units of communication path groups. For example, the control apparatus 5 can change a gateway associated with a group to which the communication paths of communication path identifiers (A) to (C) belong, from a gateway (a) to a gateway (e).

The control apparatus 5 can greatly reduce the amount of information in a control signal for the communication apparatus 4 by changing an associated gateway in units of communication path groups. It is possible that the control apparatus 5 sends to the communication apparatus 4 an instruction to change an associated gateway by using a group ID as a key, as shown in FIG. 36.

Suppose that the routing information DB 42 of the communication apparatus 4 has a structure as shown in FIG. 8. In this case, when the control apparatus 5 changes a gateway associated with the group (1) from the gateway (a) to the gateway (e) as shown in FIG. 36, the control apparatus 5 needs to send a control signal to change an associated gateway to the communication apparatus 4, with respect to each of the communication path identifiers (A) to (C). However, the control signals are reduced to one thirds in the example of FIG. 36 if the control apparatus 5 sends a control signal by using a group ID as a key as in the sixth example.

That is, according to the sixth example, the control apparatus 5 has the advantage that the larger number of communication paths are grouped together, the more control signals can be reduced, enabling quicker gateway switching for a communication path.

FIG. 37 shows another example of the structure of the routing information DB 42. Note that the routing information DB 50 of the control apparatus 5 has a similar structure to the example shown in FIG. 37.

In the example of FIG. 37, communication path identifiers are set in such a manner that the identifiers of communication paths belonging to a group can be collectively identified. For example, communication path identifies are set in such a manner that the identifiers of communication paths belonging to the same group have a common fraction. In the example of FIG. 37, the identifiers of communication paths belonging to the same group are set so that their higher 24 bits have a common value. A common value ("X" in the example of FIG. 37) is set on the higher 24 bits of the communication path identifiers (A) to (B).

The number of entries in the routing information DB 42 can be reduced by thus setting the predetermined higher order bits of the identifiers of communication paths belonging to the same group to have a common value. Referring to FIG. 8 as a comparative example, an entry is made for each communication path identifier in the routing information DB 42. Comparing to this, in the example of FIG. 37, entries for communication paths belonging to the same group can be integrated into a single entry, and consequently the number of entries in the routing information DB 42 is reduced.

Moreover, in the example of FIG. 37, control signals to be sent from the control apparatus 5 to the communication apparatus 4 can be also reduced when changing a virtual U-plane 31 associated with a communication path. That is, the control apparatus 5 can instruct to change an associated gateway by using the higher 24 bits of communication path identifiers as a key. For example, in the example of FIG. 37, when changing a gateway associated with the communication path identifiers (A) to (C), the control apparatus 5 instructs to change a gateway associated with the value "X" of the higher 24 bits of the communication path identifiers. In other words, the control apparatus 5 need not make an instruction to change a gateway, with respect to each of the communication path identifiers (A) to (C). Accordingly, when changing a gateway, control signals to be sent from the control apparatus 5 to the communication apparatus 4 are reduced. The reduction in control signals enables quicker gateway switching.

FIG. 38 shows an example of the flow entry DB 46 of the communication apparatus 4 when a flow table of OpenFlow is used in the sixth exemplary embodiment. Note that the routing information DB 50 of the control apparatus 5 has a similar structure to the example shown in FIG. 38.

In OpenFlow, a function of regarding multiple packet processings as a single group is provided. Grouped packet processings are handled in a group table. In the example of FIG. 38, the communication apparatus 4 has the flow entry DB 46 functioning as a normal flow table and a group table 46a for the flow entry DB 46.

In the example of FIG. 38, communication path identifiers (A) to (C) belong to the same communication path group. The same processing group ID is set as "instructions" for the respective flow entries in which matching rules are the communication path identifiers (A) to (C). In the group table 46a, an "instruction" that defines grouped packet processings is set for each processing group ID. The control apparatus 5 sets the flow entry DB 46 and the group table 46a as in the example of FIG. 38 on the communication apparatus 4.

The communication apparatus 4 searches the flow entry DB 46 by using a communication path identifier in a received packet as a key. In the example of FIG. 38, the communication apparatus 4, in the case of receiving a packet with the communication path identifier (A), retrieves an entry in which "processing group ID (1)" is set as an "instruction". Subsequently, the communication apparatus 4 searches the group table 46a by using the processing group ID as a key. In the example of FIG. 38, the communication apparatus 4, in the case of receiving a packet with the communication path identifier (A), searches the group table 46a by using "processing group ID (1)" as a key and then forwards the received packet to a gateway (a) in accordance with an "instruction" corresponding to "processing group ID (1)".

When changing a virtual U-plane 31 associated with a communication path group, the control apparatus 5 sends a control signal to change an entry in the group table based on a processing group ID to the communication apparatus 4. For example, in the example of FIG. 38, when changing a gateway associated with the communication path identifiers (A) to (C) from a gateway (a) to a gateway (e), the control apparatus 5 changes an "instruction" for the entry of "processing group ID (1)", which corresponds to the identifiers (A) to (C), in the group table 46a. That is, it is sufficient for the control apparatus 5 to change an entry in the group table, and the control apparatus 5 need not change an entry in the normal flow table. In the example of FIG. 38, the control apparatus 5 need not change each of the entries corresponding to the identifiers (A) to (C), but it is sufficient to change the entry corresponding to "processing group ID (1)" in the group table 46a. Accordingly, when changing a gateway, control signals to be sent from the control apparatus 5 to the communication apparatus 4 are reduced. The reduction in control signals enables quicker gateway switching.

FIG. 39 shows another example of the flow entry DB 46 when a flow table of OpenFlow is used in the sixth exemplary embodiment. The routing information DB 50 of the control apparatus 5 has a similar structure to the example shown in FIG. 39.

An OpenFlow switch is able to have multiple flow tables. In the example of FIG. 39, the communication apparatus 4 has multiple flow entry DBs 46 (a flow table 46-1 and a flow table 46-2). For example, the communication apparatus 4, when receiving a packet, searches the multiple flow tables in a predetermined order. For example, in the example of FIG. 39, the communication apparatus 4 searches the flow table 46-1 and then searches the flow table 46-2.

In the example of FIG. 39, communication path identifiers (A) to (C) belong to the same communication path group. In the flow table 46-1, packet processing for adding "ID (1)" to the header of a packet is set as "instructions" for the respective flow entries in which matching rules are the communication path identifiers (A) to (C). Such an ID to be added to a packet is set for each communication path group.

In the flow table 46-2, an "instruction" that defines packet processing corresponding to grouped communication paths is set for each ID added to a packet. In the example of FIG. 39, for an "instruction" corresponding to "ID (1)", packet processing for deleting "ID (1)" from the header of the packet and forwarding the packet to a gateway (a) is set.

It is assumed that the control apparatus 5 has set the flow entry DBs 46 as in the example of FIG. 39 on the communication apparatus 4. In this case, the communication apparatus 4 searches a flow entry DB 46 (the flow table 46-1) by using a communication path identifier in a received packet as a key. Specifically, the communication apparatus 4, in the case of receiving a packet with the communication path identifier (A), retrieves an entry in which an "instruction" indicating to add "ID (1)" to the header of a packet is set. Next, the communication apparatus 4 searches the other flow entry DB 46 (the flow table 46-2) by using "ID (1)" added to the packet as a key, and then in accordance with an instruction corresponding to "ID (1)", deletes the ID from the header and forwards the received packet to the gateway (a).

When changing a virtual U-plane 31 associated with a communication path group, the control apparatus 5 sends a control signal for changing an entry based on an ID corresponding to the communication path group to the communication apparatus 4. For example, when changing a gateway associated with the communication path identifiers (A) to (C) from the gateway (a) to a gateway (e), the control apparatus 5 changes an "instruction" for the entry of "ID (1)", which corresponds to the identifiers (A) to (C), in the flow entry DB 46 (flow table 46-2). That is, it is sufficient for the control apparatus 5 to change an entry corresponding to the ID of a communication path group, and the control apparatus 5 need not change respective entries corresponding to communication path identifiers. In the example of FIG. 39, the control apparatus 5 need not change each of the entries corresponding to the identifiers (A) to (C), but it is sufficient to change the entry corresponding to "ID (1)" in the flow entry DB 46 (flow table 46-2). Accordingly, when changing a gateway, control signals to be sent from the control apparatus 5 to the communication apparatus 4 are reduced. The reduction in control signals enables quicker gateway switching.

Although the above-described examples of FIGS. 35 to 39 illustrate that the communication apparatus 4 identifies a communication path group based on communication path identifiers, the present invention is not limited to such examples. For example, it is also possible that the control apparatus 5 groups communication paths based on other information (e.g., IP addresses or PDNs), and that the communication apparatus 4 identifies a communication path group based on other information (e.g., IP addresses or PDNs).

### 7. Seventh example

Next, a seventh example of the present invention will be described with reference to examples shown in FIGS. 40 to 46. The seventh example is also applicable to any of the techniques disclosed in the above-described first to sixth examples.

### 7.1) System (first example)

As illustrated in FIG. 40, a control apparatus 5 selects a virtual U-plane 31 to assign to a communication path in accordance with a policy for selecting a virtual U-plane 31 to be associated with a communication path. For example, it is possible to dynamically select a virtual U-plane 31 to be associated with a communication path in accordance with the policy, depending on the installation/uninstallation of a virtual U-plane 31. Moreover, the control apparatus 5 can dynamically change a virtual U-plane 31 to assign to a communication path, depending on a change in conditions relating to the policy. Note that although examples of the policy for selecting a virtual U-plane 31 will be shown in the seventh exemplary embodiment, it is also possible to use such policies for selecting a gateway 3 as illustrated in the first and second exemplary embodiments.

Referring to FIG. 41, the control apparatus 5 has a policy DB 54, in addition to the example of the configuration of the control apparatus 5 illustrated in FIG. 7. The control section 51 can refer to the policy DB 54 and select a virtual U-plane 31 to be associated with a communication path. For example, a policy stored in the policy DB 54 is configured such that a virtual U-plane 31 responding to a request for communication path-related communication quality will be selected. For example, a policy stored in the policy DB 54 may be configured such that a virtual U-plane 31 will be selected for each communication path group, in response to a request for communication path-related communication quality. For example, the control section 51 refers to the policy DB 54 in response to the installation of a virtual U-plane 31 and selects a virtual U-plane 31 to be associated with a communication path. The control section 51 selects a virtual U-plane 31 to be associated with a communication path and adds an entry to the routing information DB 50. The control section 51, based on the routing information DB 50, notifies a communication apparatus 4 of associations between communication paths and virtual U-planes 31.

According to the policy DB 54 illustrated in FIG. 42, a virtual U-plane 31 to be associated with a communication path is chosen based on a policy concerning QCIs corresponding to communication paths. For example, the control apparatus 5 can obtain the QCI of a communication path from a MME.

In the example of FIG. 42, priorities are set on communication paths corresponding to the individual QCIs, based on the values of QCIs. The control apparatus 5 selects a virtual U-plane 31 to be associated with a communication path, based on the priority, which is a condition to select a virtual U-plane 31. For example, when a new virtual U-plane 31 is installed in the communication system, the control apparatus 5 associates a communication path with the newly installed virtual U-plane 31, in ascending order of priority, starting from a communication path corresponding to a QCI that is set for a "LOW" priority. That is, the control apparatus 5 determines an association between the newly installed virtual plane 31 and a communication path, based on the order of QCI priority. Changing of a virtual U-plane 31 associated with a communication path may possibly cause communication delay or the like. However, changing of a virtual U-plane 31 associated with a communication path is performed starting from a communication path of a lower-priority QCI in order, whereby the lowering of the communication quality of a communication path of a higher-priority QCI is suppressed. Thus, the control apparatus 5 can select a virtual U-plane 31 responding to a request for quality corresponding to a QCI.

In the example of FIG. 42, priorities for the QCIs include "HIGH", "MID" and "LOW". However, a method for giving priorities is not limited to the example of FIG. 42. For example, a value indicating a priority may be given to each QCI. The control apparatus 5 can choose a gateway to be associated with a communication path, based on the priority of each QCI. For example, it is possible that the control apparatus 5 associates a communication path corresponding to a QCI given a priority of a predetermined value or higher, with a virtual U-plane 31 that can secure a communication bandwidth. Moreover, for example, it is possible that the control apparatus 5 associates a communication path corresponding to a QCI given a priority of a predetermined value or higher, with a virtual U-plane 31 on which operation load is a predetermined value or lower.

The control apparatus 5 can choose a gateway to be associated with a communication path, for each QCI. For example, the control apparatus 5 chooses a communication path to be associated with a certain gateway, based on the QCI. In this case, the QCIs of multiple communication paths assigned to the certain gateway are identical.

### 7.2) System (second example)

As illustrated in FIG. 43, the control apparatus 5 can also choose a virtual U-plane 31 to be associated with a communication path, based on the communication volume or communication duration of a communication path. The control apparatus 5 can obtain the communication volumes or communication durations of communication paths by monitoring virtual U-planes 31.

In the policy DB 54 illustrated in FIG. 44, a threshold of communication volume or communication duration is set to correspond to a communication path identifier. Note that in the policy DB 54 shown in FIG. 44, a threshold may be set for each communication path group, as in the sixth example. The control apparatus 5 selects a virtual U-plane 31 to be associated with a communication path, based on the threshold of communication volume or communication duration, which is a condition to select a virtual U-plane 31. Here, a virtual U-plane 31 to be associated with a communication path is chosen based on a policy concerning the communication volume or communication duration of a communication path.

For example, when a user of a mobile terminal 1 makes a prepaid charging contract with a carrier, the user can make communication up to a communication volume corresponding to a prepaid fee (i.e., a threshold of communication volume). Information about the contract between the user of the mobile terminal 1 and the carrier is set in the control apparatus 5. When switching a communication path depending on the installation/uninstallation of a virtual U-plane 31, the control apparatus 5 preferentially switches a communication path that still has a margin in communication volume to reach the threshold set in the policy DB 54. In the example of FIG. 44, a communication volume ("X" bytes) is set as a threshold for a communication path of communication path identifier "A" in the policy DB 54. For example, the control apparatus 5 monitors the communication volume of the communication path of identifier "A" at a virtual U-plane 31 functioning as a P-GW and, if the difference between that communication volume and the threshold ("X" bytes) is not greater than a predetermined value, excludes this communication path from switching targets.

By switching a communication path as described above, it is possible to suppress the possibility that the communication volume of a communication path exceeds the threshold during communication path switching, which results in an error in billing management. The control apparatus 5 can select a virtual U-plane 31 responding to a request for quality of communication service.

For example, when a user of a mobile terminal 1 makes a 2-step charging contract with a carrier, the user pays a communication fee according to the communication volume before the communication volume exceeds a specified threshold, and after the communication volume exceeds the threshold, the communication fee becomes flat, regardless of the communication volume. Once the threshold is exceeded, it is not necessary to accurately monitor the communication volume. Accordingly, when switching a communication path depending on the installation/uninstallation of a virtual U-plane 31, the control apparatus 5 preferentially switches a communication path whose communication volume exceeds the threshold.

In the example of FIG. 44, it is assumed that a mobile terminal 1 corresponding to a communication path of communication path identifier "D" has made a 2-step charging contract with a carrier. Information about the contract between a user of this mobile terminal 1 and the carrier is set in the control apparatus 5. When switching a communication path depending on the installation/uninstallation of a virtual U-plane 31, the control apparatus 5 preferentially switches a communication path whose communication volume exceeds a threshold set in the policy DB 54. For example, in the example of FIG. 44, a communication volume ("Y" bytes) is set as a threshold for the communication path of communication path identifier "D" in the policy DB 54. For example, the control apparatus 5 monitors the communication volume of the communication path of identifier "D" at a virtual U-plane 31 functioning as a P-GW and, if the communication volume exceeds the threshold ("Y" bytes), switches this communication path.

As described above, by switching a communication path whose communication volume need no longer be managed for charging, it is possible to suppress the possibility that an error occurs in billing management during communication path switching, allowing the control apparatus 5 to select a virtual U-plane 31 in response to a request for quality of communication service.

For example, when a user of a mobile terminal 1 makes a contract for communication having a time limit with a carrier, the user can make communication within the limit specified in the contract (e.g., within 24 hours). When switching a communication path depending on the installation/uninstallation of a virtual U-plane 31, the control apparatus 5 preferentially switches a bearer that still has leeway to reach the limit specified in the contract (e.g., a bearer that has an hour or more leeway to reach the limit). By switching a bearer in this manner, it is possible to suppress the possibility that the limit is exceeded while bearer switching is performed, which results in an occurrence of communication that exceeds the contracted limit.

In the example of FIG. 44, it is assumed that a mobile terminal 1 corresponding to a communication path of communication path identifier "B" has made a 24-hour limit contract (communication is disabled after a lapse of 24 hours) with a carrier. Information about the contract between a user of this mobile terminal 1 and the carrier is set in the control apparatus 5. When switching a communication path depending on the installation/uninstallation of a virtual U-plane 31, the control apparatus 5 excludes from switching targets a communication path whose communication duration exceeds a threshold set in the policy DB 54. In the example of FIG. 44, a communication duration ("23H") is set as a threshold for the communication path of communication path identifier "B" in the policy DB 54. For example, the control apparatus 5 monitors the communication duration of the communication path of identifier "B" at a virtual U-plane 31 functioning as a P-GW and, if the communication duration exceeds the threshold ("23H"), excludes this communication path from switching targets.

By switching a communication path as described above, it is possible to suppress the possibility that the communication duration of a communication path exceeds a contracted time limit during communication path switching, which results in an error in billing management.

### 7.3) System (third example)

The control apparatus 5 can select a virtual U-plane 31 to be associated with a communication path, based on the frequency of activating a virtual U-plane 31.

As illustrated in FIG. 45, the control apparatus 5 can select a virtual U-plane 31 to be associated with a communication path, based on the frequency of installing/uninstalling (or the frequency of activating/deactivating) a virtual U-plane 31. The control apparatus 5 selects a virtual U-plane 31 to be associated with a communication path, based on the frequency of installation/uninstallation, which is a condition to select a virtual U-plane 31. The control apparatus 5 can obtain the frequency of installation/uninstallation by monitoring virtual U-planes 31.

In the policy DB 54 illustrated in FIG. 46, a priority is set for each communication path identifier. Note that in the policy DB 54 shown in FIG. 46, a priority may be set for each communication path group as in the sixth exemplary embodiment. The control apparatus 5 selects a virtual U-plane 31 to be associated with a communication path, based on a threshold of priority, which is a condition to select a virtual P-plane 31. In the example of FIG. 46, the control apparatus 5 selects a virtual U-plane 31 to be associated with a communication path, based on a policy concerning the priorities of communication path identifiers.

For example, the control apparatus 5 monitors the frequencies of installing/uninstalling virtual U-planes 31. For example, the control apparatus 5 associates a lower-priority communication path (e.g., a communication path given a "LOW" priority in the policy DB 54), with a virtual U-plane 31 that is installed/uninstalled at higher frequency. A communication path assigned to a virtual U-plane 31 that is installed/uninstalled at higher frequency could highly frequently change a virtual U-plane 31 it connects to, and its communication quality could be highly possibly degraded. Accordingly, a lower-priority communication path is associated with a virtual U-plane that is installed/uninstalled at higher frequency, whereby the control apparatus 5 can suppress degradation in the communication quality of a higher-priority communication path.

It is also possible that the control apparatus 5 chooses a virtual U-plane 31 to be associated with a communication path by using a policy based on an SLA (Service Level Agreement) that is required of communication path-related services. For example, the control apparatus 5, based on the policy, checks a communication bandwidth required by an SLA and selects a virtual U-plane 31 that can secure the communication bandwidth responsive to the SLA. For example, the control apparatus 5 can manage communication bandwidths used by the individual virtual U-planes 31 and maximum communication bandwidths that can be secured by the individual virtual U-planes 31. The control apparatus 5 can select a gateway in which an available bandwidth of each virtual U-plane 31 meets an SLA's requirement. The control apparatus 5 can associate a communication path of which an SLA requires a predetermined value or higher, with a virtual U-plane 31 the operation load on which is a predetermined value or lower.

In the seventh example, the policy DB 54 can store multiple types of policies. For example, the policy DB 54 can store the policy illustrated in FIG. 42 and the policy illustrated in FIG. 44. The control apparatus 5 can select a virtual U-plane 31, based on the multiple types of policies stored in the policy DB 54.

### 8. Eighth example

Next, an eighth example of the present invention will be described with reference to examples shown in FIGS. 47 to 50. The eighth example is also applicable to any of the techniques disclosed in the above-described first to seventh example.

A communication system according to the eighth example is provided with a management apparatus 6 which generates control information used for a control apparatus to select a virtual U-plane 31 to be associated with a communication path. The operator of the communication system manages the control apparatus via the management apparatus 6. It is expected that multiple control apparatuses are distributed in a communication system, depending on the scale of a communication system. In such a case, the operator of the communication system can efficiently manage the communication system by managing the control apparatuses via the management apparatus 6. In addition, the management apparatus 6 notifies control information to the control apparatus 5, whereby the control apparatus 5, in response to the dynamical installation of a virtual U-plane 31, can choose a communication path to be associated with the installed virtual U-plane 31 by referring to the control information.

Note that although an example of the management apparatus 6 for controlling associations between communication paths and virtual U-planes 31 is shown in the eighth example, it is also possible to use the management apparatus 6 to control associations between gateways 3 and communication paths as illustrated in the first and second examples.

### 8.1) Management apparatus (first example)

Referring to FIG. 47, the management apparatus 6 includes a policy generation section 60 and an interface 61, and communicates with the control apparatus 5 (or the control apparatus 5A) via the interface 61.

The policy generation section 60 can generate control information for the control apparatus 5 to select a virtual U-plane to be associated with a communication path. For example, the policy generation section 60 generates control information such that a virtual U-plane 31 responding to a request for communication path-related communication quality will be selected. For example, a policy to be stored in the policy DB 54 illustrated in the seventh exemplary embodiment is generated as control information. Moreover, the policy generation section 60 can generate information to be stored in the policy DB 54 (e.g., the information illustrated in FIG. 42, 44 or 46), in response to an operation of the operator of the communication system. Moreover, the policy generation section 60 can generate multiple types of policies. The policy generation section 60 notifies the generated information to the control apparatus 5 via the interface 61. The control apparatus 5 stores a policy notified from the management apparatus 6 in the policy DB 54 and controls a communication apparatus 4 based on this policy DB 54.

It is also possible that the policy generation section 60 generates control information for the control apparatus 5 to select a virtual U-plane 31 to be associated with communication paths, for each communication path group. For example, the policy generation section 60 can generate information as illustrated in FIG. 42, 44 or 46 for each communication path group. For example, the policy generation section 60 can generate a policy including priorities according to QCIs (the policy illustrated in FIG. 42), for each communication path group. For example, the policy generation section 60 can generate a threshold as illustrated in FIG. 44, for each communication path group. For example, the policy generation section 60 can generate a priority as illustrated in FIG. 46, for each communication path group.

The policy generation section 60 may also generate a policy for associating a communication path to be newly configured through the attach procedure disclosed in the fourth exemplary embodiment, with a virtual U-plane 31. The following are examples of the policy for associating a communication path to be newly configured through the attach procedure with a virtual U-plane 31.

(1) Round robin: The policy generation section 60 generates a policy for choosing, in a round robin manner, a virtual U-plane 31 to be associated with a communication path from among virtual U-planes 31 running in the communication system. For example, the policy generation section 60 generates a policy for choosing, in a round robin manner, a virtual U-plane 31 to be associated with a communication path, based on the load on each virtual U-plane 31.
(2) Location of mobile terminal 1: The policy generation section 60 generates a policy, based on location-related information of a mobile terminal 1 such as E-UTRAN cell ID. For example, the policy generation section 60 generates a policy for choosing a virtual U-plane 31 to be associated with a communication path, based on at least one of the conditions illustrated below.
   · Communication path corresponding to a predetermined cell ID
   · Communication path corresponding to any one of multiple cell IDs (e.g., a communication path corresponding to any one of multiple neighboring cells)
   · Communication path corresponding to a predetermined base station
   · Communication path corresponding to any one of multiple base stations (e.g., a communication path corresponding to any one of multiple neighboring base stations)

For example, the policy generation section 60 generates a policy indicating that a communication path corresponding to cell ID "a" is associated with a virtual gateway "A". For example, the policy generation section 60 generates a policy indicating that a communication path corresponding to cell ID "b" or "c" is associated with a virtual gateway "B". For example, the policy generation section 60 generates a policy indicating that a communication path corresponding to cell ID "d" is associated with a virtual gateway selected from among virtual gateways "C", "D" and "E" in a round robin manner.

(3) QoS characteristic of communication path: The policy generation section 60 generates a policy, based on QoS characteristic-related information of a communication path. For example, the policy generation section 60 generates a policy for choosing a virtual U-plane 31 to be associated with a communication path, based on at least one of the conditions illustrated below.
· Communication path corresponding to a predetermined QCI value
· Communication path corresponding to any one of multiple QCI values

For example, the policy generation section 60 generates a policy indicating that a communication path of a QCI value of "5" is associated with a virtual gateway "A". For example, the policy generation section 60 generates a policy indicating that a communication path of a QCI value of "1" or "3" is associated with a virtual gateway "B". For example, the policy generation section 60 generates a policy indicating that a communication path of a QCI value of "4" is associated with a virtual gateway selected from among virtual gateways "C", "D" and "E" in a round robin manner.

(4) Combination of location of mobile terminal 1 and QoS characteristic of communication path: The policy generation section 60 may generate a policy for choosing a virtual U-plane 31 to be associated with a communication path, based on combinations of the above-described conditions (2) and (3) (e.g., any of the conditions illustrated below).
· Communication path corresponding to a predetermined QCI value and to a predetermined cell ID (or predetermined base station)
· Communication path corresponding to a predetermined QCI value and to any one of multiple cell IDs (or any one of multiple base stations)
· Communication path corresponding to any one of multiple QCI values and to a predetermined cell ID (or predetermined base station)
· Corresponding to any one of multiple QCI values and to any one of multiple cell IDs (or any one of multiple base stations)

(5) Communication path group: The policy generation section 60 may generate a policy for choosing a virtual U-plane 31 to be associated with a communication path group, based on a property of a communication path group as illustrated in the sixth exemplary embodiment. The following are examples of a property of a communication path group.
· Group based on the area where mobile terminals 1 are residing (E-UTRAN cell ID or the like)
· Group based on the characteristic of charging on mobile terminals 1 (normal charging, prepaid charging, flat rate or the like)
· Communication states of mobile terminals 1 (whether or not a predefined volume or more of communication is made during a predefined period of time)
· Group based on the operator ID (the ID of the operator of a core network to which mobile terminals 1 are connecting)
· Packet Data Network (PDN) to which mobile terminals 1 are connecting
· Service type that requires chaining after leaving communication paths
· QoS characteristic
· States of mobile terminals 1 (IDLE state or CONNECTED state)

For example, when a communication path belongs to a group whose charging characteristic is prepaid charging, the policy generation section 60 generates a policy indicating that the communication path is associated with a virtual gateway "A".

As described above, the management apparatus 6 generates and notifies a policy to the control apparatus 5, and thereby can cause the control apparatus 5 to operate in accordance with the policy. Moreover, the management apparatus 6 can also manipulate the routing information DB 50 of the control apparatus 5, which will be described below.

### 8.2) Management apparatus (second example)

A management apparatus 6 illustrated in FIG. 48 includes a UI (User Interface) display section 62, a control section 63, and a display 64, in addition to the configuration shown in FIG. 47.

The UI display section 62 displays a user interface like an example shown in FIG. 49. The operator of the communication system can manipulate the user interface illustrated in FIG. 49 to operate associations between communication paths and virtual gateways.

The control section 63 operates the routing information DB 50 of the control apparatus 5, based on associations between communication paths and virtual gateways that are determined according to the manipulation of the operator. For example, it is assumed that the operator has changed a virtual gateway associated with a communication path of communication path identifier "A" from a virtual gateway (a) to a virtual gateway (e). In this case, the control section 63 operates the routing information DB 50 to change a virtual gateway associated with communication path identifier "A" from the virtual gateway (a) to the virtual gateway (e).

FIG. 49 shows an example of a GUI (Graphical User Interface) 700 that the UI display section 62 displays on the display 64. The GUI 700 includes a network display window 701 and an operation window 702. The network display window 701 displays an outline of the network structure of the communication system.

Referring to FIG. 49, when the operator clicks a network entity (e.g., an S-GW) displayed on the network display window 701, the operation window 702 displays information concerning virtual U-planes 31 included in the clicked entity.

For example, the operation window 702 can display network objects including communication paths, virtual U-planes 31 included in a gateway, and servers 33 corresponding to the individual virtual U-planes 31.

The operation window 702 can display information concerning properties of network objects including communication paths and virtual U-planes 31. For example, the operator can select a virtual U-plane 31 to be associated with a communication path by referring to the information concerning properties of network objects. For example, the operation window 702 can display the IDs of the virtual U-planes 31 and the servers 33 and the loads on the virtual U-planes 31 and the servers 33. Further, for example, the operation window 702 can display the number of communication paths associated with each virtual U-plane 31, the throughputs of the virtual U-planes 31, the available communication bandwidths of the virtual U-planes 31, or the like, as properties of network objects. For example, the operation window 702 can display the QCIs of the communication paths, SLAs on the services of the communication paths, or the like, as properties of network objects. It is also possible that the operation window 702 displays multiple properties. The operation window 702 can display a communication path or communication paths configured at each virtual U-plane 31.

The operator can switch a communication path displayed on the window 702 to another virtual U-plane 31 by a drag & drop operation. For example, the operator can switch a communication path to a virtual U-plane 31 with lighter load by referring to the loads on the virtual U-planes 31 and the servers 33 displayed on the window 702.

In response to an operation of the operator, the control section 63 can make a change to associations between communication paths and virtual U-planes 31 by manipulating the routing information DB 50 of the control apparatus 5. For example, the control section 63 can make a change to the routing information DB 50 by generating control information concerning associations between communication paths and virtual U-planes 31, depending on the combination of network objects, and notifying the generated control information to the control apparatus 5. For example, the control apparatus 5, in response to the change to the routing information DB 50, notifies the communication apparatus 4 of the change in associations between communication paths and virtual U-planes 31.

### 8.3) Management apparatus (third example)

A management apparatus 6 illustrated in FIG. 50 can directly control the routing information DB 50 of the control apparatus 5, without generating information to be stored in the policy DB 54. The management apparatus 6 includes a routing information generation section 65 and an interface 61.

The routing information generation section 65 can generate control information for the control apparatus 5 to select a virtual U-plane 31 to be associated with a communication path. For example, the routing information generation section 65 generates control information such that a virtual U-plane 31 responding to a request for the communication quality of a communication path will be selected. For example, the routing information generation section 65 generates control information in response to the installation of a virtual U-plane 31. Information to be stored in the routing information DB 50 of the control apparatus 5 is generated as control information. The routing information generation section 65 determines an association between a communication path and a gateway. The routing information generation section 65 sets the association between the communication path and the gateway in the routing information DB 50 of the control apparatus 5 via the interface 61.

It is also possible that the routing information generation section 65 generates control information for managing gateways associated with communication paths in units of communication path groups (e.g., a database structured as illustrated in the sixth example).

For example, the routing information generation section 65 can generate information to be set in the routing information DB 50, based on a policy as illustrated in the seventh example. For example, the routing information generation section 65 can generate information to be set in the routing information DB 50, based on the policy illustrated in FIG. 42, 44 or 46. For example, the routing information generation section 65 can collect, via the control apparatus 5, information (e.g., the communication volume or communication duration of a communication path, the frequency of installing a virtual gateway, or the like) required to generate information to be set in the routing information DB 50. For example, the routing information generation section 65 can generate information to be set in the routing information DB 50, based on a policy as illustrated in the eighth example (any of the above-described policies (1) to (5)).

### 9. Ninth example

Hereinafter, a ninth example will be described with reference to examples shown in FIGS. 51 to 56. The ninth example is also applicable to any of the techniques disclosed in the above-described first to eighth examples.

In the ninth example an operator groups and manages communication paths via a management apparatus 6. By grouping communication paths, the operator can efficiently perform management and the like of associations between communication paths and virtual U-planes 31. Moreover, the management apparatus 6 groups and visualizes communication paths, apart from the grouping for the control performed by the control apparatus 5 in the sixth example whereby the operator can efficiently manage communication paths and virtual U-planes 31.

Note that although an example of the management apparatus 6 for controlling associations between communication paths and virtual U-planes 31 is shown in the ninth example, it is also possible to use the management apparatus 6 to control associations between gateways 3 and communication paths as illustrated in the first and second examples.

According to a GUI 700 illustrated in FIG. 51, an operator can group communication paths by using the GUI 700 displayed by the management apparatus 6.

An operation window 702 illustrated in FIG. 51 displays aggregation policies 703 for aggregating (grouping) communication paths configured at a virtual gateway 3. For example, the aggregation policies 703 are set, based on properties of communication paths. The following are examples of the aggregation policies 703.
· Area where a mobile terminal 1 is residing (E-UTRAN cell ID or the like)
· Characteristic of charging on a mobile terminal 1 (normal charging, prepaid charging, flat rate, or the like)
· Operator ID (the ID of the operator of a core network to which a mobile terminal 1 is connecting)
· State of a mobile terminal 1 (IDLE state or CONNECTED state)
· QoS characteristic
· Packet Data Network (PDNs) to which a mobile terminal 1 is connecting
· Service type that requires chaining after leaving a communication path

The management apparatus 6 can aggregate communication paths, based on any of the above examples of the aggregation policies 703. For the aggregation policies 703, it is also possible to use, for example, the policies disclosed in the sixth exemplary embodiment as conditions to group communication paths.

For example, the control section 63 of the management apparatus 6, in response to an operator's clicking any one of the policies displayed in the aggregation policies 703, aggregates communication paths based on the clicked policy. For example, the control section 63 aggregates communication paths that have the same property under an aggregation policy. For example, when "QoS CHARACTERISTIC" is selected as an aggregation policy, the control section 63 aggregates those communication paths having the same QCI value, as illustrated in FIG. 51.

For example, the control section 63, in response to a clicking of "RELEASE AGGREGATION" displayed in the aggregation policies 703, releases the aggregation of communication paths and displays each of the communication paths discretely.

An operator's management costs can be greatly reduced by aggregating communication paths based on an aggregation policy. For example, when communication paths are aggregated based on QCIs as in the example of FIG. 51, the number of communication paths managed on the GUI 700 will be aggregated into a maximum of nine types (nine QCIs are defined by standardization specifications of 3GPP and the like) on each virtual gateway 3. By aggregating communication paths based on an aggregation policy, it is possible to reduce in a pseudo manner the number of communication paths managed by an operator, so that the operator's management costs are greatly reduced.

The control section 63 can change the routing information DB 50 of the control apparatus 5, in response to an operator's aggregating communication paths based on an aggregation policy.

FIG. 52 shows an example of the routing information DB 50 when communication paths are aggregated based on QCIs. The control section 63 aggregates communication paths based on properties under an aggregation policy (QCIs in the example of FIG. 52) and establishes a correspondence between each of the aggregated communication paths and a property of the aggregation policy ("Group ID" in FIG. 52). In the example of FIG. 52, the control section 63 changes the routing information DB 50 so that correspondences are made between the communication paths aggregated based on QCIs and QCI values ("Group ID"). The management apparatus 6 changes the routing information DB 50 as described above, whereby the control apparatus 5 will be able to control the communication apparatus 4 in the manner illustrated in the sixth exemplary embodiment.

For example, the control section 63 of the management apparatus 6 or the control section 51 of the control apparatus 5 can perform communication path reconfiguration when the state of a communication path is changed from a property under an aggregation policy. Communication path reconfiguration means that after a communication path is released, the communication path is configured again. For example, when the state of a communication path is changed from a property under an aggregation policy, the control section 63 or 51 can perform reconfiguration of this communication path. For example, when the communication volume per unit period of a mobile terminal 1 exceeds a predefined value, the control section 63 or 51 prompts reconfiguration of the relevant communication path. Moreover, the routing information DB 50 may be also changed as necessary. Reconfiguration of a communication path allows the communication path to belong to a group suitable to its current state. The control apparatus 5 or management apparatus 6 allows a communication path to belong to a group suitable to its current state in this manner, whereby it is possible to prevent it from occurring that the load of processing for reassigning a communication path to a virtual U-plane 31 becomes excessively heavy when a virtual U-plane 31 is installed/uninstalled. This is because if a communication path exists that does not belong to a group suitable for its current state, individual control of this communication path is needed, apart from grouping-based control.

FIG. 53 shows an example in which an operator manages aggregated communication paths. For example, the operator selects aggregated communication paths and drags & drops the selected communication paths onto another virtual gateway 3, thereby changing an association between the aggregated communication paths and a virtual gateway 3. In response to the change of an association between the aggregated communication paths and a virtual gateway 3, the control section 63 changes the routing information DB 50 of the control apparatus 5.

FIG. 54 shows an example in which the control section 63 changes the routing information DB 50. The control section 63 changes a gateway associated with a group by using a group ID (an ID corresponding to a QCI value in the example of FIG. 54) as a key. In the examples of FIGS. 53 and 54, the control section 63 changes a virtual gateway 3 associated with aggregated communication paths of QCI value "3" from a gateway of ID "X" to a gateway of ID "XX". The control apparatus 5, in response to the change in the routing information DB 50, changes the routing information DB 42 of the communication apparatus 4, for example, in the manner illustrated in the sixth exemplary embodiment.

As described above, the control section 63 can change a gateway associated with aggregated communication paths as a single unit by using a group ID as a key. Accordingly, the control section 63 can greatly reduce the amounts of control signals and time required to change a gateway, compared with a case where a gateway corresponding to each entry in the routing information DB 50 is changed.

FIG. 55 shows an example in which the management apparatus 6 aggregates communication paths, based on multiple aggregation policies. In the example of FIG. 55, communication paths are aggregated based on the QCIs of communication paths and the states of mobile terminals 1.

Referring to FIG. 55, an operator selects communication paths aggregated based on a QCI value ("1. CLICK") and then selects another aggregation policy ("2. CLICK"). Based on the operator's operations, the management apparatus 6 displays the aggregated communication paths of a QCI value of "3" in such a manner that they are divided according to the states of mobile terminal 1 (IDLE state or CONNECTED state).

The control section 63 changes the routing information 50 of the control apparatus 5, in response to the communication paths being aggregated based on the multiple aggregation policies. FIG. 56 shows an example of the routing information DB 50 based on the multiple aggregation policies. The control section 63, in response to the further addition of the aggregation policy concerning the states of mobile terminals 1 to the aggregated communication paths of a QCI value of "3" as in the example of FIG. 55, changes the routing information DB 50 as in the example of FIG. 56.

Examples of the present invention have been described hereinabove. However, the present invention is not limited to each of the above-described examples. That is, the present invention incorporates the entire disclosure of this description. Furthermore, the present invention can be also applied to the technical field of SDN (Software-Defined Network).

### [Industrial Applicability]

The present invention is applicable to communication systems in general in which communication are performed over communication paths.

### [Reference Signs List]

- 1: Terminal
- 2: Base station
- 3: Gateway
- 3A: Virtual gateway
- 4: Communication apparatus
- 4A: Virtual switch
- 4B: Communication apparatus
- 5: Control apparatus
- 5A: Control apparatus (virtual controller)
- 6: Management apparatus
- 30: Virtual C-plane
- 31: Virtual U-plane
- 32: Interface
- 33: Server
- 40: Communication path identification section
- 41: Switching section
- 42: Routing information DB
- 43: Control section
- 44: Retrieval section
- 45: Processing section
- 46: Flow entry DB
- 50: Routing information DB
- 51: Control section
- 52: Communication interface
- 53: Flow entry DB
- 54: Policy DB
- 60: Policy generation section
- 61: Interface
- 62: UI display section
- 63: Control section
- 64: Display
- 65: Routing information generation section
- 700: GUI
- 701: Network display window
- 702: Operation window
- 703: Aggregation policies

## Claims

1. A communication apparatus (4) which performs communication over a communication path configured in a network, the communication apparatus (4) comprising:
a communication means for communicating with mobile terminals (1) and gateways (3) on the network;
a routing information database (42) for managing associations between the gateways (3) and communication paths, wherein each of the gateways (3) has a function of terminating a communication path;
a path identifying means (40) that is configured to identify a first communication path to which a received packet belongs based on path identification information of the packet; and
a packet forwarding means (41) that is configured to:
refer to the routing information database (42) and, in case of uplink communication, forward the received packet to a first gateway (3) associated with the first communication path, and in case of downlink communication, forward the received packet to a mobile terminal (1) corresponding to the first communication path;
**characterized in that**
the routing information database (42) is configured to manage said associations such that respective gateways (3) terminating the first communication path and a second communication path are assigned a common address; and
the packet forwarding means (41) is configured to: i) in case of uplink communication from a mobile terminal (1) using the first communication path, switch a gateway (3) to which the received packet is forwarded by switching the first communication path to the second communication path, and forward the received packet to one of the at least two first gateways (3) using the second communication path to conceal the switching of the gateway (3) from the mobile terminal (1); and ii) in case of downlink communication using the second communication path, forward the received packet to the mobile terminal (1) using the common address.

2. The communication apparatus (4) according to claim 1, **characterized in that** the gateways (3) are configured by using software on a processor.

3. The communication apparatus (4) according to claim 1 or 2, **characterized by** further comprising:
a control section which is configured to activate the gateway (3) configured by using software on the communication apparatus (4),
wherein the packet forwarding means (41) is configured to forward the received packet to one of the at least two first gateways (3).

4. The communication apparatus (4) according to any one of claims 1 to 3, **characterized in that** the packet forwarding means (41) is configured to forward the received packet based on an instruction notified from a control apparatus which manages associations between the communication paths and the gateways (3).

5. The communication apparatus (4) according to any one of claims 1 to 3, **characterized by** further comprising:
a control section that is configured to activate a controller for managing associations between the communication paths and the gateways (3) on the communication apparatus (4),
wherein the packet forwarding means (41) is configured to forward the received packet based on an instruction notified from the controller.

6. The communication apparatus (4) according to any one of claims 1 to 3, **characterized by** further comprising:
a control section that is configured to activate a controller on the communication apparatus (4), wherein the controller is configured to notify an instruction for switching a route of the received packet to the packet forwarding means (41) in response to the switching of the gateway (3) to which the received packet is forwarded, by translating the destination address of the received packet to the common address, and
wherein the packet forwarding means (41) is configured to forward the received packet based on the instruction.

7. A system comprising the communication apparatus (4) according to any one of claims 1 to 6, and a control apparatus (5) adapted to control the communication apparatus (4) by notifying the communication apparatus (4) of an instruction for forwarding the received packet to the first gateway (3).

8. A communication method for performing communication over a communication path configured in a network between mobile terminals (1) and gateways (3) on the network, the method comprising:
managing, by a routing information database (42), associations between the gateways (3) and communication paths, wherein each of the gateways (3) has a function of terminating a communication path;
identifying, by a path identifying means (40), a first communication path to which a received packet belongs based on path identification information of the packet;
referring, by a packet forwarding means (41), to the routing information database (42) and, in case of uplink communication, forwarding the received packet to a first gateway (3) associated with the first communication path, and in case of downlink communication, forward the received packet to a mobile terminal (1) corresponding to the first communication path;
**characterized in that** the method comprises:
managing, by the routing information database (42), said associations such that respective gateways (3) terminating the first communication path and a second communication path are assigned a common address; and
i) in case of uplink communication from a mobile terminal (1) using the first communication path, switching, by the packet forwarding means (41), a gateway (3) to which the received packet is forwarded by switching the first communication path to the second communication path, and forwarding the received packet to one of the at least two first gateways (3) using the second communication path to conceal the switching of the gateway (3) from the mobile terminal (1); and
ii) in case of downlink communication using the second communication path, forwarding the received packet to the mobile terminal (1) using the common address.

## Patentansprüche

1. Kommunikationsvorrichtung (4), die eine Kommunikation über einen in einem Netzwerk konfigurierten Kommunikationspfad ausführt, wobei die Kommunikationsvorrichtung (4) aufweist:
eine Kommunikationseinrichtung zum Kommunizieren mit mobilen Endgeräten (1) und Gateways (3) im Netzwerk;
eine Routing-Informationsdatenbank (42) zum Managen von Zuordnungen zwischen den Gateways (3) und Kommunikationspfaden, wobei jedes der Gateways (3) eine Funktion zum Beenden eines Kommunikationspfades aufweist;
eine Pfadidentifizierungseinrichtung (40), die dafür konfiguriert ist, einen ersten Kommunikationspfad, dem ein empfangenes Paket zugehörig ist, basierend auf Pfadidentifizierungsinformation des Pakets zu identifizieren; und
eine Paketweiterleitungseinrichtung (41), die dafür konfiguriert ist:
auf die Routing-Informationsdatenbank (42) Bezug zu nehmen und im Fall einer Uplink-Kommunikation das empfangene Paket an ein erstes Gateway (3) weiterzuleiten, das dem ersten Kommunikationspfad zugeordnet ist, und im Fall einer Downlink-Kommunikation das empfangene Paket an ein mobiles Endgerät (1) weiterzuleiten, das dem ersten Kommunikationspfad zugeordnet ist,
**dadurch gekennzeichnet, dass**
die Routing-Informationsdatenbank (42) dafür konfiguriert ist, die Zuordnungen derart zu managen, dass jeweiligen Gateways (3), die den ersten Kommunikationspfad und einen zweiten Kommunikationspfad beenden, eine gemeinsame Adresse zugewiesen wird, und
die Paketweiterleitungseinrichtung (41) dafür konfiguriert ist: i) im Falle einer Uplink-Kommunikation von einem mobilen Endgerät (1) unter Verwendung des ersten Kommunikationspfades ein Gateway (3), an das das empfangene Paket weitergeleitet wird, durch Umschalten des ersten Kommunikationspfades auf den zweiten Kommunikationspfad umzuschalten und das empfangene Paket an eines der mindestens zwei ersten Gateways (3) unter Verwendung des zweiten Kommunikationspfades weiterzuleiten, um das Umschalten des Gateways (3) vor dem mobilen Endgerät (1) zu verbergen, und ii) im Falle einer Downlink-Kommunikation unter Verwendung des zweiten Kommunikationspfades, das empfangene Paket an das mobile Endgerät (1) unter Verwendung der gemeinsamen Adresse weiterzuleiten.

2. Kommunikationsvorrichtung (4) nach Anspruch 1, **dadurch gekennzeichnet, dass** die Gateways (3) unter Verwendung von Software auf einem Prozessor konfiguriert sind.

3. Kommunikationsvorrichtung (4) nach Anspruch 1 oder 2, **dadurch gekennzeichnet, dass** sie ferner aufweist:
einen Steuerabschnitt, der dafür konfiguriert ist, das Gateway (3) zu aktivieren, das unter Verwendung von Software auf der Kommunikationsvorrichtung (4) konfiguriert ist,
wobei die Paketweiterleitungseinrichtung (41) dafür konfiguriert ist, das empfangene Paket an eines der mindestens zwei ersten Gateways (3) weiterzuleiten.

4. Kommunikationsvorrichtung (4) nach einem der Ansprüche 1 bis 3, **dadurch gekennzeichnet, dass** die Paketweiterleitungseinrichtung (41) dafür konfiguriert ist, das empfangene Paket basierend auf einer Anweisung weiterzuleiten, die von einer Steuereinrichtung übermittelt wird, die Zuordnungen zwischen den Kommunikationspfaden und den Gateways (3) managt.

5. Kommunikationsvorrichtung (4) nach einem der Ansprüche 1 bis 3, **dadurch gekennzeichnet, dass** sie ferner aufweist:
einen Steuerabschnitt, der dafür konfiguriert ist, einen Controller zum Managen von Zuordnungen zwischen den Kommunikationspfaden und den Gateways (3) in der Kommunikationsvorrichtung (4) zu aktivieren,
wobei die Paketweiterleitungseinrichtung (41) dafür konfiguriert ist, das empfangene Paket basierend auf einer vom Controller übermittelten Anweisung weiterzuleiten.

6. Kommunikationsvorrichtung (4) nach einem der Ansprüche 1 bis 3, **dadurch gekennzeichnet, dass** sie ferner aufweist:
einen Steuerabschnitt, der dafür konfiguriert ist, einen Controller in der Kommunikationsvorrichtung (4) zu aktivieren, wobei der Controller dafür konfiguriert ist, eine Anweisung zum Umschalten einer Route des empfangenen Pakets an die Paketweiterleitungseinrichtung (41) in Antwort auf das Umschalten des Gateways (3), an das das empfangene Paket weitergeleitet wird, durch Übersetzen der Zieladresse des empfangenen Pakets in die gemeinsame Adresse, zu übermitteln, und
wobei die Paketweiterleitungseinrichtung (41) dafür konfiguriert ist, dass empfangene Paket basierend auf der Anweisung weiterzuleiten.

7. System, das die Kommunikationsvorrichtung (4) nach einem der Ansprüche 1 bis 6 und eine Steuereinrichtung (5) aufweist, die dazu geeignet ist, die Kommunikationsvorrichtung (4) zu steuern durch Benachrichtigen der Kommunikationsvorrichtung (4) über eine Anweisung zum Weiterleiten des empfangenen Pakets an das erste Gateway (3).

8. Kommunikationsverfahren zum Ausführen einer Kommunikation über einen Kommunikationspfad, der in einem Netzwerk zwischen mobilen Endgeräten (1) und Gateways (3) im Netzwerk konfiguriert ist, wobei das Verfahren die Schritte aufweist:
Managen von Zuordnungen zwischen den Gateways (3) und Kommunikationspfaden durch eine Routing-Informationsdatenbank (42), wobei jedes der Gateways (3) eine Funktion zum Beenden eines Kommunikationspfades aufweist;
Identifizieren eines ersten Kommunikationspfades, dem ein empfangenes Paket zugehörig ist, durch eine Pfadidentifizierungseinrichtung (40) basierend auf Pfadidentifizierungsinformation des Pakets;
Bezugnehmen auf die Routing-Informationsdatenbank (42) durch eine Paketweiterleitungseinrichtung (41) und Weiterleiten des empfangenen Pakets an ein erstes Gateway (3), das dem ersten Kommunikationspfad zugeordnet ist, im Falle einer Uplink-Kommunikation, und Weiterleiten des empfangenen Pakets an ein mobiles Endgerät (1), das dem ersten Kommunikationspfad zugeordnet ist, im Falle einer Downlink-Kommunikation;
**dadurch gekennzeichnet, dass** das Verfahren die Schritte aufweist:
Managen der Zuordnungen durch die Routing-Informationsdatenbank (42) derart, dass jeweiligen Gateways (3), die den ersten Kommunikationspfad und einen zweiten Kommunikationspfad beenden, eine gemeinsame Adresse zugewiesen wird, und
i) im Fall einer Uplink-Kommunikation von einem mobilen Endgerät (1) unter Verwendung des ersten Kommunikationspfades, Umschalten eines Gateways (3), an das das empfangene Paket weitergeleitet wird, durch Schalten des ersten Kommunikationspfades auf den zweiten Kommunikationspfad durch die Paketweiterleitungseinrichtung (41), und Weiterleiten des empfangenen Pakets an eines der mindestens zwei ersten Gateways (3) unter Verwendung des zweiten Kommunikationspfades zum Verbergen des Schaltens des Gateways (3) vor dem mobilen Endgerät (1); und
ii) im Falle einer Downlink-Kommunikation unter Verwendung des zweiten Kommunikationspfades, Weiterleiten des empfangenen Pakets an das mobile Endgerät (1) unter Verwendung der gemeinsamen Adresse.

## Revendications

1. Appareil de communication (4) qui réalise une communication sur une voie de communication configurée dans un réseau, l'appareil de communication (4) comprenant :
un moyen de communication pour communiquer avec des terminaux mobiles (1) et des passerelles (3) sur le réseau ;
une base de données d'informations de routage (42) pour gérer des associations entre les passerelles (3) et des voies de communication, dans lequel chacune des passerelles (3) a une fonction de terminaison d'une voie de communication ;
un moyen d'identification de voie (40) qui est configuré pour identifier une première voie de communication à laquelle un paquet reçu appartient sur la base d'informations d'identification de voie du paquet ; et
un moyen d'acheminement de paquet (41) qui est configuré pour :
faire référence à la base de données d'informations de routage (42) et, en cas de communication de liaison montante, acheminer le paquet reçu jusqu'à une première passerelle (3) associée à la première voie de communication, et, en cas de communication de liaison descendante, acheminer le paquet reçu jusqu'à un terminal mobile (1) correspondant à la première voie de communication ;
**caractérisé en ce que**
la base de données d'informations de routage (42) est configurée pour gérer lesdites associations de sorte qu'une adresse commune soit attribuée à des passerelles (3) respectives terminant la première voie de communication et une deuxième voie de communication ; et
le moyen d'acheminement de paquet (41) est configuré pour : i) en cas de communication de liaison montante depuis un terminal mobile (1) en utilisant la première voie de communication, commuter une passerelle (3) jusqu'à laquelle le paquet reçu est acheminé par la commutation de la première voie de communication à la deuxième voie de communication, et acheminer le paquet reçu jusqu'à l'une parmi les au moins deux premières passerelles (3) en utilisant la deuxième voie de communication pour dissimuler la commutation de la passerelle (3) au terminal mobile (1) ; et ii) en cas de communication de liaison descendante en utilisant la deuxième voie de communication, acheminer le paquet reçu jusqu'au terminal mobile (1) en utilisant l'adresse commune.

2. Appareil de communication (4) selon la revendication 1, **caractérisé en ce que** les passerelles (3) sont configurées en utilisant un logiciel sur un processeur.

3. Appareil de communication (4) selon la revendication 1 ou 2, **caractérisé en ce qu'**il comprend en outre :
une section de commande qui est configurée pour activer la passerelle (3) configurée en utilisant un logiciel sur l'appareil de communication (4),
dans lequel le moyen d'acheminement de paquet (41) est configuré pour acheminer le paquet reçu jusqu'à l'une parmi les au moins deux premières passerelles (3).

4. Appareil de communication (4) selon l'une quelconque des revendications 1 à 3, **caractérisé en ce que** le moyen d'acheminement de paquet (41) est configuré pour acheminer le paquet reçu sur la base d'une instruction notifiée depuis un appareil de commande qui gère des associations entre les voies de communication et les passerelles (3).

5. Appareil de communication (4) selon l'une quelconque des revendications 1 à 3, **caractérisé en ce qu'**il comprend en outre :
une section de commande qui est configurée pour activer un dispositif de commande pour gérer des associations entre les voies de communication et les passerelles (3) sur l'appareil de communication (4),
dans lequel le moyen d'acheminement de paquet (41) est configuré pour acheminer le paquet reçu sur la base d'une instruction notifiée depuis le dispositif de commande.

6. Appareil de communication (4) selon l'une quelconque des revendications 1 à 3, **caractérisé en ce qu'**il comprend en outre :
une section de commande qui est configurée pour activer un dispositif de commande sur l'appareil de communication (4), dans lequel le dispositif de commande est configuré pour notifier une instruction de commutation d'un itinéraire du paquet reçu au moyen d'acheminement de paquet (41) en réponse à la commutation de la passerelle (3) jusqu'à laquelle le paquet reçu est acheminé, par la traduction de l'adresse de destination du paquet reçu en l'adresse commune, et
dans lequel le moyen d'acheminement de paquet (41) est configuré pour acheminer le paquet reçu sur la base de l'instruction.

7. Système comprenant l'appareil de communication (4) selon l'une quelconque des revendications 1 et 6, et un appareil de commande (5) apte à commander l'appareil de communication (4) par la notification à l'appareil de communication (4) d'une instruction d'acheminement du paquet reçu jusqu'à la première passerelle (3).

8. Procédé de communication pour réaliser une communication sur une voie de communication configurée dans un réseau entre des terminaux mobiles (1) et des passerelles (3) sur le réseau, le procédé comprenant :
la gestion, par une base de données d'informations de routage (42), d'associations entre les passerelles (3) et des voies de communication, dans lequel chacune des passerelles (3) a une fonction de terminaison d'une voie de communication ;
l'identification, par un moyen d'identification de voie (40), d'une première voie de communication à laquelle un paquet reçu appartient sur la base d'informations d'identification de voie du paquet ;
la référence, par un moyen d'acheminement de paquet (41), à la base de données d'informations de routage (42) et, en cas de communication de liaison montante, l'acheminement du paquet reçu jusqu'à une première passerelle (3) associée à la première voie de communication, et, en cas de communication de liaison descendante, l'acheminement du paquet reçu jusqu'à un terminal mobile (1) correspondant à la première voie de communication ;
**caractérisé en ce que** le procédé comprend :
la gestion, par la base de données d'informations de routage (42), desdites associations de sorte qu'une adresse commune soit attribuée à des passerelles (3) respectives terminant la première voie de communication et une deuxième voie de communication ; et
i) en cas de communication de liaison montante depuis un terminal mobile (1) en utilisant la première voie de communication, la commutation, par le moyen d'acheminement de paquet (41), d'une passerelle (3) jusqu'à laquelle le paquet reçu est acheminé par la commutation de la première voie de communication à la deuxième voie de communication, et l'acheminement du paquet reçu jusqu'à l'une parmi les au moins deux premières passerelles (3) en utilisant la deuxième voie de communication pour dissimuler la commutation de la passerelle (3) au terminal mobile (1) ; et
ii) en cas de communication de liaison descendante en utilisant la deuxième voie de communication, l'acheminement du paquet reçu jusqu'au terminal mobile (1) en utilisant l'adresse commune.
